# EUROPEAN PATENT APPLICATION

(11) **EP 4 667 137 A1**
(43) Date of publication of application: **24.12.2025**
(21) Application number: 24747316.8
(22) Date of filing: 23.01.2024
(51) Int. Cl.: B22F 9/00, B22F 1/00, B22F 1/102, B22F 1/0545, C09D 11/52

(54) **METALLIC INK, METHOD FOR PRODUCING METALLIC INK, METHOD FOR PRODUCING SINTERED OBJECT, SINTERED OBJECT, AND LIQUID DETERGENT**

(30) Priority: 23.01.2023 JP 2023008196; 31.07.2023 JP 2023124812
(71) Applicant: Mitsubishi Materials Corporation, Tokyo 100-8117 (JP)
(72) Inventor: UESUGI, Ryuji, Naka-shi, Ibaraki 311-0102 (JP)
(74) Representative: Gille Hrabal Partnerschaftsgesellschaft mbB Patentanwälte
(86) International application number: PCT/JP2024/001922
(87) International publication number: WO 2024/157989

(57) **Abstract**

When used as a metal ink, it is possible to improve sinterability while suppressing aggregation of metal particles and to obtain a sintered body that appropriately transmits visible light, and when used as a cleaning liquid, it suppresses or eliminates clogging by improved cleanability. A metal ink (10) includes metal particles (12), a solvent (16), a polyhydric alcohol (14) containing two or more OH groups and being soluble in water and a lower alcohol, and an additive (17) containing a phosphate compound soluble in water.

## Description

### Field

The present invention relates to a metal ink, a method for producing a metal ink, a method for producing a metal layer, and a metal layer.

### Background

As an example of forming a metal layer on a member, Patent Literature 1 describes forming a solder layer on a member. For example, Patent Literature 2 describes forming a metal layer using silver paste. Silver paste can be sintered under relatively low temperature conditions, and the melting point of a bonding layer formed after sintering is equivalent to that of silver. The metal layer formed of the sintered silver paste therefore has excellent heat resistance and can be used stably even in high-temperature environments and large-current applications. On the other hand, copper paste is sometimes used from the viewpoint of material cost, for example, as disclosed in Patent Literature 3.

In forming a metal layer in this way, a metal ink in which metal particles are dispersed in a liquid may be used instead of a metal paste such as copper paste. The metal ink may be advantageous from a manufacturing standpoint because the metal ink can be ejected, for example, from nozzles.

Furthermore, in an inkjet device or the like used when forming a metal layer, defects such as drying, sedimentation, aggregation, and solidification of ink in a pipe, a flow path, a discharge port, and the like inside the device occur by being left for a long period of time or being exposed to a high-temperature and low-humidity environment. On the other hand, for example, a cleaning method using a cleaning liquid containing an organic solvent, a surfactant, and the like as shown in Patent Literature 4, a cleaning method using a cleaning liquid of a highly alkaline solution or a surfactant solution as shown in Patent Literature 5, and the like have been proposed.

### Citation List

### Patent Literature

Patent Literature 1: Japanese Patent Application Laid-open No. 2004-172378
Patent Literature 2: Japanese Patent No. 6531547
Patent Literature 3: Japanese Patent Application Laid-open No. 2019-67515
Patent Literature 4: Japanese Patent Application Laid-open No. H4-115954
Patent Literature 5: Japanese Patent Application Laid-open No. H6-8471

### Summary

### Technical Problem

Such a metal ink may cause deterioration in characteristics of the product, such as reduction in denseness of a sintered body, due to aggregation of metal particles. Also, when a high-viscosity material is contained in a cleaning liquid as in the cleaning liquid and the cleaning method described above, there is a problem that a residue after cleaning is agglomerated and has a high viscosity, and thus defects are likely to occur. In addition, when the cleaning liquid is a highly alkaline solution, there is a problem that the alkali corrodes a device member.

Therefore, the metal ink is required to suppress aggregation of metal particles. Further, it is also required to improve sinterability of the metal ink. It is also required that the obtained sintered body appropriately transmits visible light. Furthermore, a cleaning liquid capable of suppressing or eliminating clogging by improved cleanability is also required.

The present invention has been made in view of the above, and an object of the present invention is, when used as a metal ink, to improve sinterability while suppressing aggregation of metal particles and to obtain a sintered body that appropriately transmits visible light, and when used as a cleaning liquid, to suppress or eliminate clogging by improved cleanability. Solution to Problem

The metal ink of the present disclosure comprises: metal particles; a solvent; a polyhydric alcohol containing two or more OH groups and being soluble in water and a lower alcohol; and an additive containing a phosphate compound soluble in water.

It is preferable that the metal ink of the present disclosure further comprises an organic solvent having a boiling point at atmospheric pressure of 150°C or higher and being miscible with water.

It is preferable that the additive is contained in a mass ratio of 0.01% or more and 10% or less with respect to a total amount of the metal ink.

It is preferable that a molecular weight of the phosphate compound is 90 or more and 200 or less.

It is preferable that the additive includes at least one of phosphoric acid, monosodium phosphate, disodium phosphate, trisodium phosphate, monopotassium phosphate, dipotassium phosphate, trimethyl phosphate, triethyl phosphate, diisopropyl phosphate, monoisopropyl phosphate, 2-aminoethyl dihydrogen phosphate, diisopropyl phosphite, and dimethyl phosphite.

It is preferable that the polyhydric alcohol is contained in a mass ratio of 0.01% or more and 20% or less with respect to a total amount of the metal ink.

It is preferable that the polyhydric alcohol has a melting point of 30°C or higher.

It is preferable that the organic solvent is contained in a mass ratio of 0.01% or more and 30% or less with respect to a total amount of the metal ink.

It is preferable that the organic solvent includes at least one of glycol ethers and aprotic polar solvents.

It is preferable that the metal particles are contained in a mass ratio of 1% or more and 50% or less with respect to a total amount of the metal ink.

It is preferable that the metal particles are copper.

It is preferable that the solvent contains water.

It is preferable that the metal ink further comprises, as a dispersant, a phosphate ester compound having a higher molecular weight than the phosphate compound contained in the additive.

It is preferable that the solvent contains a lower alcohol.

It is preferable that the solvent contains a high boiling point solvent containing one or more OH groups and having a boiling point of 150°C or higher, which is a liquid hardly soluble or insoluble in water.

It is preferable that the metal particles are copper, the solvent contains water, the polyhydric alcohol contains at least one of polyhydric alcohols containing two or more OH groups and being soluble in water and a lower alcohol, and having a melting point of 30°C or higher, and the additive has a phosphate compound having a molecular weight of 90 or more and 200 or less.

A method for producing a metal ink of the presetn disclosure comprises: mixing metal particles, a solvent, a polyhydric alcohol containing two or more OH groups and being soluble in water and a lower alcohol, and an additive containing a phosphate compound soluble in water to produce a metal ink containing the metal particles, the solvent, the polyhydric alcohol, and the additive.

It is preferable that the method for producing a metal ink comprises mixing the metal particles, water as the solvent, the polyhydric alcohol, and the additive to produce a first metal ink that is a metal ink containing the metal particles, water, the polyhydric alcohol, and the additive.

It is preferable that the method for producing a metal ink comprises also mixing an organic solvent having a boiling point at atmospheric pressure of 150°C or higher and being miscible with water to produce the first metal ink also containing the organic solvent.

It is preferable that the method for producing a metal ink comprises mixing the first metal ink and a lower alcohol as the solvent to produce a second metal ink that is a metal ink containing the metal particles, water, the lower alcohol, the polyhydric alcohol, and the additive.

It is preferable that the method for producing a metal ink comprises mixing the second metal ink with a high boiling point solvent as the solvent, containing one or more OH groups and having a boiling point of 150°C or higher, which is a liquid hardly soluble or insoluble in water, to produce a third metal ink that is a metal ink containing the metal particles, water, the lower alcohol, the high boiling point solvent, the polyhydric alcohol, and the additive.

A method for producing a sintered body of the present disclosure comprises heating the metal inkto form a sintered body.

A sintered body of the present disclosure is prepared using the metal ink.

A cleaning liquid of the present disclosure comprises: metal particles; a solvent; a polyhydric alcohol containing two or more OH groups and being soluble in water and a lower alcohol; and an additive containing a phosphate compound soluble in water.

### Advantageous Effects of Invention

According to the present invention, when used as a metal ink, it is possible to improve sinterability while suppressing aggregation of metal particles and to obtain a sintered body that appropriately transmits visible light, and when used as a cleaning liquid, it is possible to suppress or eliminate clogging by improved cleanability.

### Brief Description of Drawings

FIG. 1 is a schematic diagram of a metal ink according to the embodiment.
FIG. 2 is a flowchart for outlining a method for producing a metal ink according to the embodiment. Description of Embodiments

The present invention will be described in detail below with reference to the drawings. It should be noted that the present invention is not limited by the following modes for carrying out the invention (hereinafter referred to as "embodiments"). In addition, the components in the following embodiments include those that can be readily conceived by those skilled in the art, those that are substantially identical, and those that come within the range of equivalence. Furthermore, the components disclosed in the following embodiments can be combined as appropriate. Numerical values include the rounding range.

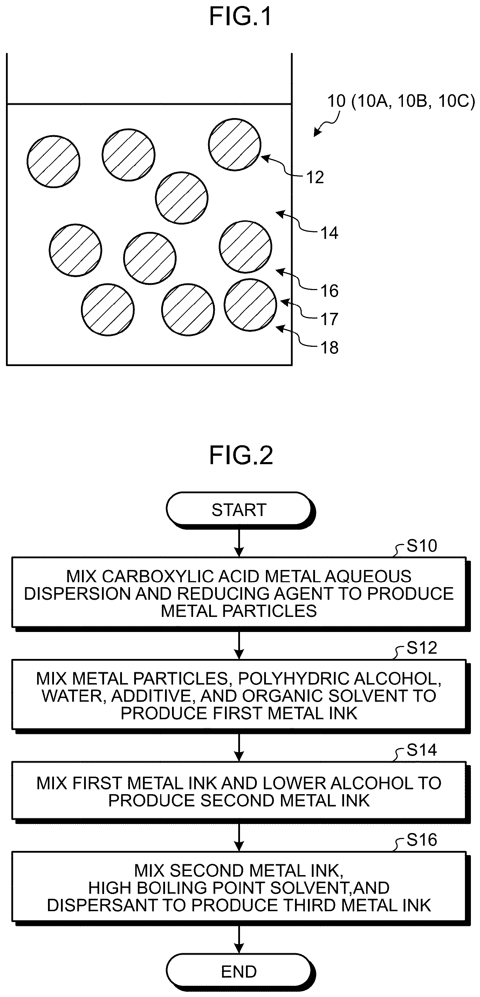

FIG. 1 is a schematic diagram of a metal ink according to the present embodiment. As illustrated in FIG. 1, a metal ink 10 contains metal particles 12, a polyhydric alcohol 14, a solvent 16, an additive 17, and an organic solvent 18. The metal ink 10 refers to an ink-like substance in which the metal particles 12 are not dissolved in the solvent 16, which is a liquid, but the metal particles 12 are present in the solid form in the solvent 16. In the metal ink 10, the metal particles 12 may settle in the solvent 16, or the metal particles 12 may be dispersed. The metal ink 10 may not contain the organic solvent 18.

The metal ink 10 is used for forming a sintered body (metal layer) (for example, forming wiring). For example, the metal ink 10 is jetted and dried from a nozzle to a base material (a film of a resin, a metal, or the like, a resin, a metal, a ceramic, or the like, or a substrate obtained by combining these), and then heated under an inert gas atmosphere or a reducing gas atmosphere to remove other components while sintering or melting the metal particles 12, and then cooled, whereby a sintered body (metal layer) formed of a metal component of the metal particles 12 is formed on the base material. Also, the metal ink 10 is jetted and dried from the nozzle to the base material (a film of a resin, a metal, or the like, a resin, a metal, a ceramic, or the like, or a substrate obtained by combining these), and then further heated under an oxidizing gas atmosphere to remove other components while oxidizing and sintering the metal particles 12, and then cooled, whereby a sintered body (metal oxide layer) formed of a metal oxide component in which the metal particles 12 are oxidized is formed on the base material. Application of the sintered body formed of the metal ink 10 may be arbitrary, and examples thereof include wiring formed of the metal component of the metal particles 12 and a layer formed of the metal oxide component of the metal particles 12, such as cuprous oxide. However, application of the metal ink 10 is not limited thereto, and may be arbitrary.

### (Metal particles)

The metal particles 12 are particles of metal. In the present embodiment, it can be said that the metal particles 12 are preferably copper particles. According to the present embodiment, a sintered body of copper can be appropriately produced.

The metal particle 12 preferably has a particle diameter (peak value of particle size distribution (number)) of 10 nm or more and 1000 nm or less. The particle diameter of the metal particle 12 in the metal ink 10 can be determined as a peak value of a particle size distribution (number) of the metal particles 12 by setting physical property values such as a refractive index of the metal particles 12 and a refractive index and a viscosity value of a solvent in the ink using a particle diameter measuring device (Zetasizer Nano Series ZSP manufactured by Malvern Panalytical Ltd.), performing measurement at 20°C or 25°C in accordance with a temperature condition of the physical property values. In the measurement of the particle size distribution, when sufficient measurement quality cannot be obtained due to the high concentration of the metal particles 12 in the metal ink 10, the measurement may be performed after the particles are diluted and dispersed about 10 to 1000 times with a main solvent (water, lower alcohol, or high boiling point solvent) in the metal ink 10.

If the particle size is 10 nm or less, the specific surface area increases in inverse proportion to the particle size. As a result, the effect of surface oxidation may increase, and the sinterability of a coating film obtained using the metal particles 12 may deteriorate. On the other hand, if the particle size of the metal particles 12 is 1000 nm or more, the particle size becomes too large. As a result, the metal particles 12 may easily settle and separate in the ink when dispersed in the solvent. The particle size of the metal particles 12 is preferably in the range of 30 nm to 500 nm, and particularly preferably in the range of 30 nm to 300 nm.

The BET specific surface area of the metal particles 12 can be determined by measuring the amount of nitrogen gas adsorbed by the metal particles 12 using nitrogen or krypton gas as the measurement gas with a specific surface area measuring device (QUANTACHROME AUTOSORB-iQ2 available from Quantachrome Instruments). The BET specific surface area of the metal particles 12 is preferably in the range of 2.0 m²/g to 8.0 m²/g, more preferably in the range of 3.5 m²/g to 8.0 m²/g, and particularly preferably in the range of 4.0 m²/g to 8.0 m²/g. The shape of the metal particles 12 is not limited to a spherical shape and may be a needle-like or flat plate-like shape.

It is preferable that the surface of the metal particles 12 is partially or entirely coated with an organic substance. The coating of an organic substance suppresses oxidation of the metal particles 12 and further reduces the possibility of deterioration of sinterability due to oxidation of the metal particles 12. It can be said that the organic substance coating the metal particles 12 is not formed by the polyhydric alcohol 14 or the solvent 16 and is not derived from the polyhydric alcohol 14 or the solvent 16. It can also be said that the organic substance coating the metal particles 12 is not a metal oxide (copper oxide) formed by oxidation of the metal.

The coating of the metal particles 12 with an organic substance can be observed by analyzing the surface of the metal particles 12 using time-of-flight secondary ion mass spectrometry (TOF-SIMS). For example, when the metal particles 12 are copper, the ratio of the detected amount of C₃H₃O₃⁻ ions to the detected amount of Cu⁺ ions detected by analyzing the surface of the metal particles 12 using time-of-flight secondary ion mass spectrometry (C₃H₃O₃⁻/Cu⁺ ratio) is preferably 0.001 or more. The C₃H₃O₃⁻ /Cu⁺ ratio is even more preferably in the range of 0.05 to 0.2. The surface of the metal particles 12 in this analysis refers to the surface of the metal particles 12 including the coating of the organic substance (that is, the surface of the organic substance), rather than the surface of the metal particles 12 when the organic substance is removed from the metal particles 12.

When the metal particles 12 are copper, C₃H₄O₂⁻ ions or ions of C₅ or more may be detected by analyzing the surface using time-of-flight secondary ion mass spectrometry. The ratio of the detected amount of C₃H₄O₂⁻ ions to the detected amount of Cu⁺ ions (C₃H₄O₂⁻/Cu⁺ ratio) is preferably 0.001 or more. The ratio of the detected amount of ions of C₅ or more to the detected amount of Cu⁺ ions (ions of C₅ or more/Cu ratio) is preferably less than 0.005.

The C₃H₃O₃⁻ ions, C₃H₄O₂⁻ ions, and ions of C₅ or more detected in time-of-flight secondary ion mass spectrometry originate from the organic substance coating the surface of the metal particles 12. Therefore, when the C₃H₃O₃⁻/Cu⁺ ratio and the C₃H₄O₂⁻/Cu⁺ ratio are each 0.001 or more, the surface of the metal particles 12 is less likely to oxidize and the metal particles 12 are less likely to agglomerate. Furthermore, when the C₃H₃O₃⁻/Cu⁺ ratio and the C₃H₄O₂⁻/Cu⁺ ratio are 0.2 or less, oxidation and agglomeration of the metal particles 12 can be suppressed without excessively reducing the sinterability of the metal particles 12, and the generation of decomposition gas of the organic substance during heating can also be suppressed. As a result, a bonding layer with fewer voids can be formed. In order to further improve the oxidation resistance of the metal particles 12 during storage and to further improve the sinterability at low temperatures, the C₃H₃O₃⁻/Cu⁺ ratio and the C₃H₄O₂⁻/Cu⁺ ratio are preferably in the range of 0.08 to 0.16. Furthermore, when the ions of C₅ or more/Cu⁺ ratio is 0.005 or more, a large amount of organic substance with a relatively high desorption temperature is present on the particle surface, and as a result, sinterability is not sufficiently developed and a strong bonding layer is less likely to be produced. The ions of C₅ or more/Cu⁺ ratio is preferably less than 0.003.

The organic substance coating the metal particles 12 is preferably a carboxylic acid derived from a carboxylic acid metal used in the production of the metal particles 12. The method for producing the metal particles 12 coated with a carboxylic acid-derived organic substance will be described later. The amount of coating of the organic substance on the metal particles 12 is preferably in the range of 0.5% by mass to 2.0% by mass with respect to 100% by mass of the metal particles, more preferably in the range of 0.8% by mass to 1.8% by mass, and even more preferably in the range of 0.8% by mass to 1.5% by mass. With the amount of coating of the organic substance of 0.5% by mass or more, the metal particles 12 can be uniformly coated with the organic substance, and oxidation of the metal particles 12 can be suppressed more reliably. On the other hand, with the amount of coating of the organic substance of 2.0% by mass or less, it is possible to suppress the formation of voids in the sintered metal particles (bonding layer) due to gases generated by the decomposition of the organic substance by heating. The amount of coating of the organic substance can be measured using commercially available equipment. For example, the amount of coating can be measured using a thermogravimetry differential thermal analyzer TG8120-SL (Rigaku Corporation). In this case, for example, metal particles from which water has been removed by freeze-drying are used as a sample. Measurement is performed in nitrogen (Grade 2) gas to suppress oxidation of the metal particles, and the ratio of weight reduction by heating from 250°C to 300°C at a temperature increase rate of 10°C/min can be defined as the amount of coating of the organic substance. That is, the amount of coating = (sample weight after measurement)/(sample weight before measurement) × 100 (wt%). The measurement may be performed three times each with metal particles in the same lot, and the arithmetic mean may be considered as the amount of coating.

When the metal particles 12 are heated for 30 minutes at a temperature of 300°C in an inert gas atmosphere such as argon gas, it is preferable that 50% by mass or more of the organic substance is decomposed. The carboxylic acid-derived organic substance generates carbon dioxide gas, nitrogen gas, acetone evaporation gas, and water vapor during decomposition.

### (Polyhydric alcohol)

The polyhydric alcohol 14 is an alcohol containing two or more OH groups and being soluble in water and a lower alcohol. Also, the polyhydric alcohol 14 preferably has a melting point of 30°C or higher. This makes it possible to suppress the concentration of the metal particles 12 from being too low while appropriately dispersing the metal particles 12. The lower alcohol refers to an alcohol having five or less carbon atoms (C).

The polyhydric alcohol 14 may be, for example, at least one of 2,2-dimethyl-1,3-propanediol, 2,5-dimethyl-2,5-hexanediol, 2-hydroxymethyl-2-methyl-1,3-propanediol, 1-phenyl-1,2-ethanediol, 1,1,1-tris(hydroxymethyl)propane, erythritol, pentaerythritol, ribitol, resorcinol, (pyro)catechol, 5-methylresorcinol, pyrogallol, 1,2,3-cyclohexanetriol, and 1,3,5-cyclohexanetriol.

The polyhydric alcohol 14 is a non-electrolyte and is present in the metal ink 10 in a state of being dissolved in the solvent 16 (in a state in which molecules of the polyhydric alcohol 14 are dispersed in the solvent 16). However, the polyhydric alcohol 14 may be present in any form in the metal ink 10 and may be present in a state of not being dissolved in the solvent 16.

Since the polyhydric alcohol 14 is included in the metal ink 10, the polyhydric alcohol 14 coordinates around the metal particles 12 to properly suppress agglomeration of the metal particles 12. In other words, in the present embodiment, it can be said that it is preferable that the polyhydric alcohol 14 coordinates around the metal particles 12.

### Solvent

The solvent 16 is a liquid (medium) for dispersing the metal particles 12. The details of the solvent 16 will be described later.

### (Additive)

The additive 17 contains a phosphate compound. The phosphate compound used as the additive 17 is water-soluble and is present in the metal ink 10 in a state of being dissolved in the solvent 16 (in a state where molecules of the phosphate compound are dispersed in the solvent 16). By including the additive 17 containing a phosphate compound in the metal ink 10, it is possible to obtain a sintered body having appropriate transmittance of visible light while appropriately sintering the metal particles 12.

The phosphate compound used as the additive 17 has a molecular weight of preferably 90 or more and 200 or less, more preferably 100 or more and 200 or less, and still more preferably 140 or more and 190 or less. When the molecular weight of the phosphate compound falls within this range, the phosphate compound is appropriately dissolved in the solvent 16, the metal particles 12 are not aggregated, and the remaining of an organic component in firing can be reduced or eliminated, so that sinterability between the metal particles is not inhibited and can be more suitably improved. Here, the molecular weight can be measured by, for example, a vapor pressure depression method, a boiling point elevation method, a freezing point (melting point) depression method (last method), an isothermal distillation method (Barger method), a mass spectrometry method, or the like. In addition, the molecular weight here refers to a value of the molecular weight excluding the molecular weight of water even in the case of a hydrate, and the same applies to the following.

The solubility of the phosphate compound used as the additive 17 in water at 1 atm and 20°C is preferably 10 g or more, more preferably 20 g or more, and still more preferably 50 g or more per 100 g of water. When the solubility falls within this range, the phosphate compound can be appropriately dissolved in the case of using water as the solvent 16, and sinterability can be more suitably improved.

The phosphate compound used for the additive 17 may be any phosphate compound, and examples of the phosphate compound used for the additive 17 include phosphoric acid, monosodium phosphate (sodium dihydrogen phosphate), disodium phosphate (disodium hydrogen phosphate), trisodium phosphate, monopotassium phosphate (potassium dihydrogen phosphate), dipotassium phosphate (dipotassium hydrogen phosphate), trimethyl phosphate, triethyl phosphate, diisopropyl phosphate, monoisopropyl phosphate, 2-aminoethyl dihydrogen phosphate (O-phosphorylethanolamine), diisopropyl phosphite, and dimethyl phosphite. As the additive 17, one of them may be used, or two or more thereof may be used. By using such an additive 17, sinterability can be more suitably improved, and a sintered body that appropriately transmits visible light can be obtained.

### (Organic solvent)

The organic solvent 18 is an organic solvent that is a component different from the polyhydric alcohol 14 and the solvent 16. The organic solvent 18 is an organic solvent having a boiling point of 150°C or higher at atmospheric pressure and being miscible with water. The organic solvent 18 more preferably has a boiling point of 200°C or higher. The term "miscible" means that the organic solvent 18 can be mixed with water in any ratio (That is, they can be completely dissolved with each other at any concentration.). In the embodiment, the organic solvent 18 is preferably miscible with the solvent 16. By including the organic solvent 18, the metal ink 10 has sufficient antifungal property even when left for a long period of time, achieving appropriate storage for a long period of time.

The organic solvent 18 is preferably a glycol ether or an aprotic polar solvent. The metal ink 10 has sufficient antifungal property even when left for a long period of time, achieving appropriate storage for a long period of time. Furthermore, the organic solvent 18 may include both a glycol ether and an aprotic polar solvent, in other words, preferably contains at least one of a glycol ether and an aprotic polar solvent.

Examples of the glycol ether included in the organic solvent 18 include diethylene glycol monomethyl ether, triethylene glycol monomethyl ether, polyethylene glycol monomethyl ether, diethylene glycol monoisopropyl ether, ethylene glycol monobutyl ether, diethylene glycol monobutyl ether, triethylene glycol monobutyl ether, ethylene glycol isobutyl ether, diethylene glycol monoisobutyl ether, ethylene glycol monoallyl ether, diethylene glycol monobenzyl ether, dipropylene glycol monomethyl ether, tripropylene glycol monomethyl ether, propylene glycol monopropyl ether, diethylene glycol dimethyl ether, triethylene glycol dimethyl ether, diethylene glycol methyl ethyl ether, and diethylene glycol diethyl ether. When the organic solvent 18 includes a glycol ether, at least one selected from the listed glycol ethers may be included.

Examples of the aprotic polar solvent included in the organic solvent 18 include N-methylpyrrolidone, dimethylformamide, 2-pyrrolidone, and propylene carbonate. When the organic solvent 18 includes an aprotic polar solvent, at least one selected from the listed aprotic polar solvents may be included.

### (Impurity)

The metal ink 10 may contain inevitable impurities in addition to the components described above. Examples of the inevitable impurities include a substance produced when the above-described component reacts by itself or with other components or oxygen or the like, by light, heat, or the like, through decomposition, polymerization, addition, oxidation, reduction, or the like.

### Metal Ink

The amount of metal particles 12 in the metal ink 10 is preferably 1% or more and 50% or less, more preferably 5% or more and 50% or less, and even more preferably 5% or more and 30% or less, in mass ratio to the entire metal ink 10. The amount of metal particles 12 in this range is advantageous from a manufacturing standpoint, for example, in that ejectability by nozzles is improved, because reduction in flowability of the metal ink 10 can be suppressed while keeping a sufficient concentration of metal particles 12.

In the metal ink 10, the content of the polyhydric alcohol 14 is preferably 0.01% or more and 20% or less in mass ratio with respect to the entire metal ink 10. When the content of the polyhydric alcohol 14 falls within this range, it is possible to suppress the concentration of the metal particles 12 from being too low while appropriately dispersing the metal particles 12.

The amount of solvent 16 in the metal ink 10 is preferably 50% or more and 99% or less, more preferably 50% or more and 95% or less, and even more preferably 60% or more and 95% or less, in mass ratio to the entire metal ink 10. The amount of solvent 16 in this range is advantageous from a manufacturing standpoint, for example, in that ejectability by nozzles is improved, because reduction in flowability of the metal ink 10 can be suppressed while keeping a sufficient concentration of metal particles 12.

In the metal ink 10, the content of the additive 17 is preferably 0.01% or more and 10% or less, more preferably 0.1% or more and 10% or less, and still more preferably 0.1% or more and 5% or less in mass ratio with respect to the entire metal ink 10. When the content of the additive 17 falls within this range, the metal particles 12 can be more suitably sintered while the concentration of the metal particles 12 is sufficiently maintained. In addition, by setting the content of the additive 17 within this range, sinterability can be improved while suppressing aggregation of the metal particles 12, and a sintered body that appropriately transmits visible light can be obtained.

In the metal ink 10, the content of the organic solvent 18 is preferably 0.01% or more and 30% or less, and more preferably 0.1% or more and 30% or less in mass ratio with respect to the entire metal ink 10. When the content of the organic solvent 18 falls within this range, the metal ink 10 has a sufficient antifungal property even when left for a long period of time, achieving appropriate storage for a long period of time.

The metal ink 10 may contain an ionized metal particle 12 (metal ions constituting the metal particle 12). That is, the ionized metal particle 12 may be contained in the liquid component of the metal ink 10. The ionized metal particle 12 may be at least one of a silver ion and a copper ion.

The metal ink 10 described above can have variations in composition of the solvent 16. The metal inks 10 with the solvents 16 of different compositions will be described below.

### First Metal Ink

One of the metal inks 10 with the solvents 16 of different compositions is denoted as a first metal ink 10A. In the first metal ink 10A, the solvent 16 is water. By the solvent 16 containing the water, sinterability can be improved while suppressing aggregation of the metal particles 12, and a sintered body that appropriately transmits visible light can be obtained. The first metal ink 10A is a mixture of metal particles 12 while the polyhydric alcohol 14, the additive 17 and the organic solvent 18 is dissolved in water as the solvent 16. In other words, the first metal ink 10A contains the metal particles 12 in an aqueous solution of polyhydric alcohol 14, the additive 17 and the organic solvent 18. The first metal ink 10A may not contain the organic solvent 18, and in this case, the organic solvent 18 may not be added in the production process of the first metal ink 10A.

The amount of metal particles 12 in the first metal ink 10A is preferably 1% or more and 50% or less, more preferably 5% or more and 50% or less, and even more preferably 5% or more and 30% or less, in mass ratio to the entire first metal ink 10A. The amount of metal particles 12 in this range is advantageous from a manufacturing standpoint, for example, in that ejectability by nozzles is improved, because reduction in flowability of the first metal ink 10A can be suppressed while keeping a sufficient concentration of metal particles 12.

In the first metal ink 10A, the content of the polyhydric alcohol 14 is preferably 0.1% or more and 20% or less, more preferably 0.5% or more and 20% or less, and still more preferably 1% or more and 20% or less in mass ratio with respect to the entire first metal ink 10A. When the content of the polyhydric alcohol 14 falls within this range, it is possible to suppress the concentration of the metal particles 12 from being too low while appropriately dispersing the metal particles 12.

In the first metal ink 10A, the content of the additive 17 is preferably 0.1% or more and 10% or less, more preferably 0.5% or more and 10% or less, and still more preferably 1% or more and 5% or less in mass ratio with respect to the entire first metal ink 10A. When the content of the additive 17 falls within this range, the metal particles 12 can be more suitably sintered while the concentration of the metal particles 12 is sufficiently maintained.

In the first metal ink 10A, the content of the organic solvent 18 is preferably 0.5% or more and 30% or less, more preferably 1% or more and 30% or less, and still more preferably 2% or more and 30% or less in mass ratio with respect to the entire first metal ink 10A. When the content of the organic solvent 18 falls within this range, it is possible to achieve appropriate storage for a long period of time.

In the present embodiment, it is preferable that the first metal ink 10A contains no substances other than the metal particles 12, the polyhydric alcohol 14, the solvent 16 which is water, the additive 17, and the organic solvent 18, except for inevitable impurities. However, the present embodiment is not limited thereto and the first metal ink 10A may contain additives (dispersant, adhesion-applying agent, rheology adjuster, anti-rust agent, precipitation prevention agent, and the like) other than the metal particles 12, the polyhydric alcohol 14, the solvent 16 which is water, the additive 17, and the organic solvent 18.

For example, the first metal ink 10A may contain a dispersant that is a component other than the metal particles 12, the polyhydric alcohol 14, the solvent 16 that is water, the additive 17, and the organic solvent 18. Examples of the dispersant include a cationic dispersant, an anionic dispersant, a nonionic dispersant, and an amphoteric dispersant. Among them, examples of the anionic dispersant include a carboxylate dispersant, a sulfonate dispersant, and a phosphate dispersant. In particular, as the phosphate dispersant, a phosphate ester compound is suitably used. The phosphate ester compound used as the dispersant preferably has a molecular weight higher than that of the phosphate compound used as the additive 17. The molecular weight of the phosphate ester compound used as the dispersant is preferably 200 or more and 3500 or less, more preferably 300 or more and 3000 or less, and still more preferably 400 or more and 2500 or less. When the molecular weight is 200 or more, the metal particles have sufficient hydrophobic groups, so that good dispersibility of the metal particles in water is obtained, and when the molecular weight is 3500 or less, decomposition and reaction at a target heating temperature (about 200 to 350°C) are possible, so that there is no possibility of hindering sintering between the metal particles and the like.

Furthermore, the phosphate ester compound used in the dispersant may be any of mono-, di-, and tri-esters, neutralized salts, and the like as long as the solubility in water is favorable. In the case of the mono-, di-, and tri-esters, the HLB (Hydrophilic-Lipophilic Balance) value is preferably 6 or more and 20 or less, more preferably 8 or more and 20 or less, and still more preferably 10 or more and 20 or less.

The phosphate ester compound used in the dispersant may be any compound, and examples thereof include polyoxyethylene alkyl (aliphatic) ether phosphate ester, polyoxyethylene phenyl (aromatic) ether phosphate ester, alkyl (aliphatic) phosphate ester, phenyl (aromatic) phosphate ester, and neutralized salts thereof. As the dispersant, one of them may be used, or two or more thereof may be used.

By containing the phosphate ester compound, aggregation of the metal particles 12 can be suitably suppressed. More specifically, in the metal inks 10A and 10B, when a water-soluble polyhydric alcohol 14 is present at the time of drying, the solvent 16 such as water or a lower alcohol volatilizes, the content ratio of the polyhydric alcohol 14 increases, and dispersion of the metal particles 12 in the film may decrease. On the other hand, by adding a dispersant of a phosphate compound having a high molecular weight, dispersibility can be maintained even just before drying.

When the first metal ink 10A contains a phosphate ester compound as a dispersant, the content of the phosphate ester compound in the first metal ink 10A is preferably 0.001% or more and 2% or less, more preferably 0.001% or more and 1% or less, and still more preferably 0.01% or more and 1% or less in mass ratio with respect to the entire first metal ink 10A. When the content of the phosphate ester compound falls within this range, aggregation of the metal particles 12 can be more suitably suppressed.

### (Second metal ink)

One of the metal inks 10 having different components of the solvent 16 is referred to as a second metal ink 10B. The second metal ink 10B may contain a lower alcohol as the solvent 16, more specifically, may contain other than the lower alcohol as the solvent 16, and may contain water in the present embodiment. In the second metal ink 10B, the metal particles 12 are mixed while the polyhydric alcohol 14, the additive 17, and the organic solvent 18 are dissolved in the solvent 16. That is, for example, in the second metal ink 10B, the metal particles 12 are contained in the aqueous solution of the polyhydric alcohol 14, the additive 17, the organic solvent 18, and the lower alcohol. The second metal ink 10B may not contain the organic solvent 18, and in this case, the organic solvent 18 may not be added in the production process of the second metal ink 10B.

Here, the lower alcohol refers to an alcohol having five or less carbon atoms (C). More specifically, the lower alcohol used in the solvent 16 preferably refers to an alcohol having one OH group, and is preferably an alcohol having one or more and four or less carbon atoms (C). Examples of the lower alcohol include methanol, ethanol, propyl alcohol, isopropyl alcohol, butyl alcohol, and sec-butyl alcohol. As the lower alcohol, one of them may be used, or two or more thereof may be used. When the solvent 16 contains a lower alcohol, sinterability can be improved while suppressing aggregation of the metal particles 12, and a sintered body that appropriately transmits visible light can be obtained.

The amount of metal particles 12 in the second metal ink 10B is preferably 1% or more and 50% or less, more preferably 5% or more and 50% or less, and even more preferably 5% or more and 30% or less, in mass ratio to the entire second metal ink 10B. The amount of metal particles 12 in this range is advantageous from a manufacturing standpoint, for example, in that ejectability by nozzles is improved, because reduction in flowability of the second metal ink 10B can be suppressed while keeping a sufficient concentration of metal particles 12.

In the second metal ink 10B, the content of the polyhydric alcohol 14 is preferably 0.01% or more and 10% or less, more preferably 0.1% or more and 10% or less, and still more preferably 0.1% or more and 5% or less in mass ratio with respect to the entire second metal ink 10B. When the content of the polyhydric alcohol 14 falls within this range, it is possible to suppress the concentration of the metal particles 12 from being too low while appropriately dispersing the metal particles 12.

In the second metal ink 10B, the content of the lower alcohol is preferably 5% or more and 99% or less, more preferably 5% or more and 95% or less, and still more preferably 10% or more and 95% or less in mass ratio with respect to the entire second metal ink 10B. When the content of the lower alcohol falls within this range, it is possible to suppress decrease in fluidity of the second metal ink 10B while sufficiently maintaining the concentration of the metal particles 12, which is advantageous in terms of production, for example, improving jetting performance by a nozzle. When plural types of alcohols are contained as the lower alcohol, the content of the lower alcohol herein refers to the total content of the lower alcohols. The same applies to other components.

In the second metal ink 10B, the content of the additive 17 is preferably 0.05% or more and 5% or less, more preferably 0.1% or more and 5% or less, and still more preferably 0.1% or more and 2% or less in mass ratio with respect to the entire second metal ink 10B. When the content of the additive 17 falls within this range, the metal particles 12 can be more suitably sintered while the concentration of the metal particles 12 is sufficiently maintained.

In the second metal ink 10B, the content of the organic solvent 18 is preferably 0.01% or more and 30% or less, more preferably 0.1% or more and 20% or less, and still more preferably 0.5% or more and 20% or less in mass ratio with respect to the entire second metal ink 10B. When the content of the organic solvent 18 falls within this range, it is possible to achieve appropriate storage for a long period of time.

In the present embodiment, it is preferable that the second metal ink 10B contains no substances other than the metal particles 12, the polyhydric alcohol 14, the solvent 16 (herein water and the lower alcohol), the additive 17 and the organic solvent 18, except for inevitable impurities. However, the present embodiment is not limited thereto and the second metal ink 10B may contain additives (dispersant, adhesion-applying agent, rheology adjuster, anti-rust agent, precipitation prevention agent and the like) other than the metal particles 12, the polyhydric alcohol 14, the solvent 16, the additive 17 and the organic solvent 18.

For example, the second metal ink 10B may contain a dispersant that is a component other than the metal particles 12, the polyhydric alcohol 14, the solvent 16, the additive 17, and the organic solvent 18. Examples of the dispersant include a cationic dispersant, an anionic dispersant, a nonionic dispersant, and an amphoteric dispersant. Among them, examples of the anionic dispersant include a carboxylate dispersant, a sulfonate dispersant, and a phosphate dispersant. In particular, as the phosphate dispersant, a phosphate ester compound is suitably used. The phosphate ester compound used as the dispersant preferably has a molecular weight higher than that of the phosphate compound used as the additive 17. The molecular weight of the phosphate ester compound used as the dispersant is preferably 200 or more and 3500 or less, more preferably 300 or more and 3000 or less, and still more preferably 400 or more and 2500 or less. When the molecular weight is 200 or more, the metal particles have sufficient hydrophobic groups, so that good dispersibility of the metal particles in a lower alcohol is obtained, and when the molecular weight is 3500 or less, decomposition and reaction at a target heating temperature (about 200 to 350°C) are possible, so that there is no possibility of hindering sintering between the metal particles and the like.

Furthermore, the phosphate ester compound used in the dispersant may be any of mono-, di-, and tri-esters, neutralizing salts, and the like as long as the solubility in a lower alcohol is favorable. In the case of mono-, di-, and tri-esters, the HLB value is preferably 4 or more and 15 or less, more preferably 5 or more and 15 or less, and still more preferably 5 or more and 13 or less.

The phosphate ester compound used in the dispersant may be any compound, and examples thereof include polyoxyethylene alkyl (aliphatic) ether phosphate ester, polyoxyethylene phenyl (aromatic) ether phosphate ester, alkyl (aliphatic) phosphate ester, phenyl (aromatic) phosphate ester, and neutralized salts thereof. As the dispersant, one of them may be used, or two or more thereof may be used.

When the second metal ink 10B contains a phosphate ester compound as a dispersant, the content of the phosphate ester compound in the second metal ink 10B is preferably 0.001% or more and 2% or less, more preferably 0.001% or more and 1% or less, and still more preferably 0.01% or more and 1% or less in mass ratio with respect to the entire second metal ink 10B. When the content of the phosphate ester compound falls within this range, aggregation of the metal particles 12 can be more suitably suppressed.

In a metal ink containing the lower alcohol as the main solvent, the lower alcohol may cause agglomeration of metal particles. In contrast, in the second metal ink 10B, since the polyhydric alcohol 14 is mixed, for example, the polyhydric alcohol 14 coordinates around the metal particles 12 to suppress agglomeration of the metal particles 12.

### Third Metal Ink

One of the metal inks 10 with the solvents 16 of different compositions is denoted as a third metal ink 10C. The third metal ink 10C contains a high-boiling solvent as the solvent 16. To be more specific, the main solvent which is the main component of the solvent 16 is a high-boiling solvent. For example, the third metal ink 10C contains the metal particles 12 while the polyhydric alcohol 14, the additive 17 and the organic solvent 18 is dissolved in the solvent 16. The third metal ink 10C may contain, as the solvent 16, a solvent other than a high-boiling solvent which is the main solvent. The third metal ink 10C may contain at least one of water and the lower alcohol, and in the present embodiment contains both water and the lower alcohol. The third metal ink 10C may not contain the organic solvent 18, and in this case, the organic solvent 18 may not be added in the production process of the third metal ink 10C.

The solvent contains one or more OH groups, has a boiling point of 150°C or more, and is a liquid hardly soluble or insoluble in water. The high-boiling solvent hardly soluble or insoluble in water is preferably a solvent classified as a non-water-soluble liquid in the Cabinet Order on Regulation of Hazardous Materials in the Fire Service Act, Appendix 3. The high-boiling solvent is preferably an organic solvent, for example, at least one of α-terpineol and 2-ethyl-1,3-hexanediol. Both solvents may include isomers. By the solvent 16 containing a high boiling point solvent, the sinterability can be more suitably improved.

The amount of metal particles 12 in the third metal ink 10C is preferably 1% or more and 50% or less, more preferably 5% or more and 50% or less, and even more preferably 5% or more and 30% or less, in mass ratio to the entire third metal ink 10C. The amount of metal particles 12 in this range is advantageous from a manufacturing standpoint, for example, in that ejectability by nozzles is improved, because reduction in flowability of the third metal ink 10C can be suppressed while keeping a sufficient concentration of metal particles 12.

In the third metal ink 10C, the content of the polyhydric alcohol 14 is preferably 0.01% or more and 5% or less, more preferably 0.01% or more and 5% or less, and still more preferably 0.01% or more and 3% or less in mass ratio with respect to the entire third metal ink 10C. When the content of the polyhydric alcohol 14 falls within this range, it is possible to suppress the concentration of the metal particles 12 from being too low while appropriately dispersing the metal particles 12.

The amount of high-boiling solvent in the third metal ink 10C is preferably more than 50% and 99% or less, more preferably more than 50% and 95% or less, and even more preferably 60% or more and 95% or less, in mass ratio to the entire third metal ink 10C. The amount of high-boiling solvent in this range is advantageous from a manufacturing standpoint, for example, in that ejectability by nozzles is improved, because reduction in flowability of the third metal ink 10C can be suppressed while keeping a sufficient concentration of metal particles 12.

In the third metal ink 10C, the content of the additive 17 is preferably 0.01% or more and 2% or less, more preferably 0.1% or more and 2% or less, and still more preferably 0.1% or more and 1% or less in mass ratio with respect to the entire third metal ink 10C. When the content of the additive 17 falls within this range, the metal particles 12 can be more suitably sintered while the concentration of the metal particles 12 is sufficiently maintained.

In the third metal ink 10C, the content of the organic solvent 18 is preferably 0.01% or more and 30% or less, more preferably 0.01% or more and 10% or less, and still more preferably 0.1% or more and 10% or less in mass ratio with respect to the entire third metal ink 10C. When the content of the organic solvent 18 falls within this range, it is possible to achieve appropriate storage for a long period of time.

The third metal ink 10C preferably contains a dispersant that is a component other than the metal particles 12, the polyhydric alcohol 14, the solvent 16, the additive 17, and the organic solvent 18. Examples of the dispersant include a cationic dispersant, an anionic dispersant, a nonionic dispersant, and an amphoteric dispersant. Among them, examples of the anionic dispersant include a carboxylate dispersant, a sulfonate dispersant, and a phosphate dispersant. In particular, as the phosphate dispersant, a phosphate ester compound is suitably used. The phosphate ester compound used as the dispersant preferably has a molecular weight higher than that of the phosphate compound used as the additive 17. The molecular weight of the phosphate ester compound used as the dispersant is preferably 200 or more and 3500 or less, more preferably 300 or more and 3000 or less, and still more preferably 400 or more and 2500 or less. When the molecular weight is 200 or more, the metal particles have sufficient hydrophobic groups, so that good dispersibility of the metal particles in a high boiling point solvent is obtained, and when the molecular weight is 3500 or less, decomposition and reaction at a target heating temperature (about 200 to 350°C) are possible, so that there is no possibility of hindering sintering between the metal particles and the like.

Furthermore, the phosphate ester compound used in the dispersant may be any of mono-, di-, and tri-esters, neutralizing salts, and the like as long as the solubility in lower alcohols is favorable. In the case of mono-, di-, and tri-esters, the HLB value is preferably 2 or more and 15 or less, more preferably 3 or more and 15 or less, and still more preferably 4 or more and 13 or less.

The phosphate ester compound used in the dispersant may be any compound, and examples of polyoxyethylene alkyl (aliphatic) ether phosphate ester, polyoxyethylene phenyl (aromatic) ether phosphate ester, alkyl (aliphatic) phosphate ester, and phenyl (aromatic) phosphate ester, and polyoxyethylene alkyl ether phosphate ester include alkyl phosphate esters such as laureth-n phosphates, oleth-n phosphates, and steareth-n phosphates (n = 2 to 10). As the dispersant, one of them may be used, or two or more thereof may be used.

The amount of dispersant in the third metal ink 10C is preferably 0.01% or more and 5% or less, more preferably 0.1% or more and 5% or less, and even more preferably 0.1% or more and 3% or less, in mass ratio to the entire third metal ink 10C. The amount of dispersant in this range can properly suppress agglomeration of the metal particles 12.

In the present embodiment, it is preferable that the third metal ink 10C contains no substances other than the metal particles 12, the polyhydric alcohol 14, the solvent 16 (herein, water, lower alcohol, and high-boiling solvent), the additive 17, the organic solvent 18 and the dispersant, except for inevitable impurities. However, the present embodiment is not limited thereto. The third metal ink 10C does not necessarily contain a dispersant or may contain additives (adhesion-applying agent, rheology adjuster, anti-rust agent, precipitation prevention agent, and the like) other than the metal particles 12, the polyhydric alcohol 14, the solvent 16, the additive 17, the organic solvent 18 and the dispersant.

In a metal ink containing a high-boiling solvent as the main solvent, the high-boiling solvent may cause agglomeration of the metal particles 12. In contrast, in the third metal ink 10C, since the polyhydric alcohol 14 is mixed, for example, the polyhydric alcohol 14 coordinates around the metal particles 12 to suppress agglomeration of the metal particles 12.

### Method for Producing Metal Ink

A method for producing the metal ink 10 described above will now be described. FIG. 2 is a flowchart illustrating a method for producing a metal ink according to the present embodiment.

### Production of Metal Particles

As illustrated in FIG. 2, in this production method, the metal particles 12 are formed by mixing an aqueous carboxylic acid metal dispersion with a reducing agent (step S10). Specifically, first, an aqueous dispersion of a carboxylic acid metal (for example, copper carboxylate) is prepared, and then a pH adjuster is added to this aqueous carboxylic acid metal dispersion to adjust the pH to 2.0 or more and 7.5 or less. Subsequently, to this pH-adjusted aqueous carboxylic acid metal dispersion, a hydrazine compound in an amount 1.0 to 1.2 times the equivalent amount that can reduce metal ions is added as a reducing agent and mixed under an inert gas atmosphere. The resulting mixture is heated to a temperature of 60°C or more and 80°C or less and held for 1.5 hours or longer and 2.5 hours or shorter under an inert gas atmosphere. This process reduces the metal ions leached from the carboxylic acid metal to form metal particles 12 and forms a metal acid-derived organic substance on the surface of the metal particles 12. As the carboxylic acid, glycolic acid, citric acid, malic acid, maleic acid, malonic acid, fumaric acid, succinic acid, tartaric acid, oxalic acid, phthalic acid, benzoic acid, and salts thereof are used. As the reducing agent, a hydrazine compound is used, but hydrazine, ascorbic acid, oxalic acid, formic acid, and salts thereof may be used.

### Production of Metal Particles: Copper Particles

In the following, the method for producing metal particles 12 when the metal particles 12 are copper particles will be described. An aqueous dispersion of copper carboxylate can be prepared by adding a powdered carboxylic acid metal to pure water such as distilled water or ion-exchanged water at a concentration of 25% by mass or more and 40% by mass or less, stirring with a stirring blade, and dispersing uniformly. Examples of the pH adjuster include triammonium citrate, ammonium hydrogen citrate, and citric acid. Among these, triammonium citrate is preferred because it can mildly adjust the pH. The pH of the aqueous copper carboxylate dispersion is set to 2.0 or more in order to accelerate the leaching rate of copper ions leached from copper carboxylate and to allow the formation of copper particles to proceed quickly to obtain the target fine copper particles. The pH is set to 7.5 or less in order to prevent the leached metal ions from becoming copper(II) hydroxide and to increase the yield of copper particles. Setting the pH to 7.5 or less can prevent the reducing power of the hydrazine compound from becoming excessively high and facilitates formation of the target copper particles. The pH of the aqueous copper carboxylate dispersion is preferably adjusted to within a range of 4 to 6.

The reduction of copper carboxylate by the hydrazine compound is performed under an inert gas atmosphere. This is to prevent oxidation of copper ions leached into the liquid. Examples of the inert gas include nitrogen gas and argon gas. The hydrazine compound has the advantages of producing no residue after the reduction reaction when reducing copper carboxylate under acidic conditions, being relatively safe, and being easy to handle. Examples of the hydrazine compound include hydrazine monohydrate, anhydrous hydrazine, hydrazine hydrochloride, and hydrazine sulfate. Among these hydrazine compounds, hydrazine monohydrate and anhydrous hydrazine, which do not contain components such as sulfur and chlorine that can be impurities, are preferred.

Generally, copper formed in an acidic solution of less than pH 7 will dissolve. In the present embodiment, however, the hydrazine compound as a reducing agent is added and mixed with an acidic solution of less than pH 7 to form copper particles in the resulting mixture. Thus, the carboxylic acid-derived component generated from copper carboxylate quickly coats the surface of the copper particles to suppress dissolution of the copper particles. It is preferable that the aqueous dispersion of copper carboxylate after the pH adjustment is set to 50°C or more and 70°C or less to facilitate the progress of the reduction reaction.

The mixture of the hydrazine compound is heated to a temperature of 60°C or more and 80°C or less and held for 1.5 hours or longer and 2.5 hours or shorter under an inert gas atmosphere in order to form copper particles and to form a coating of an organic substance on the surface of the formed copper particles. Heating and holding in an inert gas atmosphere is to prevent oxidation of the formed copper particles. The starting material, that is, copper carboxylate, usually contains approximately 35% by mass of copper. By adding a hydrazine compound as a reducing agent to an aqueous carboxylic acid dispersion containing a copper component in such a degree, heating the mixture to the above temperatures, and holding the mixture for the above period of time, the formation of copper particles and the formation of an organic substance on the surface of the copper particles proceed in a balanced manner, resulting in copper particles with the amount of coating of the organic substance in the range of 0.5% by mass to 2.0% by mass with respect to 100% by mass of the copper particles. If the heating temperature is less than 60°C and the holding time is shorter than 1.5 hours, the carboxylic acid metal may not be completely reduced, and the rate of copper particle formation may be too slow. As a result, the amount of organic substance coating the copper particles may be excessive. On the other hand, if the heating temperature exceeds 80°C and the holding time exceeds 2.5 hours, the rate of copper particle formation may be too fast, and the amount of organic substance coating the copper particles may be too small. The preferred heating temperature is 65°C or more and 75°C or less, and the preferred holding time is 2 hours or longer and 2.5 hours or shorter.

The copper particles produced in the mixture may be washed, desalted, etc. using pure water or the like from the mixed liquid in an inert gas atmosphere. Furthermore, it is possible to obtain an water slurry containing the metal particles 12 with a certain solid-liquid ratio (for example, solid-liquid ratio: 50/50 [% by mass]) by dehydration using, for example, a centrifugal separator. In some cases, the copper particles having the surface coated with an organic substance can be obtained by solid-liquid separation and drying by freeze-drying or drying under reduced pressure. These copper particles have the surface coated with an organic substance and therefore is less likely to be oxidized even when stored in air.

### (Production of first metal ink)

Next, the metal particle 12, the water as the solvent 16, the polyhydric alcohol 14, the additive 17, the organic solvent 18, and water as the solvent 16 are mixed to generate a first metal ink 10A (step S12). Here, the first metal ink 10A is preferably produced by mixing the metal particle 12, the polyhydric alcohol 14, the additive 17, the organic solvent 18, and water so that the content of the metal particle 12, the polyhydric alcohol 14, the additive 17, and the organic solvent 18 falls within the numerical ranges described above. The metal particle 12, the polyhydric alcohol 14, the additive 17, and the organic solvent 18, and the water may be mixed by an arbitrary method. For example, an aqueous solution containing the polyhydric alcohol 14, the additive 17 and the organic solvent 18 may be mixed, or an aqueous solution of the polyhydric alcohol 14 and an aqueous solution of the organic solvent 18 may be mixed, with a water slurry containing the metal particle 12 or an aqueous solution containing the polyhydric alcohol 14 and the organic solvent 18 may be mixed, or an aqueous solution of the polyhydric alcohol 14 and an aqueous solution of the organic solvent 18 may be mixed, with the metal particle 12 not containing water. In addition, if necessary, in order to remove foreign matters and aggregated particles of the metal particle 12, filtration may be performed with a filter having a predetermined opening, or the like. Such filtration may be performed at any stage in the subsequent metal ink-producing process.

### (Production of second metal ink)

Next, the first metal ink 10A and a lower alcohol as the solvent 16 are mixed to produce a second metal ink 10B (Step S14). Here, it is preferable to produce the second metal ink 10B by mixing the first metal ink 10A and the lower alcohol so that the contents of the metal particles 12, the polyhydric alcohol 14, the additive 17, the lower alcohol, and the organic solvent 18 fall within the numerical ranges described above. A method of mixing the first metal ink 10A and the lower alcohol is arbitrary. For example, after the first metal ink 10A obtained in Step S12 is allowed to stand for a predetermined time (for example, about one day) or centrifuged under a predetermined condition, a part of the supernatant is removed, and a lower alcohol may be added to the first metal ink 10A from which the supernatant has been removed. Furthermore, the second metal ink 10B may be produced by mixing the metal particles 12, water and a lower alcohol as the solvent 16, the polyhydric alcohol 14, the additive 17, and the organic solvent 18 without passing through Step S12.

### Production of Third Metal Ink

Subsequently, the second metal ink 10B is mixed with a high-boiling solvent as the solvent 16 and a dispersant to generate the third metal ink 10C (step S16). Herein, it is preferable that the third metal ink 10C is produced by mixing the second metal ink 10B, a high-boiling solvent, a dispersant, and an organic solvent 18 such that the amounts of metal particles 12, polyhydric alcohol 14, additive 17, high-boiling solvent, and dispersant are in the numerical ranges described above. The second metal ink 10B, the high-boiling solvent, and the dispersant may be mixed by any method. For example, the second metal ink 10B obtained at step S14 may be allowed to stand still for a predetermined period of time (for example, about 1 day) or centrifuged under predetermined conditions, then some of the supernatant may be removed, and the high-boiling solvent may be added to the second metal ink 10B from which the supernatant solution has been removed. The addition of a dispersant is not essential.

The solvent (water, lower alcohol, high-boiling solvent, etc.) may be further removed from or added to the third metal ink 10C to achieve the numerical ranges described above.

The third metal ink 10C thus generated is used as the metal ink 10. In the description above, the second metal ink 10B is generated using the first metal ink 10A, and the third metal ink 10C is generated using the second metal ink 10B. In other words, the first metal ink 10A and the second metal ink 10B are intermediate substances for producing the third metal ink 10C. However, the first metal ink 10A and the second metal ink 10B are not necessarily intermediate substances, and the first metal ink 10A and the second metal ink 10B themselves may be used as the metal ink 10.

The method for producing the metal particles 12 and the metal ink 10 described above are by way of example, and the metal particles 12 and the metal ink 10 may be produced by any method.

### (Cleaning liquid)

The metal ink 10 described above is used as a raw material of the sintered body. For example, the metal ink 10 is discharged, jetted, or the like from a nozzle through a flow path inside various coating and patterning devices to obtain a coating film, a coating pattern, or a molded body of the metal ink 10. By heating these, the metal ink 10 is sintered to obtain a sintered film, a sintered pattern, and a sintered body. The flow of the flow path and nozzle inside the devices that discharge, jet, and the like the metal ink 10 as described above may become worse, for example, when the jetting is stopped for a long time, due to sedimentation of the metal particles 12 contained in the metal ink 10, drying due to volatilization of the solvent component contained in the metal ink 10, and the like, or the flow path and the nozzle may clog in the worst case. In order to suppress and eliminate such clogging of the flow path and the nozzle, it is effective to redisperse or dissolve components that have settled and dried in the flow path and the nozzle with a cleaning liquid. In this case, it is desirable to redisperse the solid component settled and dried by a cleaning liquid.

As a result of intensive studies, the present inventor has found that clogging of the flow path and the nozzle can be suitably suppressed and eliminated by using the metal ink 10 itself described above as a cleaning liquid.

That is, the cleaning liquid in the present embodiment includes metal particles 12, a solvent 16, a polyhydric alcohol 14 containing two or more OH groups and being soluble in water and a lower alcohol, and an additive 17 containing a phosphate compound soluble in water. Suitable components of the cleaning liquid are the same as those of the metal ink 10 described above, and thus the description thereof will be omitted. For example, the first metal ink 10A, the second metal ink 10B, or the third metal ink 10C described above may be used as the cleaning liquid.

However, the content of the metal particles 12 in the cleaning liquid is preferably smaller than the content of the metal particles 12 in the metal ink 10 described above. The content of the metal particles 12 contained in the cleaning liquid is preferably 0.5 mass% or more and 5 mass% or less, more preferably 1 mass% or more and 5 mass% or less, and still more preferably 1 mass% or more and 3 mass% or less with respect to the entire cleaning liquid.

In this case, the above-described cleaning liquid is supplied to the flow path in which the above-described metal ink 10 is stored inside and the inside of the nozzle, and the cleaning liquid is jetted from the nozzle. By cleaning the flow path and the nozzle using such a cleaning liquid, clogging of the flow path and the nozzle due to the metal particles 12 remaining in the nozzle can be suitably suppressed and eliminated. Therefore, by using the metal ink 10 according to the present embodiment as the cleaning liquid, clogging can be suppressed or eliminated, and a sintered body can be appropriately obtained.

### (Another example of cleaning liquid)

As the cleaning liquid, as described above, a cleaning liquid having the same component as the metal ink 10 is preferably used, but the cleaning liquid is not limited thereto. For example, the metal ink 10A containing only water, the metal ink 10B containing water and a lower alcohol, and the metal ink 10C containing a lower alcohol and a high boiling point solvent which is a liquid hardly soluble or insoluble in water may be used as the cleaning liquid. In this case, the above-described cleaning liquid is supplied to the flow path in which the above-described metal inks 10A to 10C are stored and the inside of the nozzle, and is jetted from the nozzle. As a result, the metal particles 12 remaining in the flow path and the nozzle are redispersed together with the above-described cleaning liquid, and are jetted from the nozzle, so that clogging of the flow path and the nozzle can be suitably suppressed and eliminated. Furthermore, the metal ink 10A containing only water, the metal ink 10B containing water and a lower alcohol, and the metal ink 10C containing a lower alcohol and a high boiling point solvent which is a liquid hardly soluble or insoluble in water do not leave the metal particles 12 in the flow path or the nozzle in the cleaning liquid containing a lower alcohol and a high boiling point solvent which is a liquid hardly soluble or insoluble in water, which is said to be preferable.

### (Effects)

As described above, the metal ink 10 according to the present embodiment includes the metal particles 12, the solvent 16, the polyhydric alcohol 14 containing two or more OH groups and being soluble in water and a lower alcohol, and the additive 17 containing a phosphate compound soluble in water. Here, in the metal ink in which the metal particles are dispersed in the solvent, the metal particles may aggregate. When the metal particles aggregate, deterioration in characteristics of the product, such as reduction in denseness of a sintered body, may be caused. On the other hand, since the metal ink 10 according to the present embodiment contains the polyhydric alcohol 14, the aggregation of the metal particles 12 can be suppressed by the polyhydric alcohol 14. According to the metal ink 10 of the present embodiment, since the aggregation of the metal particles 12 can be suppressed, the deterioration in characteristics of the product is suppressed, and an appropriate sintered body can be obtained. Also, for example, when jetting the metal ink 10 with the nozzle, the production defect such as clogging of the nozzle can also be suppressed by suppressing the aggregation of the metal particles 12. Further, the metal ink 10 according to the present embodiment includes the additive 17 containing a phosphate compound, so that when the metal ink 10 is heated to produce the sintered body of the metal particles 12 in the metal ink 10, sinterability of the sintered body can be improved. Furthermore, since the metal ink 10 according to the present embodiment includes the additive 17 containing a phosphate compound, a sintered body having appropriate transmittance of visible light can be obtained. Therefore, the sintered body sintered using the metal ink 10 according to the present embodiment can be appropriately applied to a tandem solar cell in which crystalline Si solar cells are combined. However, application of the sintered body sintered using the metal ink 10 may be arbitrary.

Also, it is preferable that the metal particles 12 are copper, the solvent 16 contains water, the polyhydric alcohol 14 contains at least one of polyhydric alcohols containing two or more OH groups and being soluble in water and a lower alcohol, and having a melting point of 30°C or higher, and the additive 17 has a molecular weight of 90 or more and 200 or less. According to the present embodiment, sinterability can be improved while suppressing aggregation of the metal particles 12, and a sintered body that appropriately transmits visible light can be obtained.

In addition, the method for producing the metal ink 10 according to the present disclosure includes mixing the metal particles 12, the solvent 16, the polyhydric alcohol 14 containing two or more OH groups and being soluble in water and a lower alcohol, and the additive 17 containing a phosphate compound soluble in water to produce the metal ink 10 containing the metal particles 12, the solvent 16, the polyhydric alcohol 14, and the additive 17. According to the present disclosure, it is possible to produce the metal ink 10 capable of suitably improving sinterability while suppressing aggregation of the metal particles 12, and it is also possible to obtain a sintered body having appropriate transmittance of visible light.

Further, the method for producing a sintered body according to the present disclosure includes heating the metal ink 10 to form a sintered body. According to the present disclosure, sinterability can be suitably improved while suppressing aggregation of the metal particles 12.

Although the conditions for producing the sintered body by the metal ink 10 may be arbitrary, it is preferable to heat the metal ink 10 under an oxidizing gas atmosphere, an inert gas atmosphere, or a reducing gas atmosphere.

Furthermore, the cleaning liquid according to the present disclosure contains metal particles 12, a solvent 16, a polyhydric alcohol 14 containing two or more OH groups and being soluble in water and a lower alcohol, and an additive 17 containing a phosphate compound soluble in water. By using such a cleaning liquid, for example, the flow path in which the metal ink 10 according to the present embodiment is stored inside and the nozzle can be appropriately cleaned.

### (Examples)

Next, examples will be described. Tables 1 to 43 are tables showing the contents of components of metal inks and the evaluation results in each example. Tables 44 to 48 are tables showing the contents of components of cleaning liquids and the evaluation results in each example.

In the column of "Dispersant (phosphate ester compound)" in each table, steareth-2-phosphate has an HLB value of 4 to 13 and a molecular weight range of 400 to 2500. In addition, oleth-4-phosphate has an HLB value of 6 to 20 and a molecular weight range of 500 to 3000. In addition, (C12 to C15) pareth-6-phosphate has an HLB value of 8 to 20 and a molecular weight range of 500 to 3000. In addition, (C12 to C15) pareth-10-phosphate has an HLB value of 10 to 20 and a molecular weight range of 700 to 3000. In addition, polyoxyethylene (18EO) alkyl (C13) ether phosphate ester has an HLB value of 13 to 20 and a molecular weight range of 1000 to 3500. In addition, polyoxyethylene alkyl (C8) ether phosphate ester monoethanolamine salt has an HLB value of 10 to 20 and a molecular weight range of 500 to 1500. In addition, polyoxyethylene (C18 unsaturated) ether phosphate ester sodium salt has an HLB value of 10 to 20 and a molecular weight range of 700 to 1500. In addition, CRODAFOS O3A has an HLB value of 6 to 20 and a molecular weight range of 400 to 2500.

**(TABLE 1)**

| | Component | Substance name | Unit | Example 1 | Example 2 | Example 3 | Example 4 | Example 5 | Example 6 | Example 7 | Example 8 | Example 9 |
|---|---|---|---|---|---|---|---|---|---|---|---|---|
| Ink component/ composition | Metal particle | Copper | Mass (g) | 9.0 | 18.0 | 9.0 | 4.5 | 9.0 | 9.0 | 9.0 | 18.0 | 9.0 |
| | | | Content ratio (mass%) | 10.0 | 20.0 | 10.0 | 5.0 | 10.0 | 10.0 | 10.0 | 20.0 | 10.0 |
| | Water (solvent) | Water | Mass (g) | 77.4 | 68.4 | 70.2 | 65.7 | 74.7 | 70.2 | 77.4 | 68.4 | 70.2 |
| | | | Content ratio (mass%) | 86.0 | 76.0 | 78.0 | 73.0 | 83.0 | 780 | 86.0 | 76.0 | 78.0 |
| | Polyhydric alcohol | 2,5-Dimethyl-2,5-hexanediol | Mass (g) | 1.8 | 1.8 | 9.0 | 18.0 | 1.8 | 1.8 | 1.8 | 1.8 | 9.0 |
| | | | Content ratio (mass%) | 2.0 | 2.0 | 10.0 | 20.0 | 2.0 | 2.0 | 2.0 | 2.0 | 10.0 |
| | | 2 2-Dimethyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 00 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphorio acid compound (additive) | Trimethyl phosphate Molecular weight: 140.08 | Mass (g) | 1.8 | 1.8 | 1.8 | 1.8 | 4.5 | 9.0 | 0.0 | 0.0 | 0.0 |
| | | | Content ratio (mass%) | 2.0 | 2.0 | 2.0 | 2.0 | 5.0 | 10.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 1.8 | 1.8 | 1.8 |
| | | | Content ratio (mass%) | 0.0 | 0.0 | 0.0 | 0.0 | 0.0 | 0.0 | 2.0 | 2.0 | 2.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 2)**

| | Component | Substance name | Unit | Example 10 | Example 11 | Example 12 | Example 13 | Example 14 | Example 15 | Example 16 | Example 17 | Example 18 |
|---|---|---|---|---|---|---|---|---|---|---|---|---|
| Ink component/ composition | Metal particle | Copper | Mass (g) | 4.5 | 9.0 | 9.0 | 9.0 | 18.0 | 9.0 | 4.5 | 9.0 | 9.0 |
| | | | Content ratio (mass%) | 5.0 | 10.0 | 10.0 | 10.0 | 20.0 | 10.0 | 5.0 | 10.0 | 10.0 |
| | Water (solvent) | Water | Mass (g) | 65.7 | 74.7 | 70.2 | 77.4 | 68.4 | 70.2 | 65.7 | 74.7 | 70.2 |
| | | | Content ratio (mass%) | 73.0 | 83.0 | 78.0 | 86.0 | 76.0 | 78.0 | 73.0 | 83.0 | 78.0 |
| | Polyhydric alcohol | 2,5-Dimethyl-2,5-hexanediol | Mass (g) | 18.0 | 1.8 | 1.8 | 0.0 | 0.0 | 0.0 | 0.0 | 0.0 | 0.0 |
| | | | Content ratio (mass%) | 20.0 | 2.0 | 2.0 | 0.0 | 0.0 | 0.0 | 0.0 | 0.0 | 0.0 |
| | | 2,2-Dimethyl-1,3-propanediol | Mass (g) | 0.0 | 0.0 | 0.0 | 1.8 | 1.8 | 9.0 | 18.0 | 1.8 | 1.8 |
| | | | Content ratio (mass%) | 0.0 | 0.0 | 0.0 | 2.0 | 2.0 | 10.0 | 20.0 | 2.0 | 2.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 1.8 | 1.8 | 1.8 | 1.8 | 4.5 | 9.0 |
| | | | Content ratio (mass%) | 0.0 | 0.0 | 0.0 | 2.0 | 2.0 | 2.0 | 2.0 | 5.0 | 10.0 |
| | | Sodium dihydrogen phosphate Molecular weight 119.98 | Mass (g) | 1.8 | 4.5 | 9.0 | 0.0 | 0.0 | 0.0 | 0.0 | 0.0 | 0.0 |
| | | | Content ratio (mass%) | 2.0 | 5.0 | 10.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 00 | 0.0 | 00 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexariadio | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 3)**

| | Component | Substance name | Unit | Example 19 | Example 20 | Example 21 | Example 22 | Example 23 | Example 24 | Example 25 | Example 26 | Example 27 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 77.4 | 77.4 | 75.6 | 77.4 | 77.4 | 75.6 | 77.4 | 77.4 | 75.6 |
| | | | Content ratio (mass%) | 86.0 | 86.0 | 84.0 | 86.0 | 86.0 | 84.0 | 86.0 | 86.0 | 84.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.001 | 0.045 | 1.8 | 0.0 | 0.0 | 0.0 | 0.0 | 0.0 | 0.0 |
| | | | Content ratio (mass%) | 0.001 | 0.05 | 2.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.001 | 0.045 | 1.8 | 0.0 | 0.0 | 0.0 |
| | | | Content ratio (mass%) | 0.0 | 0.0 | 0.0 | 0.001 | 0.050 | 2.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.001 | 0.045 | 1.8 |
| | | | Content ratio (mass%) | 0.0 | 0.0 | 0.0 | 0.0 | 0.0 | 0.0 | 0.001 | 0.05 | 2.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α* -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 4)**

| | Component | Substance name | Unit | Example 28 | Example 29 | Example 30 | Example 31 | Example 32 | Example 33 | Example 34 | Example 35 | Example 36 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 18.0 | 9.0 |
| | | | Content ratio (mass%) | 10.0 | 10.0 | 10.0 | 10.0 | 10.0 | 10.0 | 10.0 | 20.0 | 10.0 |
| | Water (solvent) | Water | Mass (g) | 77.4 | 77.4 | 75.6 | 77.4 | 77.4 | 75.6 | 77.4 | 68.4 | 70.2 |
| | | | Content ratio (mass%) | 86.0 | 86.0 | 84.0 | 86.0 | 86.0 | 84.0 | 86.0 | 76.0 | 78.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 1.8 | 1.8 | 1.8 | 1.8 | 1.8 | 1.8 | 1.8 | 1.8 | 9.0 |
| | | | Content ratio (mass%) | 2.0 | 2.0 | 2.0 | 2.0 | 2.0 | 2.0 | 2.0 | 2.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 0.0 | 0.0 | 0.0 |
| | | | Content ratio (mass%) | 2.0 | 2.0 | 2.0 | 2.0 | 2.0 | 2.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 1.8 | 1.8 | 1.8 |
| | | | Content ratio (mass%) | 0.0 | 0.0 | 0.0 | 0.0 | 0.0 | 0.0 | 2.0 | 2.0 | 2.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio 1 (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio 1 (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.001 | 0.045 | 1.8 | 0.0 | 0.0 | 0.0 | 0.0 | 0.0 | 0.0 |
| | | | Content ratio (mass%) | 0.001 | 0.05 | 2.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.001 | 0.045 | 1.8 | 0.0 | 0.0 | 0.0 |
| | | | Content ratio (mass%) | 0.0 | 0.0 | 0.0 | 0.001 | 0.05 | 2.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 5)**

| | Component | Substance name | Unit | Example 37 | Example 38 | Example 39 | Example 40 | Example 41 | Example 42 | Example 43 | Example 44 | Example 45 |
|---|---|---|---|---|---|---|---|---|---|---|---|---|
| Ink component/ composition | Metal particle | Copper | Mass (g) | 4.5 | 9.0 | 9.0 | 9.0 | 9.0 | 9.0 | 9.0 | 9.0 | 9.0 |
| | | | Content ratio (mass%) | 5.0 | 10.0 | 10.0 | 10.0 | 10.0 | 10.0 | 10.0 | 10.0 | 10.0 |
| | Water (solvent) | Water | Mass (g) | 65.7 | 74.7 | 70.2 | 77.4 | 70.2 | 74.7 | 70.2 | 77.4 | 70.2 |
| | | | Content ratio (mass%) | 73.0 | 83.0 | 78.0 | 86.0 | 78.0 | 83.0 | 78.0 | 86.0 | 78.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 18.0 | 1.8 | 1.8 | 1.8 | 9.0 | 1.8 | 1.8 | 0.0 | 0.0 |
| | | | Content ratio (mass%) | 20.0 | 2.0 | 2.0 | 2.0 | 10.0 | 2.0 | 2.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 1.8 | 9.0 |
| | | | Content ratio (mass%) | 0.0 | 0.0 | 0.0 | 0.0 | 0.0 | 0.0 | 0.0 | 2.0 | 10.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 00 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.0 | 0.0 | 0.0 | 1.8 | 1.8 |
| | | | Content ratio (mass%) | 0.0 | 0.0 | 0.0 | 0.0 | 0.0 | 0.0 | 0.0 | 2.0 | 2.0 |
| | | Sodium dihydrogen phosphate Molecular weight 119.98 | Mass (g) | 1.8 | 4.5 | 9.0 | 0.0 | 0.0 | 0.0 | 0.0 | 0.0 | 0.0 |
| | | | Content ratio (mass%) | 2.0 | 5.0 | 10.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 1.8 | 1.8 | 4.5 | 9.0 | 0.0 | 0.0 |
| | | | Content ratio (mass%) | 0.0 | 0.0 | 0.0 | 2.0 | 2.0 | 5.0 | 10.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 00 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α* -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 6)**

| | Component | Substance name | Unit | Example 46 | Example 47 | Example 48 | Example 49 | Example 50 | Example 51 | Example 52 | Example 53 | Example 54 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 74.7 | 70.2 | 77.4 | 70.2 | 74.7 | 70.2 | 72.9 | 68.4 | 59.4 |
| | | | Content ratio (mass%) | 83.0 | 78.0 | 86.0 | 78.0 | 83.0 | 78.0 | 81.0 | 76.0 | 66.0 |
| | Polyhydric alcohol | 2,5-Dimethyl-2,5-hexanediol | Mass (g) | 0.0 | 0.0 | 0.0 | 0.0 | 0.0 | 0.0 | 1.8 | 1.8 | 1.8 |
| | | | Content ratio (mass%) | 0.0 | 0.0 | 0.0 | 0.0 | 0.0 | 0.0 | 2.0 | 2.0 | 2.0 |
| | | 2,2-Dimethyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1,1,1-Tris(hydroxymethyl)propane | Mass (g) | 1.8 | 1.8 | 0.0 | 0.0 | 0.0 | 0.0 | 0.0 | 0.0 | 0.0 |
| | | | Content ratio (mass%) | 2.0 | 2.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 1.8 | 9.0 | 1.8 | 1.8 | 0.0 | 0.0 | 0.0 |
| | | | Content ratio (mass%) | 0.0 | 0.0 | 2.0 | 10.0 | 2.0 | 2.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 4.5 | 9.0 | 1.8 | 1.8 | 4.5 | 9.0 | 1.8 | 1.8 | 1.8 |
| | | | Content ratio (mass%) | 5.0 | 10.0 | 2.0 | 2.0 | 5.0 | 10.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 4.5 | 9.0 | 18.0 |
| | | | Content ratio (mass%) | 0.0 | 0.0 | 0.0 | 0.0 | 0.0 | 0.0 | 5.0 | 10.0 | 20.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 7)**

| \ | Component | Substance name | Unit | Example 55 | Example 56 | Example 57 | Example 58 | Example 59 | Example 60 | Example 61 | Example 62 | Example 63 |
|---|---|---|---|---|---|---|---|---|---|---|---|---|
| Ink component/ composi-tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 50.4 | 72.9 | 68.4 | 59.4 | 50.4 | 729 | 68.4 | 59.4 | 50.4 |
| | | | Content ratio (mass%) | 56.0 | 81.0 | 76.0 | 66.0 | 56.0 | 81.0 | 76.0 | 66.0 | 56.0 |
| | Polyhydric alcohol | 2 5-Dimethyl-2,5-hexanediol | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | 2 2-Dimethyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 27.0 | 0.0 | 0.0 | 0.0 | 0.0 | 0.0 | 0.0 | 0.0 | 0.0 |
| | | | Content ratio (mass%) | 30.0 | 0.0 | 0.0 | 0.0 | 0.0 | 0.0 | 0.0 | 0.0 | 0.0 |
| | | Triethylene glycol monomethyl ether | Mass (g) | 0.0 | 4.5 | 9.0 | 18.0 | 27.0 | 0.0 | 0.0 | 0.0 | 0.0 |
| | | | Content ratio (mass%) | 0.0 | 5.0 | 10.0 | 20.0 | 30.0 | 0.0 | 0.0 | 0.0 | 0.0 |
| | | Triethylene glycol monobutyl ether | Mass (g) | 0.0 | 0.0 | 0.0 | 0.0 | 0.0 | 4.5 | 9.0 | 18.0 | 27.0 |
| | | | Content ratio (mass%) | 0.0 | 0.0 | 0.0 | 0.0 | 0.0 | 5.0 | 10.0 | 20.0 | 30.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 8)**

| \ | Component | Substance name | Unit | Example 64 | Example 65 | Example 66 | Example 67 | Example 68 | Example 69 | **Example** 70 | Example 71 | Example 72 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 72.9 | 68.4 | 59.4 | 50.4 | 72.9 | 68.4 | 59.4 | 50.4 | 72.9 |
| | | | Content ratio (mass%) | 81.0 | 76.0 | 66.0 | 56.0 | 81.0 | 76.0 | 66.0 | 56.0 | 81.0 |
| | Polyhydric alcohol | 2,5-Dimethyl-2,5-hexanediol | Mass (g) | 1.8 | 1.8 | 1.8 | 1.8 | 0.0 | 0.0 | 0.0 | 0.0 | 0.0 |
| | | | Content ratio (mass%) | 2.0 | 2.0 | 2.0 | 2.0 | 0.0 | 0.0 | 0.0 | 0.0 | 0.0 |
| | | 2 2-Dimethyl-1,3-propanediol | Mass (g) | 0.0 | 0.0 | 0.0 | 0.0 | 1.8 | 1.8 | 1.8 | 1.8 | 1.8 |
| | | | Content ratio (mass%) | 0.0 | 0.0 | 0.0 | 0.0 | 2.0 | 2.0 | 2.0 | 2.0 | 2.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 4.5 | 9.0 | 18.0 | 27.0 | 4.5 | 9.0 | 18.0 | 27.0 | 4.5 |
| | | | Content ratio (mass%) | 5.0 | 10.0 | 20.0 | 30.0 | 5.0 | 100 | 20.0 | 30.0 | 5.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.001 |
| | | | Content ratio (mass%) | 0.0 | 0.0 | 0.0 | 0.0 | 0.0 | 0.0 | 0.0 | 0.0 | 0.001 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 9)**

| \ | Component | Substance name | Unit | Example 73 | Example 74 | Example 75 | Example 76 | Example 77 | Example 78 | Example 79 | Example 80 | Example 81 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 71.1 | 72.9 | 71.1 | 72.9 | 71.1 | 72.9 | 71.1 | 72.9 | 71.1 |
| | | | Content ratio (mass%) | 79.0 | 81.0 | 79.0 | 81.0 | 79.0 | 81.0 | 79.0 | 81.0 | 79.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 1.8 | 0.0 | 0.0 | 0.0 | 0.0 | 0.0 | 0.0 | 0.0 | 0.0 |
| | | | Content ratio (mass%) | 2.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.001 | 1.8 | 0.0 | 0.0 | 0.0 | 0.0 | 0.0 | 0.0 |
| | | | Content ratio (mass%) | 0.0 | 0.001 | 2.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.001 | 1.8 | 0.0 | 0.0 | 0.0 | 0.0 |
| | | | Content ratio (mass%) | 0.0 | 0.0 | 0.0 | 0.001 | 2.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.001 | 1.8 | 0.0 | 0.0 |
| | | | Content ratio (mass%) | 0.0 | 0.0 | 0.0 | 0.0 | 0.0 | 0.001 | 2.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.001 | 1.8 |
| | | | Content ratio (mass%) | 0.0 | 0.0 | 0.0 | 0.0 | 0.0 | 0.0 | 0.0 | 0.001 | 2.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 10)**

| \ | Component | Substance name | Unit | Example 82 | Example 83 | Example 84 | Example 85 | Example 86 | Example 87 | Example 88 | Example 89 | Example 90 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 65.7 | 63.9 | 52.2 | 50.4 | 25.2 | 234 | 65.7 | 63.9 | 52.2 |
| | | | Content ratio (mass%) | 73.0 | 71.0 | 58.0 | 56.0 | 28.0 | 26.0 | 73.0 | 71.0 | 58.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 00 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass(g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (salvent) | Ethanol | Mass (g) | 4.5 | 4.5 | 18.0 | 18.0 | 45.0 | 45.0 | 4.5 | 4.5 | 18.0 |
| | | | Content ratio (mass%) | 5.0 | 5.0 | 20.0 | 20.0 | 50.0 | 50.0 | 5.0 | 5.0 | 20.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.001 | 1.8 | 0.001 | 1.8 | 0.001 | 1.8 | 0.0 | 0.0 | 0.0 |
| | | | Content ratio (mass%) | 0.001 | 2.0 | 0.001 | 2.0 | 0.0 | 2.0 | 0.0 | 0.0 | 0.0 |
| | | Oleth-4-phosphate | Mass (g) | 0.0 | 0.0 | 0.0 | 0.0 | 0.0 | 0.0 | 0.001 | 1.8 | 0.001 |
| | | | Content ratio (mass%) | 0.0 | 0.0 | 0.0 | 0.0 | 0.0 | 0.0 | 0.001 | 2.0 | 0.001 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 11)**

| | Component | Substance name | Unit | Example 91 | Example 92 | Example 93 | Example 94 | Example 95 | Example 96 | Example 97 | Example 98 | Example 99 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 50.4 | 25.2 | 23.4 | 65.7 | 63.9 | 52.2 | 50.4 | 25.2 | 23.4 |
| | | | Content ratio (mass%) | 56.0 | 28.0 | 26.0 | 73.0 | 71.0 | 58.0 | 56.0 | 28.0 | 26.0 |
| | Polyhydric alcohol | 2 5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 00 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass(g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 18.0 | 45.0 | 45.0 | 4.5 | 4.5 | 18.0 | 18.0 | 45.0 | 45.0 |
| | | | Content ratio (mass%) | 20.0 | 50.0 | 50.0 | 5.0 | 5.0 | 20.0 | 20.0 | 50.0 | 50.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 1.8 | 0.001 | 1.8 | 0.0 | 0.0 | 0.0 | 0.0 | 0.0 | 0.0 |
| | | | Content ratio (mass%) | 2.0 | 0.001 | 2.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.001 | 1.8 | 0.001 | 1.8 | 0.001 | 1.8 |
| | | | Content ratio (mass%) | 0.0 | 0.0 | 0.0 | 0.001 | 2.0 | 0.001 | 2.0 | 0.001 | 2.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 12)**

| | Component | Substance name | Unit | Example 100 | Example 101 | Example 102 | Example 103 | Example 104 | Example 105 | Example 106 | Example 107 | Example 108 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 65.7 | 63.9 | 52.2 | 50.4 | 25.2 | 234 | 65.7 | 63.9 | 52.2 |
| | | | Content ratio (mass%) | 73.0 | 71.0 | 58.0 | 56.0 | 28.0 | 26.0 | 73.0 | 71.0 | 58.0 |
| | Polyhydric alcohol | 2 5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass(g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 4.5 | 4.5 | 18.0 | 18.0 | 45.0 | 45.0 | 0.0 | 0.0 | 0.0 |
| | | | Content ratio (mass%) | 5.0 | 5.0 | 20.0 | 20.0 | 50.0 | 50.0 | 0.0 | 0.0 | 0.0 |
| | | 1-Propanol | Mass (g) | 0.0 | 0.0 | 0.0 | 0.0 | 0.0 | 0.0 | 4.5 | 4.5 | 18.0 |
| | | | Content ratio (mass%) | 0.0 | 0.0 | 0.0 | 0.0 | 0.0 | 0.0 | 5.0 | 5.0 | 20.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.001 | 1.8 | 0.001 |
| | | | Content ratio (mass%) | 0.0 | 0.0 | 0.0 | 0.0 | 0.0 | 0.0 | 0.001 | 2.0 | 0.001 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.001 | 1.8 | 0.001 | 1.8 | 0.001 | 1.8 | 0.0 | 0.0 | 0.0 |
| | | | Content ratio (mass%) | 0.001 | 2.0 | 0.001 | 2.0 | 0.001 | 2.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 13)**

| | Component | Substance name | Unit | Example 109 | Example 110 | Example 111 | Example 112 | Example 113 | Example 114 | Example 115 | Example 116 | Example 117 |
|---|---|---|---|---|---|---|---|---|---|---|---|---|
| Ink component/ composition tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 50.4 | 65.7 | 63.9 | 52.2 | 50.4 | 65.7 | 63.9 | 52.2 | 50.4 |
| | | | Content ratio (mass%) | 56.0 | 73.0 | 71.0 | 58.0 | 56.0 | 73.0 | 71.0 | 58.0 | 56.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 18.0 | 4.5 | 4.5 | 18.0 | 18.0 | 0.0 | 0.0 | 0.0 | 0.0 |
| | | | Content ratio (mass%) | 20.0 | 5.0 | 5.0 | 20.0 | 20.0 | 0.0 | 0.0 | 0.0 | 0.0 |
| | | 2-Propanol | Mass (g) | 0.0 | 0.0 | 0.0 | 0.0 | 0.0 | 4.5 | 4.5 | 18.0 | 18.0 |
| | | | Content ratio (mass%) | 0.0 | 0.0 | 0.0 | 0.0 | 0.0 | 5.0 | 5.0 | 20.0 | 20.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 1.8 | 0.0 | 0.0 | 0.0 | 0.0 | 0.001 | 1.8 | 0.001 | 1.8 |
| | | | Content ratio (mass%) | 2.0 | 0.0 | 0.0 | 0.0 | 0.0 | 0.001 | 2.0 | 0.001 | 2.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.001 | 1.8 | 0.001 | 1.8 | 0.0 | 0.0 | 0.0 | 0.0 |
| | | | Content ratio (mass%) | 0.0 | 0.001 | 2.0 | 0.001 | 2.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 14)**

| | Component | Substance name | Unit | Example 118 | Example 119 | Example 120 | Example 121 | Example 122 | Example 123 | Example 124 | Example 125 | Example 126 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 65.7 | 63.9 | 52.2 | 50.4 | 65.7 | 639 | 65.7 | 63.9 | 65.7 |
| | | | Content ratio (mass%) | 73.0 | 71.0 | 58.0 | 56.0 | 73.0 | 71.0 | 73.0 | 71.0 | 73.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 4.5 | 4.5 | 18.0 | 18.0 | 0.0 | 0.0 | 0.0 | 0.0 | 0.0 |
| | | | Content ratio (mass%) | 5.0 | 5.0 | 20.0 | 20.0 | 0.0 | 0.0 | 0.0 | 0.0 | 0.0 |
| | | 1-Butanol | Mass (g) | 0.0 | 0.0 | 0.0 | 0.0 | 4.5 | 4.5 | 4.5 | 4.5 | 0.0 |
| | | | Content ratio (mass%) | 0.0 | 0.0 | 0.0 | 0.0 | 5.0 | 5.0 | 5.0 | 5.0 | 0.0 |
| | | 2-Butanol | Mass (g) | 0.0 | 0.0 | 0.0 | 0.0 | 0.0 | 0.0 | 0.0 | 0.0 | 4.5 |
| | | | Content ratio (mass%) | 0.0 | 0.0 | 0.0 | 0.0 | 0.0 | 0.0 | 0.0 | 0.0 | 5.0 |
| | Phosphate ester compound (dispersant) | Steareth-2-phosphate | Mass (g) | 0.0 | 0.0 | 0.0 | 0.0 | 0.001 | 1.8 | 0.0 | 0.0 | 0.001 |
| | | | Content ratio (mass%) | 0.0 | 0.0 | 0.0 | 0.0 | 0.001 | 2.0 | 0.0 | 0.0 | 0.001 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.001 | 1.8 | 0.001 | 1.8 | 0.0 | 0.0 | 0.001 | 1.8 | 0.0 |
| | | | Content ratio (mass%) | 0.001 | 2.0 | 0.001 | 2.0 | 0.0 | 0.0 | 0.001 | 2.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 15)**

| | Component | Substance name | Unit | Example 127 | Example 128 | Example 129 | Example 130 | Example 131 | Example 132 | Example 133 | Example 134 | Example 135 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 63.9 | 65.7 | 63.9 | 65.7 | 63.9 | 25.2 | 23.4 | 65.7 | 63.9 |
| | | | Content ratio (mass%) | 71.0 | 73.0 | 71.0 | 73.0 | 71.0 | 28.0 | 26.0 | 73.0 | 71.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 3.8 | 3.8 | 38.5 | 38.5 | 3.8 | 3.8 |
| | | | Content ratio (mass%) | 0.0 | 0.0 | 0.0 | 4.3 | 4.3 | 42.8 | 42.8 | 4.3 | 4.3 |
| | | 1-Propanol | Mass (g) | 0.0 | 0.0 | 0.0 | 0.2 | 0.2 | 2.2 | 2.2 | 0.2 | 0.2 |
| | | | Content ratio (mass%) | 0.0 | 0.0 | 0.0 | 0.2 | 0.2 | 2.5 | 2.5 | 0.2 | 0.2 |
| | | 2-Propanol | Mass (g) | 0.0 | 0.0 | 0.0 | 0.4 | 0.4 | 4.3 | 4.3 | 0.4 | 0.4 |
| | | | Content ratio (mass%) | 0.0 | 0.0 | 0.0 | 0.5 | 0.5 | 4.8 | 4.8 | 0.5 | 0.5 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 4.5 | 4.5 | 4.5 | 0.0 | 0.0 | 0.0 | 0.0 | 0.0 | 0.0 |
| | | | Content ratio (mass%) | 5.0 | 5.0 | 5.0 | 0.0 | 0.0 | 0.0 | 0.0 | 0.0 | 0.0 |
| | Phosphate ester compound (dispersant) | Steareth-2-phosphate | Mass (g) | 1.8 | 0.0 | 0.0 | 0.001 | 1.8 | 0.001 | 1.8 | 0.0 | 0.0 |
| | | | Content ratio (mass%) | 2.0 | 0.0 | 0.0 | 0.001 | 2.0 | 0.001 | 2.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.001 | 1.8 | 0.0 | 0.0 | 0.0 | 0.0 | 0.001 | 1.8 |
| | | | Content ratio (mass%) | 0.0 | 0.001 | 2.0 | 0.0 | 0.0 | 0.0 | 0.0 | 0.001 | 2.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 16)**

| | Component | Substance name | Unit | Example 136 | Example 137 | Example 138 | Example 139 | Example 140 | Example 141 | Example 142 | Example 143 | Example 144 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 25.2 | 23.4 | 65.7 | 63.9 | 52.2 | 50.4 | 25.2 | 23.4 | 65.7 |
| | | | Content ratio (mass%) | 28.0 | 26.0 | 73.0 | 71.0 | 58.0 | 56.0 | 28.0 | 26.0 | 73.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 0.0 | 0.0 | 0.0 | 0.0 | 0.0 | 0.0 | 0.0 |
| | | | Content ratio (mass%) | 2.0 | 2.0 | 0.0 | 0.0 | 0.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 1.8 | 1.8 | 1.8 | 1.8 | 1.8 | 1.8 | 1.8 |
| | | | Content ratio (mass%) | 0.0 | 0.0 | 2.0 | 2.0 | 2.0 | 2.0 | 2.0 | 2.0 | 2.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 38.5 | 38.5 | 4.5 | 4.5 | 18.0 | 18.0 | 45.0 | 45.0 | 4.5 |
| | | | Content ratio (mass%) | 42.8 | 42.8 | 5.0 | 5.0 | 20.0 | 20.0 | 50.0 | 50.0 | 5.0 |
| | | 1-Propanol | Mass (g) | 2.2 | 2.2 | 0.0 | 0.0 | 0.0 | 0.0 | 0.0 | 0.0 | 0.0 |
| | | | Content ratio (mass%) | 2.5 | 2.5 | 0.0 | 0.0 | 0.0 | 0.0 | 0.0 | 0.0 | 0.0 |
| | | 2-Propanol | Mass (g) | 4.3 | 4.3 | 0.0 | 0.0 | 0.0 | 0.0 | 0.0 | 0.0 | 0.0 |
| | | | Content ratio (mass%) | 4.8 | 4.8 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.001 | 1.8 | 0.001 | 1.8 | 0.001 | 1.8 | 0.0 |
| | | | Content ratio (mass%) | 0.0 | 0.0 | 0.001 | 2.0 | 0.001 | 2.0 | 0.001 | 2.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.001 | 1.8 | 0.0 | 0.0 | 0.0 | 0.0 | 0.0 | 0.0 | 0.001 |
| | | | Content ratio (mass%) | 0.001 | 2.0 | 0.0 | 0.0 | 0.0 | 0.0 | 0.0 | 0.0 | 0.001 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 17)**

| | Component | Substance name | Unit | Example 145 | Example 146 | Example 147 | Example 148 | Example 149 | Example 150 | Example 151 | Example 152 | Example 153 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 63.9 | 52.2 | 50.4 | 25.2 | 23.4 | 61.2 | 59.4 | 47.7 | 45.9 |
| | | | Content ratio (mass%) | 71.0 | 58.0 | 56.0 | 28.0 | 26.0 | 68.0 | 66.0 | 53.0 | 51.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0 0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.0 | 1.8 | 1.8 | 1.8 | 1.8 |
| | | | Content ratio (mass%) | 0.0 | 0.0 | 0.0 | 0.0 | 0.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 1.8 | 1.8 | 1.8 | 1.8 | 1.8 | 0.0 | 0.0 | 0.0 | 0.0 |
| | | | Content ratio (mass%) | 2.0 | 2.0 | 2.0 | 2.0 | 2.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 4.5 | 4.5 | 4.5 | 4.5 |
| | | | Content ratio (mass%) | 0.0 | 0.0 | 0.0 | 0.0 | 0.0 | 5.0 | 5.0 | 5.0 | 5.0 |
| | Lower alcohol (solvent) | Ethanol | Mass (g) | 4.5 | 18.0 | 18.0 | 45.0 | 45.0 | 4.5 | 4.5 | 18.0 | 18.0 |
| | | | Content ratio (mass%) | 5.0 | 20.0 | 20.0 | 50.0 | 50.0 | 5.0 | 5.0 | 20.0 | 20.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.001 | 1.8 | 0.001 | 1.8 |
| | | | Content ratio (mass%) | 0.0 | 0.0 | 0.0 | 0.0 | 0.0 | 0.001 | 2.0 | 0.001 | 2.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 1.8 | 0.001 | 1.8 | 0.001 | 1.8 | 0.0 | 0.0 | 0.0 | 0.0 |
| | | | Content ratio (mass%) | 2.0 | 0.001 | 2.0 | 0.001 | 2.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 18)**

| | Component | Substance name | Unit | Example 154 | Example 155 | Example 156 | Example 157 | Example 158 | Example 159 | Example 160 | Example 161 | Example 162 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 20.7 | 18.9 | 61.2 | 59.4 | 47.7 | 45.9 | 20.7 | 18.9 | 61.2 |
| | | | Content ratio (mass%) | 23.0 | 21.0 | 68.0 | 66.0 | 53.0 | 51.0 | 23.0 | 21.0 | 68.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (solvent) | Ethanol | Mass (g) | 45.0 | 45.0 | 4.5 | 4.5 | 18.0 | 18.0 | 45.0 | 45.0 | 4.5 |
| | | | Content ratio (mass%) | 50.0 | 50.0 | 5.0 | 5.0 | 20.0 | 20.0 | 50.0 | 50.0 | 5.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.001 | 1.8 | 0.0 | 0.0 | 0.0 | 0.0 | 0.0 | 0.0 | 0.0 |
| | | | Content ratio (mass%) | 0.001 | 2.0 | 0.0 | 0.0 | 0.0 | 0.0 | 0.0 | 0.0 | 0.0 |
| | | Oleth-4-phosphate | Mass (g) | 0.0 | 0.0 | 0.001 | 1.8 | 0.001 | 1.8 | 0.001 | 1.8 | 0.0 |
| | | | Content ratio (mass%) | 0.0 | 0.0 | 0.001 | 2.0 | 0.001 | 2.0 | 0.001 | 2.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.001 |
| | | | Content ratio (mass%) | 0.0 | 0.0 | 0.0 | 0.0 | 0.0 | 0.0 | 0.0 | 0.0 | 0.001 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 19)**

| | Component | Substance name | Unit | Example 163 | Example 164 | Example 165 | Example 166 | Example 167 | Example 168 | Example 169 | Example 170 | Example 171 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio 1 mass%) | 10.0 | 10.0 | 10.0 | 10.0 | 10.0 | 10.0 | 10.0 | 10.0 | 10.0 |
| | Water (salvent) | Water | Mass (g) | 59.4 | 47.7 | 45.9 | 20.7 | 18.9 | 61.2 | 59.4 | 47.7 | 45.9 |
| | | | Content ratio (mass%) | 66.0 | 53.0 | 51.0 | 23.0 | 21.0 | 68.0 | 66.0 | 53.0 | 51.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | **Mass** (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | **Mass** (a) | 0.0 | 0.0 | 0.0 | 0.0 | 0.0 | 0.0 | 0.0 | 0.0 | 0.0 |
| | | | **Content** ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 00 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | **Mass** (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 4.5 | 18.0 | 18.0 | 45.0 | 45.0 | 4.5 | 4.5 | 18.0 | 18.0 |
| | | | Content ratio (mass%) | 5.0 | 20.0 | 20.0 | 50.0 | 50.0 | 5.0 | 5.0 | 20.0 | 20.0 |
| | | 1-Propanol | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 1.8 | 0.001 | 1.8 | 0.001 | 1.8 | 0.0 | 0.0 | 0.0 | 0.0 |
| | | | Content ratio (mass%) | 2.0 | 0.001 | 2.0 | 0.001 | 2.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.001 | 1.8 | 0.001 | 1.8 |
| | | | Content ratio (mass%) | 0.0 | 0.0 | 0.0 | 0.0 | 0.0 | 0.001 | 2.0 | 0.001 | 2.0 |
| | | Polyoxyethylene (18EO) alkyl (C13) ether phosphate ester | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 20)**

| | Component | Substance name | Unit | Example 172 | Example 173 | Example 174 | Example 175 | Example 176 | Example 177 | Example 178 | Example 179 | Example 180 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 20.7 | 18.9 | 61.2 | 59.4 | 47.7 | 45.9 | 61.2 | 59.4 | 47.7 |
| | | | Content ratio (mass%) | 23.0 | 21.0 | 68.0 | 66.0 | 53.0 | 51.0 | 68.0 | 66.0 | 53.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | **Mass** (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | **Mass** (a) | 0.0 | 0.0 | 0.0 | 0.0 | 0.0 | 0.0 | 0.0 | 0.0 | 0.0 |
| | | | **Content** ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | **Mass** (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 45.0 | 45.0 | 0.0 | 0.0 | 0.0 | 0.0 | 0.0 | 0.0 | 0.0 |
| | | | Content ratio mass%) | 50.0 | 50.0 | 0.0 | 0.0 | 0.0 | 0.0 | 0.0 | 0.0 | 0.0 |
| | | 1-Propanol | **Mass** (g) | 0.0 | 0.0 | 4.5 | 4.5 | 18.0 | 18.0 | 4.5 | 4.5 | 18.0 |
| | | | Content ratio (mass%) | 0.0 | 0.0 | 5.0 | 5.0 | 20.0 | 200 | 5.0 | 5.0 | 20.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.001 | 1.8 | 0.001 | 1.8 | 0.0 | 0.0 | 0.0 |
| | | | Content ratio (mass%) | 0.0 | 0.0 | 0.001 | 2.0 | 0.001 | 2.0 | 0.0 | 0.0 | 0.0 |
| | | Oleth-4-phosphate | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.001 | 1.8 | 0.0 | 0.0 | 0.0 | 0.0 | 0.001 | 1.8 | 0.001 |
| | | | Content ratio (mass%) | 0.001 | 2.0 | 0.0 | 0.0 | 0.0 | 0.0 | 0.001 | 2.0 | 0.001 |
| | | Polyoxyethylene (18EO) alkyl (C13) ether phosphate ester | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | **Mass** (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 21)**

| | Component | Substance name | Unit | Example 181 | Example 182 | Example 183 | Example 184 | Example 185 | Example 186 | Example 187 | Example 188 | Example 189 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 45.9 | 61.2 | 59.4 | 47.7 | 45.9 | 61.2 | 59.4 | 47.7 | 45.9 |
| | | | Content ratio (mass%) | 51.0 | 68.0 | 66.0 | 53.0 | 51.0 | 68.0 | 66.0 | 53.0 | 51.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | **Mass** (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 00 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Propanol | Mass (g) | 18.0 | 0.0 | 0.0 | 0.0 | 0.0 | 0.0 | 0.0 | 0.0 | 0.0 |
| | | | Content ratio (mass%) | 20.0 | 0.0 | 0.0 | 0.0 | 0.0 | 0.0 | 0.0 | 0.0 | 0.0 |
| | | 2-Propanol | Mass (g) | 0.0 | 4.5 | 4.5 | 18.0 | 18.0 | 4.5 | 4.5 | 18.0 | 18.0 |
| | | | Content ratio (mass%) | 0.0 | 5.0 | 5.0 | 20.0 | 20.0 | 5.0 | 5.0 | 20.0 | 20.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.001 | 1.8 | 0.001 | 1.8 | 0.0 | 0.0 | 0.0 | 0.0 |
| | | | Content ratio (mass%) | 0.0 | 0.001 | 2.0 | 0.001 | 2.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 1.8 | 0.0 | 0.0 | 0.0 | 0.0 | 0.001 | 1.8 | 0.001 | 1.8 |
| | | | Content ratio mass%) | 2.0 | 0.0 | 0.0 | 0.0 | 0.0 | 0.001 | 2.0 | 0.001 | 2.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 00 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 22)**

| | Component | Substance name | Unit | Example 18.0 | Example 191 | Example 192 | Example 193 | Example 194 | Example 195 | Example 196 | Example 197 | Example 198 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 61.2 | 59.4 | 61.2 | 59.4 | 61.2 | 59.4 | 61.2 | 59.4 | 61.2 |
| | | | Content ratio (mass%) | 68.0 | 66.0 | 68.0 | 66.0 | 68.0 | 66.0 | 68.0 | 66.0 | 68.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 0.0 | 0.0 | 0.0 | 0.0 | 0.0 | 0.0 | 0.0 | 0.0 | 3.8 |
| | | | Content ratio (mass%) | 0.0 | 0.0 | 0.0 | 0.0 | 0.0 | 0.0 | 0.0 | 0.0 | 4.3 |
| | | 1-Propanol | Mass (g) | 0.0 | 0.0 | 0.0 | 0.0 | 0.0 | 0.0 | 0.0 | 0.0 | 0.2 |
| | | | Content ratio (mass%) | 0.0 | 0.0 | 0.0 | 0.0 | 0.0 | 0.0 | 0.0 | 0.0 | 0.2 |
| | | 2-Propanol | Mass (g) | 0.0 | 0.0 | 0.0 | 0.0 | 0.0 | 0.0 | 0.0 | 0.0 | 0.4 |
| | | | Content ratio (mass%) | 0.0 | 0.0 | 0.0 | 0.0 | 0.0 | 0.0 | 0.0 | 0.0 | 0.5 |
| | | 1-Butanol | Mass (g) | 4.5 | 4.5 | 4.5 | 4.5 | 0.0 | 0.0 | 0.0 | 0.0 | 0.0 |
| | | | Content ratio (mass%) | 5.0 | 5.0 | 5.0 | 5.0 | 0.0 | 0.0 | 0.0 | 0.0 | 00 |
| | | 2-Butanol | Mass (g) | 0.0 | 0.0 | 0.0 | 0.0 | 4.5 | 4.5 | 4.5 | 4.5 | 0.0 |
| | | | Content ratio (mass%) | 0.0 | 0.0 | 0.0 | 0.0 | 5.0 | 5.0 | 5.0 | 5.0 | 0.0 |
| | Phosphate ester compound (dispersant) | Steareth-2-phosphate | Mass (g) | 0.001 | 1.8 | 0.0 | 0.0 | 0.001 | 1.8 | 0.0 | 0.0 | 0.001 |
| | | | Content ratio (mass%) | 0.0 | 2.0 | 0.0 | 0.0 | 0.0 | 2.0 | 0.0 | 0.0 | 0.001 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.001 | 1.8 | 0.0 | 0.0 | 0.001 | 1.8 | 0.0 |
| | | | Content ratio mass%) | 0.0 | 0.0 | 0.0 | 2.0 | 0.0 | 0.0 | 0.0 | 2.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 00 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 23)**

| | Component | Substance name | Unit | Example 199 | Example 200 | Example 201 | Example 202 | Example 203 | Example 204 | Example 205 | Example 206 | Example 207 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 59.4 | 47.7 | 45.9 | 20.7 | 18.9 | 61.2 | 59.4 | 47.7 | 45.9 |
| | | | Content ratio (mass%) | 66.0 | 53.0 | 51.0 | 23.0 | 21.0 | 68.0 | 66.0 | 53.0 | 51.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 3.8 | 15.4 | 15.4 | 38.5 | 38.5 | 3.8 | 3.8 | 15.4 | 15.4 |
| | | | Content ratio (mass%) | 4.3 | 17.1 | 17.1 | 42.8 | 42.8 | 4.3 | 4.3 | 17.1 | 17.1 |
| | | 1-Propanol | Mass (g) | 0.2 | 0.9 | 0.9 | 2.2 | 2.2 | 0.2 | 0.2 | 0.9 | 0.9 |
| | | | Content ratio (mass%) | 0.2 | 1.0 | 1.0 | 2.5 | 2.5 | 0.2 | 0.2 | 1.0 | 1.0 |
| | | 2-Propanol | Mass (g) | 0.4 | 1.7 | 1.7 | 4.3 | 4.3 | 0.4 | 0.4 | 1.7 | 1.7 |
| | | | Content ratio (mass%) | 0.5 | 1.9 | 1.9 | 4.8 | 4.8 | 0.5 | 0.5 | 1.9 | 1.9 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 1.8 | 0.001 | 1.8 | 0.001 | 1.8 | 0.0 | 0.0 | 0.0 | 0.0 |
| | | | Content ratio (mass%) | 2.0 | 0.001 | 2.0 | 0.001 | 2.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.001 | 1.8 | 0.001 | 1.8 |
| | | | Content ratio mass%) | 0.0 | 0.0 | 0.0 | 0.0 | 0.0 | 0.001 | 2.0 | 0.001 | 2.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 24)**

| | Component | Substance name | Unit | Example 208 | Example 209 | Example 210 | Example 211 | Example 212 | Example 213 | Example 214 | Example 215 | Example 216 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 20.7 | 18.9 | 61.2 | 59.4 | 47.7 | 45.9 | 20.7 | 18.9 | 61.2 |
| | | | Content ratio (mass%) | 23.0 | 21.0 | 68.0 | 66.0 | 53.0 | 51.0 | 23.0 | 21.0 | 68.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 9.0 | 9.0 | 9.0 | 9.0 | 9.0 | 9.0 | 9.0 | 9.0 | 9.0 |
| | | | Content ratio (mass%) | 100 | 10.0 | 10.0 | 10.0 | 10.0 | 100 | 10.0 | 10.0 | 10.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.8 | 1.8 | 0.0 | 0.0 | 0.0 | 0.0 | 0.0 | 0.0 | 0.0 |
| | | | Content ratio (mass%) | 2.0 | 2.0 | 0.0 | 0.0 | 0.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 1.8 | 1.8 | 1.8 | 1.8 | 1.8 | 1.8 | 1.8 |
| | | | Content ratio (mass%) | 0.0 | 0.0 | 2.0 | 2.0 | 2.0 | 2.0 | 2.0 | 2.0 | 2.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 4.5 | 4.5 | 4.5 |
| | | | Content ratio (mass%) | 5.0 | 5.0 | 5.0 | 5.0 | 5.0 | 5.0 | 5.0 | 5.0 | 5.0 |
| | Lower alcohol (salvent) | Ethanol | Mass (g) | 38.5 | 38.5 | 4.5 | 4.5 | 18.0 | 18.0 | 45.0 | 45.0 | 4.5 |
| | | | Content ratio (mass%) | 42.8 | 42.8 | 5.0 | 5.0 | 20.0 | 20.0 | 50.0 | 50.0 | 5.0 |
| | | 1-Propanol | Mass (g) | 2.2 | 2.2 | 0.0 | 0.0 | 0.0 | 0.0 | 0.0 | 0.0 | 0.0 |
| | | | Content ratio (mass%) | 2.5 | 2.5 | 0.0 | 0.0 | 0.0 | 0.0 | 0.0 | 0.0 | 0.0 |
| | | 2-Propanol | Mass (g) | 4.3 | 4.3 | 0.0 | 0.0 | 0.0 | 0.0 | 0.0 | 0.0 | 0.0 |
| | | | Content ratio (mass%) | 4.8 | 4.8 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.001 | 1.8 | 0.001 | 1.8 | 0.001 | 1.8 | 0.0 |
| | | | Content ratio (mass%) | 0.0 | 0.0 | 0.001 | 2.0 | 0.001 | 2.0 | 0.001 | 2.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.001 | 1.8 | 0.0 | 0.0 | 0.0 | 0.0 | 0.0 | 0.0 | 0.001 |
| | | | Content ratio mass%) | 0.001 | 2.0 | 0.0 | 0.0 | 0.0 | 0.0 | 0.0 | 0.0 | 0.001 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 25)**

| | Component | Substance name | Unit | Example 217 | Example 218 | Example 219 | Example 220 | Example 221 | Example 222 | Example 223 | Example 224 | Example 225 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 59.4 | 47.7 | 45.9 | 20.7 | 18.9 | 72.9 | 68.4 | 59.4 | 50.4 |
| | | | Content ratio (mass%) | 66.0 | 53.0 | 51.0 | 23.0 | 21.0 | 81.0 | 76.0 | 66.0 | 56.0 |
| | Polyhydric alcohol | 2,5-Dimethyl-2,5-hexanediol | Mass (g) | 0.0 | 0.0 | 0.0 | 0.0 | 0.0 | 1.8 | 1.8 | 1.8 | 1.8 |
| | | | Content ratio (mass%) | 0.0 | 0.0 | 0.0 | 0.0 | 0.0 | 2.0 | 2.0 | 2.0 | 2.0 |
| | | 2,2-Dimethyl-1,3-propanediol | Mass (g) | 9.0 | 9.0 | 9.0 | 9.0 | 9.0 | 0.0 | 0.0 | 0.0 | 0.0 |
| | | | Content ratio (mass%) | 100 | 10.0 | 10.0 | 10.0 | 10.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 1.8 | 1.8 | 1.8 | 1.8 |
| | | | Content ratio (mass%) | 0.0 | 0.0 | 0.0 | 0.0 | 0.0 | 2.0 | 2.0 | 2.0 | 2.0 |
| | | Triethyl phosphate Molecular weight: 182.15 | Mass (g) | 1.8 | 1.8 | 1.8 | 1.8 | 1.8 | 0.0 | 0.0 | 0.0 | 0.0 |
| | | | Content ratio (mass%) | 2.0 | 2.0 | 2.0 | 2.0 | 2.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 4.5 | 4.5 | 4.5 | 4.5 | 4.5 | 9.0 | 18.0 | 27.0 |
| | | | Content ratio (mass%) | 5.0 | 5.0 | 5.0 | 5.0 | 5.0 | 5.0 | 10.0 | 20.0 | 30.0 |
| | Lower alcohol (solvent) | Ethanol | Mass (g) | 4.5 | 18.0 | 18.0 | 45.0 | 45.0 | 0.0 | 0.0 | 0.0 | 0.0 |
| | | | Content ratio (mass%) | 5.0 | 20.0 | 20.0 | 50.0 | 50.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 1.8 | 0.001 | 1.8 | 0.001 | 1.8 | 0.0 | 0.0 | 0.0 | 0.0 |
| | | | Content ratio (mass%) | 2.0 | 0.001 | 2.0 | 0.001 | 2.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 26)**

| | Component | Substance name | Unit | Example 226 | Example 227 | Example 228 | Example 229 | Example 230 | Example 231 | Example 232 | Example 233 | Example 234 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 72.9 | 68.4 | 59.4 | 50.4 | 11.0 | 10.3 | 9.3 | 9.3 | 11.0 |
| | | | Content ratio (mass%) | 81.0 | 76.0 | 66.0 | 56.0 | 12.2 | 11.5 | 10.3 | 10.3 | 12.2 |
| | Polyhydric alcohol | 2,5-Dimethyl-2,5-hexanediol | Mass (g) | 0.0 | 0.0 | 0.0 | 0.0 | 0.4 | 0.4 | 0.4 | 2.1 | 0.0 |
| | | | Content ratio (mass%) | 0.0 | 0.0 | 0.0 | 0.0 | 0.5 | 0.5 | 0.5 | 2.3 | 0.0 |
| | | 2,2-Dimethyl-1,3-propanediol | Mass (g) | 1.8 | 1.8 | 1.8 | 1.8 | 0.0 | 0.0 | 0.0 | 0.0 | 0.4 |
| | | | Content ratio (mass%) | 2.0 | 2.0 | 2.0 | 2.0 | 0.0 | 0.0 | 0.0 | 0.0 | 0.5 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.4 | 1.0 | 2.1 | 0.4 | 0.4 |
| | | | Content ratio (mass%) | 0.0 | 0.0 | 0.0 | 0.0 | 0.5 | 1.2 | 2.3 | 0.5 | 0.5 |
| | | Sodium dihydrogen phosphate Molecular weight 119.98 | Mass (g) | 1.8 | 1.8 | 1.8 | 1.8 | 0.0 | 0.0 | 0.0 | 0.0 | 0.0 |
| | | | Content ratio (mass%) | 2.0 | 2.0 | 2.0 | 2.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 4.5 | 9.0 | 18.0 | 27.0 | 0.0 | 0.0 | 0.0 | 0.0 | 0.0 |
| | | | Content ratio (mass%) | 5.0 | 10.0 | 20.0 | 30.0 | 0.0 | 0.0 | 0.0 | 0.0 | 0.0 |
| | Lower alcohol (solvent) | Ethanol | Mass (g) | 0.0 | 0.0 | 0.0 | 0.0 | 69.2 | 69.2 | 69.2 | 69.2 | 69.2 |
| | | | Content ratio (mass%) | 0.0 | 0.0 | 0.0 | 0.0 | 76.9 | 76.9 | 76.9 | 76.9 | 76.9 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 27)**

| | Component | Substance name | Unit | Example 235 | Example 236 | Example 237 | Example 238 | Example 239 | Example 240 | Example 241 | Example 242 | Example 243 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 10.3 | 9.3 | 9.3 | 11.0 | 11.0 | 11.0 | 10.5 | 10.5 | 10.5 |
| | | | Content ratio (mass%) | 11.5 | 10.3 | 10.3 | 12.2 | 12.2 | 12.3 | 11.7 | 11.7 | 11.7 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.4 | 0.4 | 2.1 | 0.4 | 0.4 | 0.4 | 0.4 | 0.4 | 0.4 |
| | | | Content ratio (mass%) | 0.5 | 0.5 | 2.3 | 0.5 | 0.5 | 0.5 | 0.5 | 0.5 | 0.5 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 1.0 | 2.1 | 0.4 | 0.4 | 0.4 | 0.4 | 0.4 | 0.4 | 0.4 |
| | | | Content ratio (mass%) | 1.2 | 2.3 | 0.5 | 0.5 | 0.5 | 0.5 | 0.5 | 0.5 | 0.5 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 69.2 | 69.2 | 69.2 | 0.0 | 0.0 | 59.2 | 69.2 | 0.0 | 0.0 |
| | | | Content ratio (mass%) | 76.9 | 76.9 | 76.9 | 0.0 | 0.0 | 65.7 | 76.9 | 0.0 | 0.0 |
| | | 1-Propanol | Mass (g) | 0.0 | 0.0 | 0.0 | 69.2 | 0.0 | 3.3 | 0.0 | 69.2 | 0.0 |
| | | | Content ratio (mass%) | 0.0 | 0.0 | 0.0 | 76.9 | 0.0 | 3.7 | 0.0 | 76.9 | 0.0 |
| | | 2-Propanol | Mass (g) | 0.0 | 0.0 | 0.0 | 0.0 | 69.2 | 6.6 | 0.0 | 0.0 | 69.2 |
| | | | Content ratio (mass%) | 0.0 | 0.0 | 0.0 | 0.0 | 76.9 | 7.4 | 0.0 | 0.0 | 76.9 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.5 | 0.5 | 0.5 |
| | | | Content ratio (mass%) | 0.0 | 0.0 | 0.0 | 0.0 | 0.0 | 0.0 | 0.5 | 0.5 | 0.5 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 28)**

| | Component | Substance name | Unit | Example 244 | Example 245 | Example 246 | Example 247 | Example 248 | Example 249 | Example 250 | Example 251 | Example 252 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 10.6 | 10.5 | 10.5 | 10.5 | 10.6 | 11.0 | 10.3 | 9.3 | 9.3 |
| | | | Content ratio (mass%) | 11.8 | 11.7 | 11.7 | 11.7 | 11.8 | 12.2 | 11.5 | 10.3 | 10.3 |
| | Polyhydric alcohol | 2,5-Dimethyl-2,5-hexanediol | Mass (g) | 0.0 | 0.0 | 0.0 | 0.0 | 0.0 | 0.4 | 0.4 | 0.4 | 2.1 |
| | | | Content ratio (mass%) | 0.0 | 0.0 | 0.0 | 0.0 | 0.0 | 0.5 | 0.5 | 0.5 | 2.3 |
| | | 2,2-Dimethyl-1,3-propanediol | Mass (g) | 0.4 | 0.4 | 0.4 | 0.4 | 0.4 | 0.0 | 0.0 | 0.0 | 0.0 |
| | | | Content ratio (mass%) | 0.5 | 0.5 | 0.5 | 0.5 | 0.5 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.4 | 0.4 | 0.4 | 0.4 | 0.4 | 0.0 | 0.0 | 0.0 | 0.0 |
| | | | Content ratio (mass%) | 0.5 | 0.5 | 0.5 | 0.5 | 0.5 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.4 | 1.0 | 2.1 | 0.4 |
| | | | Content ratio (mass%) | 0.0 | 0.0 | 0.0 | 0.0 | 0.0 | 0.5 | 1.2 | 2.3 | 0.5 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 59.2 | 69.2 | 0.0 | 0.0 | 59.2 | 69.2 | 69.2 | 69.2 | 69.2 |
| | | | Content ratio (mass%) | 65.7 | 76.9 | 0.0 | 0.0 | 65.7 | 76.9 | 76.9 | 76.9 | 76.9 |
| | | 1-Propanol | Mass (g) | 3.3 | 0.0 | 69.2 | 0.0 | 3.3 | 0.0 | 0.0 | 0.0 | 0.0 |
| | | | Content ratio (mass%) | 3.7 | 0.0 | 76.9 | 0.0 | 3.7 | 0.0 | 0.0 | 0.0 | 0.0 |
| | | 2-Propanol | Mass (g) | 6.6 | 0.0 | 0.0 | 69.2 | 6.6 | 0.0 | 0.0 | 0.0 | 0.0 |
| | | | Content ratio (mass%) | 7.4 | 0.0 | 0.0 | 76.9 | 7.4 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.5 | 0.0 | 0.0 | 0.0 | 0.0 | 0.0 | 0.0 | 0.0 | 0.0 |
| | | | Content ratio (mass%) | 0.5 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.5 | 0.5 | 0.5 | 0.5 | 0.0 | 0.0 | 0.0 | 0.0 |
| | | | Content ratio (mass%) | 0.0 | 0.5 | 0.5 | 0.5 | 0.5 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 29)**

| | Component | Substance name | Unit | Example 253 | Example 254 | Example 255 | Example 256 | Example 257 | Example 258 | Example 259 | Example 260 | Example 261 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 11.0 | 10.3 | 9.3 | 9.3 | 9.9 | 8.9 | 6.8 | 4.7 | 9.9 |
| | | | Content ratio (mass%) | 12.2 | 11.5 | 10.3 | 10.3 | 11.0 | 9.9 | 7.6 | 5.3 | 11.0 |
| | Polyhydric alcohol | 2,5-Dimethyl-2,5-hexanediol | Mass (g) | 0.0 | 0.0 | 0.0 | 0.0 | 0.4 | 0.4 | 0.4 | 0.4 | 0.0 |
| | | | Content ratio (mass%) | 0.0 | 0.0 | 0.0 | 0.0 | 0.5 | 0.5 | 0.5 | 0.5 | 0.0 |
| | | 2,2-Dimethyl-1,3-propanediol | Mass (g) | 0.4 | 0.4 | 0.4 | 2.1 | 0.0 | 0.0 | 0.0 | 0.0 | 0.4 |
| | | | Content ratio (mass%) | 0.5 | 0.5 | 0.5 | 2.3 | 0.0 | 0.0 | 0.0 | 0.0 | 0.5 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.4 | 0.4 | 0.4 | 0.4 | 0.4 |
| | | | Content ratio (mass%) | 0.0 | 0.0 | 0.0 | 0.0 | 0.5 | 0.5 | 0.5 | 0.5 | 0.5 |
| | | Sodium dihydrogen phosphate Molecular weight 119.98 | Mass (g) | 0.4 | 1.0 | 2.1 | 0.4 | 0.0 | 0.0 | 0.0 | 0.0 | 0.0 |
| | | | Content ratio (mass%) | 0.5 | 1.2 | 2.3 | 0.5 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 0.0 | 0.0 | 0.0 | 0.0 | 1.0 | 2.1 | 4.2 | 6.2 | 1.0 |
| | | | Content ratio (mass%) | 0.0 | 0.0 | 0.0 | 0.0 | 1.2 | 2.3 | 4.6 | 6.9 | 1.2 |
| | Lower alcohol (solvent) | Ethanol | Mass (g) | 69.2 | 69.2 | 69.2 | 69.2 | 69.2 | 69.2 | 69.2 | 69.2 | 69.2 |
| | | | Content ratio (mass%) | 76.9 | 76.9 | 76.9 | 76.9 | 76.9 | 76.9 | 76.9 | 76.9 | 76.9 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 30)**

| | Component | Substance name | Unit | Example 262 | Example 263 | Example 264 | Example 265 | Example 266 | Example 267 | Example 268 | Example 269 | Example 270 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 100 | 10.0 | 10.0 | 10.0 |
| | Water (solvent) | Water | Mass (g) | 8.9 | 6.8 | 4.7 | 9.9 | 9.9 | 10.0 | 9.5 | 9.5 | 9.5 |
| | | | Content ratio (mass%) | 9.9 | 7.6 | 5.3 | 11.0 | 11.0 | 11.1 | 10.5 | 10.5 | 10.5 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (rnass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.4 | 0.4 | 0.4 | 0.4 | 0.4 | 0.4 | 0.4 | 0.4 | 0.4 |
| | | | Content ratio (mass%) | 0.5 | 0.5 | 0.5 | 0.5 | 0.5 | 0.5 | 0.5 | 0.5 | 0.5 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.4 | 0.4 | 0.4 | 0.4 | 0.4 | 0.4 | 0.4 | 0.4 | 0.4 |
| | | | Content ratio (mass%) | 0.5 | 0.5 | 0.5 | 0.5 | 0.5 | 0.5 | 0.5 | 0.5 | 0.5 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 2.1 | 4.2 | 6.2 | 1.0 | 1.0 | 1.0 | 1.0 | 1.0 | 1.0 |
| | | | Content ratio (mass%) | 2.3 | 4.6 | 6.9 | 1.2 | 1.2 | 1.2 | 1.2 | 1.2 | 1.2 |
| | Lower alcohol (solvent) | Ethanol | Mass (g) | 69.2 | 69.2 | 69.2 | 0.0 | 0.0 | 59.2 | 69.2 | 0.0 | 0.0 |
| | | | Content ratio (mass%) | 76.9 | 76.9 | 76.9 | 0.0 | 0.0 | 65.7 | 76.9 | 0.0 | 0.0 |
| | | 1-Propanol | Mass (g) | 0.0 | 0.0 | 0.0 | 69.2 | 0.0 | 3.3 | 0.0 | 69.2 | 0.0 |
| | | | Content ratio (mass%) | 0.0 | 0.0 | 0.0 | 76.9 | 0.0 | 3.7 | 0.0 | 76.9 | 0.0 |
| | | 2-Propanol | Mass (g) | 0.0 | 0.0 | 0.0 | 0.0 | 69.2 | 6.6 | 0.0 | 0.0 | 69.2 |
| | | | Content ratio (mass%) | 0.0 | 0.0 | 0.0 | 0.0 | 76.9 | 7.4 | 0.0 | 0.0 | 76.9 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.5 | 0.5 | 0.5 |
| | | | Content ratio (mass%) | 0.0 | 0.0 | 0.0 | 0.0 | 0.0 | 0.0 | 0.5 | 0.5 | 0.5 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFCS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Liaht transmittance (cuprous oxide) | | | B | B | B | B | B | B | B | B | B |

**(TABLE 31)**

| | Component | Substance name | Unit | Example 271 | Example 272 | Example 273 | Example 274 | Example 275 | Example 276 | Example 277 | Example 278 | Example 279 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio 1 mass%) | 10.0 | 10.0 | 10.0 | 10.0 | 10.0 | 10.0 | 10.0 | 10.0 | 10.0 |
| | Water (salvent) | Water | Mass (g) | 9.5 | 9.5 | 9.5 | 9.5 | 9.5 | 9.9 | 8.9 | 6.8 | 4.7 |
| | | | Content ratio (mass%) | 10.6 | 10.5 | 10.5 | 10.5 | 10.6 | 11.0 | 9.9 | 7.6 | 5.3 |
| | Polyhydric alcohol | 2,5-Dimethyl-2.5-hexanediol | Mass (g) | 0.0 | 0.0 | 0.0 | 0.0 | 0.0 | 0.4 | 0.4 | 0.4 | 0.4 |
| | | | Content ratio (mass%) | 0.0 | 0.0 | 0.0 | 0.0 | 0.0 | 0.5 | 0.5 | 0.5 | 0.5 |
| | | 2 2-Dimethyl-1,3-propanediol | Mass (g) | 0.4 | 0.4 | 0.4 | 0.4 | 0.4 | 0.0 | 0.0 | 0.0 | 0.0 |
| | | | Content ratio (mass%) | 0.5 | 0.5 | 0.5 | 0.5 | 0.5 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.4 | 0.4 | 0.4 | 0.4 | 0.4 | 0.0 | 0.0 | 0.0 | 0.0 |
| | | | Content ratio (mass%) | 0.5 | 0.5 | 0.5 | 0.5 | 0.5 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.4 | 0.4 | 0.4 | 0.4 |
| | | | Content ratio (mass%) | 0.0 | 0.0 | 0.0 | 0.0 | 0.0 | 0.5 | 0.5 | 0.5 | 0.5 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 1.0 | 1.0 | 1.0 | 1.0 | 1.0 | 1.0 | 2.1 | 4.2 | 6.2 |
| | | | Content ratio (mass%) | 1.2 | 1.2 | 1.2 | 1.2 | 1.2 | 1.2 | 2.3 | 4.6 | 6.9 |
| | Lower alcohol (salvent) | Ethanol | Mass (g) | 59.2 | 69.2 | 0.0 | 0.0 | 59.2 | 69.2 | 69.2 | 69.2 | 69.2 |
| | | | Content ratio (mass%) | 65.7 | 76.9 | 0.0 | 0.0 | 65.7 | 76.9 | 76.9 | 76.9 | 76.9 |
| | | 1-Propanol | Mass (g) | 3.3 | 0.0 | 69.2 | 0.0 | 3.3 | 0.0 | 0.0 | 0.0 | 0.0 |
| | | | Content ratio (mass%) | 3.7 | 0.0 | 76.9 | 0.0 | 3.7 | 0.0 | 0.0 | 0.0 | 0.0 |
| | | 2-Propanol | Mass (g) | 6.6 | 0.0 | 0.0 | 69.2 | 6.6 | 0.0 | 0.0 | 0.0 | 0.0 |
| | | | Content ratio (mass%) | 7.4 | 0.0 | 0.0 | 76.9 | 7.4 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0 0 | 0.0 | 0.0 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.5 | 0.0 | 0.0 | 0.0 | 0.0 | 0.0 | 0.0 | 0.0 | 0.0 |
| | | | Content ratio (mass%) | 0.5 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.5 | 0.5 | 0.5 | 0.5 | 0.0 | 0.0 | 0.0 | 0.0 |
| | | | Content ratio (mass%) | 0.0 | 0.5 | 0.5 | 0.5 | 0.5 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 00 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 32)**

| | Component | Substance name | Unit | Example 280 | Example 281 | Example 282 | Example 283 | Example 284 | Example 285 | Example 286 | Example 287 | Example 288 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 9.9 | 8.9 | 6.8 | 4.7 | 1.1 | 1.1 | 1.0 | 0.8 | 0.8 |
| | | | Content ratio (mass%) | 11.0 | 9.9 | 7.6 | 5.3 | 1.2 | 1.2 | 1.1 | 0.9 | 0.9 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 0.4 | 0.4 | 0.4 | 0.4 | 0.01 | 0.01 | 0.01 | 0.01 | 0.2 |
| | | | Content ratio (mass%) | 0.5 | 0.5 | 0.5 | 0.5 | 0.01 | 0.01 | 001 | 0.01 | 0.2 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.01 | 0.0 | 0.0 | 0.0 | 0.0 |
| | | | Content ratio (mass%) | 0.0 | 0.0 | 0.0 | 0.0 | 0.01 | 0.0 | 0.0 | 0.0 | 0.0 |
| | | Sodium dihydrogen phosphate Molecular weight 119.98 | Mass (g) | 0.4 | 0.4 | 0.4 | 0.4 | 0.0 | 0.01 | 0.07 | 0.2 | 0.01 |
| | | | Content ratio (mass%) | 0.5 | 0.5 | 0.5 | 0.5 | 0.0 | 0.01 | 0.07 | 0.2 | 0.01 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 1.0 | 2.1 | 4.2 | 6.2 | 0.0 | 0.0 | 0.0 | 0.0 | 0.0 |
| | | | Content ratio (mass%) | 1.2 | 2.3 | 4.6 | 6.9 | 0.0 | 0.0 | 0.0 | 0.0 | 0.0 |
| | Lower alcohol (solvent) | Ethanol | Mass (g) | 69.2 | 69.2 | 69.2 | 69.2 | 6.8 | 6.8 | 6.8 | 6.8 | 6.8 |
| | | | Content ratio (mass%) | 76.9 | 76.9 | 76.9 | 76.9 | 7.6 | 7.6 | 7.6 | 7.6 | 7.6 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.1 | 0.1 | 0.1 | 0.1 | 0.1 |
| | | | Content ratio (mass%) | 0.0 | 0.0 | 0.0 | 0.0 | 0.1 | 0.1 | 0.1 | 0.1 | 0.1 |
| | High boiling point solvent (solvent) | α-Terpineol | Mass (g) | 0.0 | 0.0 | 0.0 | 0.0 | 73.0 | 73.0 | 73.0 | 73.0 | 73.0 |
| | | | Content ratio (mass%) | 0.0 | 0.0 | 0.0 | 0.0 | 81.1 | 81.1 | 81.1 | 81.1 | 81.1 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 33)**

| | Component | Substance name | Unit | Example 289 | Example 290 | Example 291 | Example 292 | Example 293 | Example 294 | Example 295 | Example 296 | Example 297 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 1.1 | 1.1 | 1.1 | 1.1 | 1.1 | 1.1 | 1.1 | 1.1 | 1.1 |
| | | | Content ratio (mass%) | 1.2 | 1.2 | 1.2 | 1.2 | 1.2 | 1.2 | 1.2 | 1.2 | 1.2 |
| | Polyhydric alcohol | 2,5-Dimethyl-2.5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 0.01 | 0.01 | 0.01 | 0.01 | 0.01 | 0.01 | 0.01 | 0.01 | 0.01 |
| | | | Content ratio (mass%) | 0.01 | 001 | 0.01 | 0.01 | 0.01 | 0.01 | 0.01 | 0.01 | 0.01 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.01 | 0.01 | 0.01 | 0.01 | 0.01 | 0.01 | 0.01 | 0.01 | 0.01 |
| | | | Content ratio (mass%) | 0.01 | 0.01 | 0.01 | 0.01 | 0.01 | 0.01 | 0.01 | 0.01 | 0.01 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 6.8 | 6.8 | 0.0 | 0.0 | 0.0 | 0.0 | 6.8 |
| | | | Content ratio (mass%) | 0.0 | 0.0 | 7.6 | 7.6 | 0.0 | 0.0 | 0.0 | 0.0 | 7.6 |
| | | 1-Propanol | Mass (g) | 6.8 | 0.0 | 0.0 | 0.0 | 6.8 | 6.8 | 0.0 | 0.0 | 0.0 |
| | | | Content ratio (mass%) | 7.6 | 0.0 | 0.0 | 0.0 | 7.6 | 7.6 | 0.0 | 0.0 | 0.0 |
| | | 2-Propanol | Mass (g) | 0.0 | 6.8 | 0.0 | 0.0 | 0.0 | 0.0 | 6.8 | 6.8 | 0.0 |
| | | | Content ratio (mass%) | 0.0 | 7.6 | 0.0 | 0.0 | 0.0 | 0.0 | 7.6 | 7.6 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.1 | 0.0 | 0.1 | 0.0 | 0.1 | 0.0 | 0.0 |
| | | | Content ratio (mass%) | 0.0 | 0.0 | 0.1 | 0.0 | 0.1 | 0.0 | 0.1 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.1 | 0.0 | 0.1 | 0.0 | 0.1 | 0.0 |
| | | | Content ratio (mass%) | 0.0 | 0.0 | 0.0 | 0.1 | 0.0 | 0.1 | 0.0 | 0.1 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.1 |
| | | | Content ratio (mass%) | 0.0 | 0.0 | 0.0 | 0.0 | 0.0 | 0.0 | 0.0 | 0.0 | 0.1 |
| | | CRODAFOS O3A | Mass (g) | 0.1 | 0.1 | 0.0 | 0.0 | 0.0 | 0.0 | 0.0 | 0.0 | 0.0 |
| | | | Content ratio (mass%) | 0.1 | 0.1 | 0.0 | 0.0 | 0.0 | 0.0 | 0.0 | 0.0 | 0.0 |
| | High boiling point solvent (solvent) | *α*-Terpineol | Mass (g) | 73.0 | 73.0 | 73.0 | 73.0 | 73.0 | 73.0 | 73.0 | 73.0 | 73.0 |
| | | | Content ratio (mass%) | 81.1 | 81.1 | 81.1 | 81.1 | 81.1 | 81.1 | 81.1 | 81.1 | 81.1 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 34)**

| | Component | Substance name | Unit | Example 298 | Example 299 | Example 300 | Example 301 | Example 302 | Example 303 | Example 304 | Example 305 | Example 306 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 1.2 | 1.2 | 1.1 | 0.9 | 0.9 | 1.1 | 1.1 | 1.0 | 0.8 |
| | | | Content ratio (mass%) | 1.3 | 1.3 | 1.2 | 1.1 | 1.1 | 1.2 | 1.2 | 1.1 | 0.9 |
| | Polyhydric alcohol | 2,5-Dimethyl-2.5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 0.01 | 0.01 | 0.01 | 0.01 | 0.2 | 0.01 | 0.01 | 0.01 | 0.01 |
| | | | Content ratio (mass%) | 0.01 | 001 | 0.01 | 0.01 | 0.2 | 0.01 | 0.01 | 0.01 | 0.01 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.01 | 0.0 | 0.0 | 0.0 | 0.0 | 0.01 | 0.0 | 0.0 | 0.0 |
| | | | Content ratio (mass%) | 0.01 | 0.0 | 0.0 | 0.0 | 0.0 | 0.01 | 0.0 | 0.0 | 0.0 |
| | | Sodium dihydrogen phosphate Molecular weight 119.98 | Mass (g) | 0.0 | 0.01 | 0.07 | 0.2 | 0.01 | 0.0 | 0.01 | 0.07 | 0.2 |
| | | | Content ratio (mass%) | 0.0 | 0.01 | 0.1 | 0.2 | 0.01 | 0.0 | 0.01 | 0.1 | 0.2 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 6.8 | 6.8 | 6.8 | 6.8 | 6.8 | 6.8 | 6.8 | 6.8 | 6.8 |
| | | | Content ratio (mass%) | 7.6 | 7.6 | 7.6 | 7.6 | 7.6 | 7.6 | 7.6 | 7.6 | 7.6 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.1 | 0.1 | 0.1 | 0.1 |
| | | | Content ratio (mass%) | 0.0 | 0.0 | 0.0 | 0.0 | 0.0 | 0.1 | 0.1 | 0.1 | 0.1 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 73.0 | 73.0 | 73.0 | 73.0 | 73.0 | 0.0 | 0.0 | 0.0 | 0.0 |
| | | | Content ratio (mass%) | 81.1 | 81.1 | 81.1 | 81.1 | 81.1 | 0.0 | 0.0 | 0.0 | 0.0 |
| | | Dipropylene glycol monomethyl ether | Mass (g) | 0.0 | 0.0 | 0.0 | 0.0 | 0.0 | 73.0 | 73.0 | 73.0 | 73.0 |
| | | | Content ratio (mass%) | 0.0 | 0.0 | 0.0 | 0.0 | 0.0 | 81.1 | 81.1 | 81.1 | 81.1 |
| Evaluation results | Dispersibility | | | B | B | B | B | B | B | B | B | B |
| | Sinterability | | | A | A | A | A | A | B | B | B | B |
| | Light transmittance (cuprous oxide) | | | B | B | B | B | B | B | B | B | B |

**(TABLE 35)**

| | Component | Substance name | Unit | Example 307 | Example 308 | Example 309 | Example 310 | Example 311 | Example 312 | Example 313 | Example 314 | Example 315 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 0.8 | 1.0 | 1.0 | 1.0 | 1.0 | 1.0 | 0.8 | 0.6 | 0.4 |
| | | | Content ratio (mass%) | 0.9 | 1.1 | 1.1 | 1.1 | 1.1 | 1.1 | 0.9 | 0.7 | 0.5 |
| | Polyhydric alcohol | 2,5-Dimethyl-2.5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2 2-Dimethyl-1,3-propanediol | Mass (g) | 0.2 | 0.01 | 0.01 | 0.01 | 0.0 | 0.01 | 0.01 | 0.01 | 0.01 |
| | | | Content ratio (mass%) | 0.2 | 001 | 0.01 | 0.01 | 0.0 | 0.01 | 0.01 | 0.01 | 0.01 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.01 | 0.01 | 0.01 | 0.01 | 0.0 | 0.0 | 0.0 | 0.0 |
| | | | Content ratio (mass%) | 0.0 | 0.01 | 0.01 | 0.01 | 0.01 | 0.0 | 0.0 | 0.0 | 0.0 |
| | | Sodium dihydrogen phosphate Molecular weight 119.98 | Mass (g) | 0.01 | 0.0 | 0.0 | 0.0 | 0.0 | 0.01 | 0.01 | 0.01 | 0.01 |
| | | | Content ratio (mass%) | 0.01 | 0.0 | 0.0 | 0.0 | 0.0 | 0.01 | 0.01 | 0.01 | 0.01 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 0.0 | 0.0 | 0.0 | 0.07 | 0.07 | 0.2 | 0.4 | 0.6 |
| | | | Content ratio (mass%) | 0.0 | 0.0 | 0.0 | 0.0 | 0.1 | 0.1 | 0.2 | 0.5 | 0.7 |
| | Lower alcohol (solvent) | Ethanol | Mass (g) | 6.8 | 6.8 | 6.8 | 6.8 | 6.8 | 6.8 | 6.8 | 6.8 | 6.8 |
| | | | Content ratio (mass%) | 7.6 | 7.6 | 7.6 | 7.6 | 7.6 | 7.6 | 7.6 | 7.6 | 7.6 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.1 | 0.0 | 0.0 | 0.0 | 0.0 | 0.0 | 0.0 | 0.0 |
| | | | Content ratio (mass%) | 0.0 | 0.1 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.1 | 0.0 | 0.0 | 0.0 | 0.0 | 0.0 | 0.0 |
| | | | Content ratio (mass%) | 0.0 | 0.0 | 0.1 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.1 | 0.0 | 0.0 | 0.0 | 0.0 | 0.0 |
| | | | Content ratio (mass%) | 0.0 | 0.0 | 0.0 | 0.1 | 0.0 | 0.0 | 0.0 | 0.0 | 0.0 |
| | | CRODAFOS O3A | Mass (g) | 0.1 | 0.1 | 0.1 | 0.1 | 0.1 | 0.1 | 0.1 | 0.1 | 0.1 |
| | | | Content ratio (mass%) | 0.1 | 0.1 | 0.1 | 0.1 | 0.1 | 0.1 | 0.1 | 0.1 | 0.1 |
| | High boiling point solvent (solvent) | α-Terpineol | Mass (g) | 0.0 | 0.0 | 0.0 | 0.0 | 73.0 | 73.0 | 73.0 | 73.0 | 73.0 |
| | | | Content ratio (mass%) | 0.0 | 0.0 | 0.0 | 0.0 | 81.1 | 81.1 | 81.1 | 81.1 | 81.1 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 73.0 | 73.0 | 73.0 | 73.0 | 0.0 | 0.0 | 0.0 | 0.0 | 0.0 |
| | | | Content ratio (mass%) | 81.1 | 81.1 | 81.1 | 81.1 | 0.0 | 0.0 | 0.0 | 0.0 | 0.0 |
| Evaluation results | Dispersibility | | | B | B | B | B | B | B | B | B | B |
| | Sinterability | | | B | B | B | B | A | A | A | A | A |
| | Light transmittance (cuprous oxide) | | | B | B | B | B | B | B | B | B | B |

**(TABLE 36)**

| | Component | Substance name | Unit | Example 316 | Example 317 | Example 318 | Example 319 | Example 320 | Example 321 | Example 322 | Example 323 | Example 324 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 1.0 | 1.0 | 1.0 | 1.0 | 1.0 | 1.0 | 1.0 | 1.0 | 1.0 |
| | | | Content ratio (mass%) | 1.1 | 1.1 | 1.1 | 1.1 | 1.1 | 1.1 | 1.1 | 1.1 | 1.1 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.01 | 0.01 | 0.01 | 0.01 | 0.01 | 0.01 | 0.01 | 0.01 | 0.01 |
| | | | Content ratio (mass%) | 0.01 | 001 | 0.01 | 0.01 | 0.01 | 0.01 | 001 | 0.01 | 0.01 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 00 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.01 | 001 | 0.01 | 0.01 | 0.01 | 0.01 | 0.01 | 0.01 | 0.01 |
| | | | Content ratio (mass%) | 0.01 | 0.01 | 0.01 | 0.01 | 0.01 | 0.01 | 0.01 | 0.01 | 0.01 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.07 | 0.07 | 0.07 | 0.07 | 0.07 | 0.07 | 0.07 | 0.07 | 0.07 |
| | | | Content ratio (mass%) | 0.1 | 0.1 | 0.1 | 0.1 | 0.1 | 0.1 | 0.1 | 0.1 | 0.1 |
| | Lower alcohol (solvent) | Ethanol | Mass (g) | 0.0 | 0.0 | 6.8 | 6.8 | 0.0 | 0.0 | 0.0 | 0.0 | 6.8 |
| | | | Content ratio (mass%) | 0.0 | 0.0 | 7.6 | 7.6 | 0.0 | 0.0 | 0.0 | 0.0 | 7.6 |
| | | 1-Propanol | Mass (g) | 6.8 | 0.0 | 0.0 | 0.0 | 6.8 | 6.8 | 0.0 | 0.0 | 0.0 |
| | | | Content ratio (mass%) | 7.6 | 0.0 | 0.0 | 0.0 | 7.6 | 7.6 | 0.0 | 0.0 | 0.0 |
| | | 2-Propanol | Mass (g) | 0.0 | 6.8 | 0.0 | 0.0 | 0.0 | 0.0 | 6.8 | 6.8 | 0.0 |
| | | | Content ratio (mass%) | 0.0 | 7.6 | 0.0 | 0.0 | 0.0 | 0.0 | 7.6 | 7.6 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.1 | 0.0 | 0.1 | 0.0 | 0.1 | 0.0 | 0.0 |
| | | | Content ratio (mass%) | 0.0 | 0.0 | 0.1 | 0.0 | 0.1 | 0.0 | 0.1 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.1 | 0.0 | 0.1 | 0.0 | 0.1 | 0.0 |
| | | | Content ratio (mass%) | 0.0 | 0.0 | 0.0 | 0.1 | 0.0 | 0.1 | 0.0 | 0.1 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.1 |
| | | | Content ratio (mass%) | 0.0 | 0.0 | 0.0 | 00 | 0.0 | 0.0 | 0.0 | 0.0 | 0.1 |
| | | CRODAFOS O3A | Mass (g) | 0.1 | 0.1 | 0.0 | 0.0 | 0.0 | 0.0 | 0.0 | 0.0 | 0.0 |
| | | | Content ratio (mass%) | 0.1 | 0.1 | 0.0 | 0.0 | 0.0 | 0.0 | 0.0 | 0.0 | 0.0 |
| | High boiling point solvent (solvent) | α-Terpineol | Mass (g) | 73.0 | 73.0 | 73.0 | 73.0 | 73.0 | 73.0 | 73.0 | 73.0 | 73.0 |
| | | | Content ratio (mass%) | 81.1 | 81.1 | 81.1 | 81.1 | 81.1 | 81.1 | 81.1 | 81.1 | 81.1 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | A | A | A | A | A | A | A | A | A |
| | Light transmittance (cuprous oxide) | | | B | B | B | B | B | B | B | B | B |

**(TABLE 37)**

| | Component | Substance name | Unit | Example 325 | Example 326 | Example 327 | Example 328 | Example 329 | Example 330 | Example 331 | Example 332 | Example 333 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 1.1 | 1.1 | 0.9 | 0.7 | 0.5 | 1.0 | 1.0 | 0.8 | 0.6 |
| | | | Content ratio (mass%) | 1.2 | 1.2 | 1.0 | 0.8 | 0.6 | 1.1 | 1.1 | 0.9 | 0.7 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.01 | 0.01 | 0.01 | 0.01 | 0.01 | 0.01 | 0.01 | 0.01 | 0.01 |
| | | | Content ratio (mass%) | 0.01 | 001 | 0.01 | 0.01 | 0.01 | 0.01 | 001 | 0.01 | 0.01 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.01 | 0.0 | 0.0 | 0.0 | 0.0 | 0.01 | 0.0 | 0.0 | 0.0 |
| | | | Content ratio (mass%) | 0.01 | 0.0 | 0.0 | 0.0 | 0.0 | 0.01 | 0.0 | 0.0 | 0.0 |
| | | Sodium dihydrogen phosphate Molecular weight 119.98 | Mass (g) | 0.0 | 0.01 | 0.01 | 0.01 | 0.01 | 0.0 | 0.01 | 0.01 | 0.01 |
| | | | Content ratio (mass%) | 0.0 | 0.01 | 0.01 | 0.01 | 0.01 | 0.0 | 0.01 | 0.01 | 0.01 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.07 | 0.07 | 0.2 | 0.4 | 0.6 | 0.07 | 0.07 | 0.2 | 0.4 |
| | | | Content ratio (mass%) | 0.1 | 0.1 | 0.2 | 0.5 | 0.7 | 0.1 | 0.1 | 0.2 | 0.5 |
| | Lower alcohol (solvent) | Ethanol | Mass (g) | 6.8 | 6.8 | 6.8 | 6.8 | 6.8 | 6.8 | 6.8 | 6.8 | 6.8 |
| | | | Content ratio (mass%) | 7.6 | 7.6 | 7.6 | 7.6 | 7.6 | 7.6 | 7.6 | 7.6 | 7.6 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.1 | 0.1 | 0.1 | 0.1 |
| | | | Content ratio (mass%) | 0.0 | 0.0 | 0.0 | 0.0 | 0.0 | 0.1 | 0.1 | 0.1 | 0.1 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 73.0 | 73.0 | 73.0 | 73.0 | 73.0 | 0.0 | 0.0 | 0.0 | 0.0 |
| | | | Content ratio (mass%) | 81.1 | 81.1 | 81.1 | 81.1 | 81.1 | 0.0 | 0.0 | 0.0 | 0.0 |
| | | Dipropylene glycol monomethyl ether | Mass (g) | 0.0 | 0.0 | 0.0 | 0.0 | 0.0 | 73.0 | 73.0 | 73.0 | 73.0 |
| | | | Content ratio (mass%) | 0.0 | 0.0 | 0.0 | 0.0 | 0.0 | 81.1 | 81.1 | 81.1 | 81.1 |
| Evaluation results | Dispersibility | | | B | B | B | B | B | B | B | B | B |
| | Sinterability | | | A | A | A | A | A | B | B | B | B |
| | Light transmittance (cuprous oxide) | | | B | B | B | B | B | B | B | B | B |

**(TABLE 38)**

| | Component | Substance name | Unit | Example 334 | Example 335 | Example 336 | Example 337 | Comparative Example 1 | Comparative Example 2 | Comparative Example 3 | Comparative Example 4 | Comparative Example 5 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 0.4 | 1.0 | 1.0 | 1.0 | 79.2 | 79.2 | 79.2 | 79.2 | 74.7 |
| | | | Content ratio (mass%) | 0.5 | 1.1 | 1.1 | 1.1 | 88.0 | 88.0 | 88.0 | 88.0 | 83.0 |
| | Polyhydric alcohol | 2,5-Dimethyl-2,5-hexanediol | Mass (g) | 0.0 | 0.0 | 0.0 | 0.0 | 1.8 | 0.0 | 0.0 | 0.0 | 1.8 |
| | | | Content ratio (mass%) | 0.0 | 0.0 | 0.0 | 0.0 | 2.0 | 0.0 | 0.0 | 0.0 | 2.0 |
| | | 2,2-Dimethyl-1,3-propanediol | Mass (g) | 0.01 | 0.01 | 0.01 | 0.01 | 0.0 | 1.8 | 0.0 | 0.0 | 0.0 |
| | | | Content ratio (mass%) | 0.01 | 001 | 0.01 | 0.01 | 0.0 | 2.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 1.8 | 0.0 | 0.0 |
| | | | Content ratio (mass%) | 0.0 | 0.0 | 0.0 | 0.0 | 0.0 | 0.0 | 2.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 1.8 | 0.0 |
| | | | Content ratio (mass%) | 0.0 | 0.0 | 0.0 | 0.0 | 0.0 | 0.0 | 0.0 | 2.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 001 | 0.01 | 0.01 | 0.0 | 0.0 | 0.0 | 0.0 | 0.0 |
| | | | Content ratio (mass%) | 0.0 | 0.01 | 0.01 | 0.01 | 0.0 | 0.0 | 0.0 | 0.0 | 0.0 |
| | | Sodium dihydrogen phosphate Molecular weight 119.98 | Mass (g) | 0.01 | 0.0 | 0.0 | 0.0 | 0.0 | 0.0 | 0.0 | 0.0 | 0.0 |
| | | | Content ratio (mass%) | 0.01 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 4.5 |
| | | | Content ratio (mass%) | 0.0 | 0.0 | 0.0 | 0.0 | 0.0 | 0.0 | 0.0 | 0.0 | 5.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.6 | 0.07 | 0.07 | 0.07 | 0.0 | 0.0 | 0.0 | 0.0 | 0.0 |
| | | | Content ratio (mass%) | 0.7 | 0.1 | 0.1 | 0.1 | 0.0 | 0.0 | 0.0 | 0.0 | 0.0 |
| | Lower alcohol (solvent) | Ethanol | Mass (g) | 6.8 | 6.8 | 6.8 | 6.8 | 0.0 | 0.0 | 0.0 | 0.0 | 0.0 |
| | | | Content ratio (mass%) | 7.6 | 7.6 | 7.6 | 7.6 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 00 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.1 | 0.0 | 0.0 | 0.0 | 0.0 | 0.0 | 0.0 | 0.0 |
| | | | Content ratio (mass%) | 0.0 | 0.1 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.1 | 0.0 | 0.0 | 0.0 | 0.0 | 0.0 | 0.0 |
| | | | Content ratio (mass%) | 0.0 | 0.0 | 0.1 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.1 | 0.0 | 0.0 | 0.0 | 0.0 | 0.0 |
| | | | Content ratio (mass%) | 0.0 | 0.0 | 0.0 | 0.1 | 0.0 | 0.0 | 0.0 | 0.0 | 0.0 |
| | | CRODAFOS O3A | Mass (g) | 0.1 | 0.0 | 0.0 | 0.0 | 0.0 | 0.0 | 0.0 | 0.0 | 0.0 |
| | | | Content ratio (mass%) | 0.1 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 73.0 | 73.0 | 73.0 | 73.0 | 0.0 | 0.0 | 0.0 | 0.0 | 0.0 |
| | | | Content ratio (mass%) | 81.1 | 81.1 | 81.1 | 81.1 | 0.0 | 0.0 | 0.0 | 0.0 | 0.0 |
| Evaluation results | Dispersibility | | | B | B | B | B | B | B | B | B | B |
| | Sinterability | | | B | B | B | B | B | B | B | B | B |
| | Light transmittance (cuprous oxide) | | | B | B | B | B | C | C | C | C | C |

**(TABLE 39)**

| | Component | Substance name | Unit | Comparative Example 6 | Compara-Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 74.7 | 74.7 | 74.7 | 74.7 | 74.7 | 74.7 | 74.7 | 11.4 | 11.4 |
| | | | Content ratio (mass%) | 83.0 | 83.0 | 83.0 | 83.0 | 83.0 | 83.0 | 83.0 | 12.6 | 12.6 |
| | Polyhydric alcohol | 2,5-Dimethyl-2,5-hexanediol | Mass (g) | 0.0 | 1.8 | 0.0 | 1.8 | 0.0 | 1.8 | 0.0 | 0.4 | 0.0 |
| | | | Content ratio (mass%) | 0.0 | 2.0 | 0.0 | 2.0 | 0.0 | 2.0 | 0.0 | 0.5 | 0.0 |
| | | 2,2-Dimethyl-1,3-propanediol | Mass (g) | 1.8 | 0.0 | 1.8 | 0.0 | 1.8 | 0.0 | 1.8 | 0.0 | 0.4 |
| | | | Content ratio (mass%) | 2.0 | 0.0 | 2.0 | 0.0 | 2.0 | 0.0 | 2.0 | 0.0 | 0.5 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 4.5 | 0.0 | 0.0 | 0.0 | 0.0 | 0.0 | 0.0 | 0.0 | 0.0 |
| | | | Content ratio (mass%) | 5.0 | 0.0 | 0.0 | 0.0 | 0.0 | 0.0 | 0.0 | 0.0 | 0.0 |
| | | Triethylene glycol monomethyl ether | Mass (g) | 0.0 | 4.5 | 4.5 | 0.0 | 0.0 | 0.0 | 0.0 | 0.0 | 0.0 |
| | | | Content ratio (mass%) | 0.0 | 5.0 | 5.0 | 0.0 | 0.0 | 0.0 | 0.0 | 0.0 | 0.0 |
| | | Triethylene glycol monobutyl ether | Mass (g) | 0.0 | 0.0 | 0.0 | 4.5 | 4.5 | 0.0 | 0.0 | 0.0 | 0.0 |
| | | | Content ratio (mass%) | 0.0 | 0.0 | 0.0 | 5.0 | 5.0 | 0.0 | 0.0 | 0.0 | 0.0 |
| | | Polyethylene glycol monomethyl ether | Mass (g) | 0.0 | 0.0 | 0.0 | 0.0 | 0.0 | 4.5 | 4.5 | 0.0 | 0.0 |
| | | | Content ratio (mass%) | 0.0 | 0.0 | 0.0 | 0.0 | 0.0 | 5.0 | 5.0 | 0.0 | 0.0 |
| | Lower alcohol (salvent) | Ethanol | Mass (g) | 0.0 | 0.0 | 0.0 | 0.0 | 0.0 | 0.0 | 0.0 | 69.2 | 69.2 |
| | | | Content ratio (mass%) | 0.0 | 0.0 | 0.0 | 0.0 | 0.0 | 0.0 | 0.0 | 76.9 | 76.9 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 00 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | B | B | B | B | B | B | B | B | B |
| | Light transmittance (cuprous oxide) | | | C | C | C | C | C | C | C | C | C |

**(TABLE 40)**

| | Component | Substance name | Unit | Comparative Example 15 | Comparative Example 16 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (salvent) | Water | Mass (g) | 11.4 | 11.4 | 10.3 | 10.3 | 10.3 | 10.3 | 10.3 | 10.3 | 10.3 |
| | | | Content ratio (mass%) | 12.6 | 12.6 | 11.5 | 11.5 | 11.5 | 11.5 | 11.5 | 11.5 | 11.5 |
| | Polyhydric alcohol | 2,5-Dimethyl-2,5-hexanediol | Mass (g) | 0.0 | 0.0 | 0.4 | 0.0 | 0.4 | 0.0 | 0.4 | 0.0 | 0.4 |
| | | | Content ratio (mass%) | 0.0 | 0.0 | 0.5 | 0.0 | 0.5 | 0.0 | 0.5 | 0.0 | 0.5 |
| | | 2,2-Dimethyl-1,3-propanediol | Mass (g) | 0.0 | 0.0 | 0.0 | 0.4 | 0.0 | 0.4 | 0.0 | 0.4 | 0.0 |
| | | | Content ratio (mass%) | 0.0 | 0.0 | 0.0 | 0.5 | 0.0 | 0.5 | 0.0 | 0.5 | 0.0 |
| | | 1,1,1-Tris(hydroxymethyl)propane | Mass (g) | 0.4 | 0.0 | 0.0 | 0.0 | 0.0 | 0.0 | 0.0 | 0.0 | 0.0 |
| | | | Content ratio (mass%) | 0.5 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.4 | 0.0 | 0.0 | 0.0 | 0.0 | 0.0 | 0.0 | 0.0 |
| | | | Content ratio (mass%) | 0.0 | 0.5 | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 3,5-Dihydroxybenzoic acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Glutaric acid | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Ethylenediamine | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphoric acid compound (additive) | Trimethyl phosphate Molecular weight: 140.08 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 1.0 | 1.0 | 0.0 | 0.0 | 0.0 | 0.0 | 0.0 |
| | | | Content ratio (mass%) | 0.0 | 0.0 | 1.2 | 1.2 | 0.0 | 0.0 | 0.0 | 0.0 | 0.0 |
| | | Triethylene glycol monomethyl ether | Mass (g) | 0.0 | 0.0 | 0.0 | 0.0 | 1.0 | 1.0 | 0.0 | 0.0 | 0.0 |
| | | | Content ratio (mass%) | 0.0 | 0.0 | 0.0 | 0.0 | 1.2 | 1.2 | 0.0 | 0.0 | 0.0 |
| | | Triethylene glycol monobutyl ether | Mass (g) | 0.0 | 0.0 | 0.0 | 0.0 | 0.0 | 0.0 | 1.0 | 1.0 | 0.0 |
| | | | Content ratio (mass%) | 0.0 | 0.0 | 0.0 | 0.0 | 0.0 | 0.0 | 1.2 | 1.2 | 0.0 |
| | | Polyethylene glycol monomethyl ether | Mass (g) | 0.0 | 0.0 | 0.0 | 0.0 | 0.0 | 0.0 | 0.0 | 0.0 | 1.0 |
| | | | Content ratio (mass%) | 0.0 | 0.0 | 0.0 | 0.0 | 0.0 | 0.0 | 0.0 | 0.0 | 1.2 |
| | Lower alcohol (salvent) | Ethanol | Mass (g) | 69.2 | 69.2 | 69.2 | 69.2 | 69.2 | 69.2 | 69.2 | 69.2 | 69.2 |
| | | | Content ratio (mass%) | 76.9 | 76.9 | 76.9 | 76.9 | 76.9 | 76.9 | 76.9 | 76.9 | 76.9 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | *α*-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | B | B | B | B | B | B | B | B |
| | Sinterability | | | B | B | B | B | B | B | B | B | B |
| | Light transmittance (cuprous oxide) | | | C | C | C | C | C | C | C | C | C |

**(TABLE 41)**

| | Component | Substance name | Unit | Comparative Example 24 | Comparative Example 25 | Comparative Example 26 | Comparative Example 27 | Comparative Example 28 | Comparative Example 29 | Comparative Example 30 | Comparative Example 31 | Comparative Example 32 |
|---|---|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 10.3 | 77.4 | 77.4 | 77.4 | 77.4 | 77.4 | 77.4 | 77.4 | 77.4 |
| | | | Content ratio (mass%) | 11.5 | 86.0 | 86.0 | 86.0 | 86.0 | 86.0 | 86.0 | 86.0 | 86.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.4 | 0.0 | 0.0 | 0.0 | 0.0 | 0.0 | 0.0 | 0.0 | 0.0 |
| | | | Content ratio (mass%) | 0.5 | 0.0 | 0.0 | 0.0 | 0.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (q) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (a) | 0.0 | 1.8 | 0.0 | 0.0 | 0.0 | 1.8 | 0.0 | 0.0 | 0.0 |
| | | | Content ratio (mass%) | 0.0 | 2.0 | 0.0 | 0.0 | 0.0 | 2.0 | 0.0 | 0.0 | 0.0 |
| | | 3,5-Dihydroxybenzoic acid | Mass (g) | 0.0 | 0.0 | 1.8 | 0.0 | 0.0 | 0.0 | 1.8 | 0.0 | 0.0 |
| | | | Content ratio (mass%) | 0.0 | 0.0 | 2.0 | 0.0 | 0.0 | 0.0 | 2.0 | 0.0 | 0.0 |
| | | Glutaric acid | Mass (g) | 0.0 | 0.0 | 0.0 | 1.8 | 0.0 | 0.0 | 0.0 | 1.8 | 0.0 |
| | | | Content ratio (mass%) | 0.0 | 0.0 | 0.0 | 2.0 | 0.0 | 0.0 | 0.0 | 2.0 | 0.0 |
| | | Ethylenediamine | Mass (g) | 0.0 | 0.0 | 0.0 | 0.0 | 1.8 | 0.0 | 0.0 | 0.0 | 1.8 |
| | | | Content ratio (mass%) | 0.0 | 0.0 | 0.0 | 0.0 | 2.0 | 0.0 | 0.0 | 0.0 | 2.0 |
| | Phosphoric acid compound (additive) | Trimethyl phosphate Molecular weight: 140.08 | Mass (g) | 0.0 | 1.8 | 1.8 | 1.8 | 1.8 | 0.0 | 0.0 | 0.0 | 0.0 |
| | | | Content ratio (mass%) | 0.0 | 2.0 | 2.0 | 2.0 | 2.0 | 0.0 | 0.0 | 0.0 | 0.0 |
| | | Sodium dihydrogen phosphate Molecular weight 119.98 | Mass (g) | 0.0 | 0.0 | 0.0 | 0.0 | 0.0 | 1.8 | 1.8 | 1.8 | 1.8 |
| | | | Content ratio (mass%) | 0.0 | 0.0 | 0.0 | 0.0 | 0.0 | 2.0 | 2.0 | 2.0 | 2.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethylene glycol monobutyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (q) | 1.0 | 0.0 | 0.0 | 0.0 | 0.0 | 0.0 | 0.0 | 0.0 | 0.0 |
| | | | Content ratio (mass%) | 1.2 | 0.0 | 0.0 | 0.0 | 0.0 | 0.0 | 0.0 | 0.0 | 0.0 |
| | Lower alcohol (solvent) | Ethanol | Mass (g) | 69.2 | 0.0 | 0.0 | 0.0 | 0.0 | 0.0 | 0.0 | 0.0 | 0.0 |
| | | | Content ratio (mass%) | 76.9 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | B | C | C | C | C | C | C | C | C |
| | Sinterability | | | B | - | - | - | - | - | - | - | - |
| | Light transmittance (cuprous oxide) | | | C | - | - | - | - | - | - | - | - |

**(TABLE 42)**

| | Component | Substance name | Unit | Comparative Example 33 | Comparative Example 34 | Comparative Example 35 | Comparative Example 36 | Comparative Example 37 | Comparative Example 38 | Comparative Example 39 | Comparative Example 40 | Comparative Example 41 |
|---|---|---|---|---|---|---|---|---|---|---|---|---|
| Ink component/ composi tion | Metal particle | Copper | Mass (g) | 9.0 | 9.0 | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 | 10.0 | 10.0 |
| | Water (solvent) | Water | Mass (g) | 72.9 | 72.9 | 72.9 | 72.9 | 72.9 | 72.9 | 72.9 | 72.9 | 72.9 |
| | | | Content ratio (mass%) | 81.0 | 81.0 | 81.0 | 81.0 | 81.0 | 81.0 | 81.0 | 81.0 | 81.0 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Other than polyhydric alcohol | Salicylic acid | Mass (g) | 1.8 | 0.0 | 0.0 | 0.0 | 1.8 | 0.0 | 0.0 | 0.0 | 1.8 |
| | | | Content ratio (mass%) | 2.0 | 0.0 | 0.0 | 0.0 | 2.0 | 0.0 | 0.0 | 0.0 | 2.0 |
| | | 3,5-Dihydroxybenzoic acid | Mass (g) | 0.0 | 1.8 | 0.0 | 0.0 | 0.0 | 1.8 | 0.0 | 0.0 | 0.0 |
| | | | Content ratio (mass%) | 0.0 | 2.0 | 0.0 | 0.0 | 0.0 | 2.0 | 0.0 | 0.0 | 0.0 |
| | | Glutaric acid | Mass (g) | 0.0 | 0.0 | 1.8 | 0.0 | 0.0 | 0.0 | 1.8 | 0.0 | 0.0 |
| | | | Content ratio (mass%) | 0.0 | 0.0 | 2.0 | 0.0 | 0.0 | 0.0 | 2.0 | 0.0 | 0.0 |
| | | Ethylenediamine | Mass (g) | 0.0 | 0.0 | 0.0 | 1.8 | 0.0 | 0.0 | 0.0 | 1.8 | 0.0 |
| | | | Content ratio (mass%) | 0.0 | 0.0 | 0.0 | 2.0 | 0.0 | 0.0 | 0.0 | 2.0 | 0.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | 2-Pyrrolidone | Mass (g) | 4.5 | 4.5 | 4.5 | 4.5 | 0.0 | 0.0 | 0.0 | 0.0 | 0.0 |
| | | | Content ratio (mass%) | 5.0 | 5.0 | 5.0 | 5.0 | 0.0 | 0.0 | 0.0 | 0.0 | 0.0 |
| | | Triethylene glycol monomethyl ether | Mass (g) | 0.0 | 0.0 | 0.0 | 0.0 | 4.5 | 4.5 | 4.5 | 4.5 | 0.0 |
| | | | Content ratio (mass%) | 0.0 | 0.0 | 0.0 | 0.0 | 5.0 | 5.0 | 5.0 | 5.0 | 0.0 |
| | | Triethylene glycol monobutyl ether | Mass (g) | 0.0 | 0.0 | 0.0 | 0.0 | 0.0 | 0.0 | 0.0 | 0.0 | 4.5 |
| | | | Content ratio (mass%) | 0.0 | 0.0 | 0.0 | 0.0 | 0.0 | 0.0 | 0.0 | 0.0 | 5.0 |
| | | Polyethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Lower alcohol (solvent) | Ethanol | Mass (g) | 0.0 | 0.0 | 0.0 | 0.0 | 0.0 | 0.0 | 0.0 | 0.0 | 0.0 |
| | | | Content ratio mass%) | 0.0 | 0.0 | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation results | Dispersibility | | | C | C | C | C | C | C | C | C | C |
| | Sinterability | | | - | - | - | - | - | - | - | - | - |
| | Light transmittance (cuprous oxide) | | | - | - | - | - | - | - | - | - | - |

**(TABLE 43)**

| | Component | Substance name | Unit | Comparative Example 42 | Comparative Example 43 | Comparative Example 44 | Comparative Example 45 | Comparative Example 46 | Comparative Example 47 | Comparative Example 48 |
|---|---|---|---|---|---|---|---|---|---|---|
| Ink component/ composition | Metal particle | Copper | Mass (g) | 9.0 | 9.0 | 9.0 | 9.0 | 9.0 | 9.0 | 9.0 |
| | | | Content ratio (mass%) | 10.0 | 10.0 | 10.0 | 10.0 | 10.0 | 10.0 | 10.0 |
| | Water (solvent) | Water | Mass (g) | 72.9 | 72.9 | 72.9 | 72.9 | 72.9 | 72.9 | 72.9 |
| | | | Content ratio (mass%) | 81.0 | 81.0 | 81.0 | 81.0 | 81.0 | 81.0 | 81.0 |
| | Polyhydric alcohol | 2,5-Dimethyl-2,5-hexanediol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 2,2-Dimethyl-1,3-propanediol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 1,1,1-Tris(hydroxymethyl)propane | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 2-Hydroxymethyl-2-methyl-1,3-propanediol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | Other than polyhydric alcohol | Salicylic acid | Mass (g) | 0.0 | 0.0 | 0.0 | 1.8 | 0.0 | 0.0 | 0.0 |
| | | | Content ratio (mass%) | 0.0 | 0.0 | 0.0 | 2.0 | 0.0 | 0.0 | 0.0 |
| | | 3,5-Dihydroxybenzoic acid | Mass (g) | 1.8 | 0.0 | 0.0 | 0.0 | 1.8 | 0.0 | 0.0 |
| | | | Content ratio (mass%) | 2.0 | 0.0 | 0.0 | 0.0 | 2.0 | 0.0 | 0.0 |
| | | Glutaric acid | Mass (g) | 0.0 | 1.8 | 0.0 | 0.0 | 0.0 | 1.8 | 0.0 |
| | | | Content ratio (mass%) | 0.0 | 2.0 | 0.0 | 0.0 | 0.0 | 2.0 | 0.0 |
| | | Ethylenediamine | Mass (g) | 0.0 | 0.0 | 1.8 | 0.0 | 0.0 | 0.0 | 1.8 |
| | | | Content ratio (mass%) | 0.0 | 0.0 | 2.0 | 0.0 | 0.0 | 0.0 | 2.0 |
| | Phosphoric acid compound (additive) | Trimethyl phosphate Molecular weight: 140.08 | Mass (g) | 1.8 | 1.8 | 1.8 | 1.8 | 1.8 | 1.8 | 1.8 |
| | | | Content ratio (mass%) | 2.0 | 2.0 | 2.0 | 2.0 | 2.0 | 2.0 | 2.0 |
| | | Sodium dihydrogen phosphate Molecular weight 119.98 | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Triethyl phosphate Molecular weight: 182.15 | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | Organic solvent | 2-Pyrrolidone | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Triethylene glycol monomethyl ether | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Triethylene glycol monobutyl ether | Mass (g) | 4.5 | 4.5 | 4.5 | 0.0 | 0.0 | 0.0 | 0.0 |
| | | | Content ratio (mass%) | 5.0 | 5.0 | 5.0 | 0.0 | 0.0 | 0.0 | 0.0 |
| | | Polyethylene glycol monomethyl ether | Mass (g) | 0.0 | 0.0 | 0.0 | 4.5 | 4.5 | 4.5 | 4.5 |
| | | | Content ratio (mass%) | 0.0 | 0.0 | 0.0 | 5.0 | 5.0 | 5.0 | 5.0 |
| | Lower alcohol (solvent) | Ethanol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 1-Propanol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 2-Propanol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 1-Butanol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 2-Butanol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | Phosphate ester compound (dispersant) | Steareth-2-phosphate | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Oleth-4-phosphate | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | (C12 to C15) Pareth-6-phosphate | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | (C12 to C15) Pareth-10-phosphate | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Polyoxyethylene (18EO) alkyl (C13) ether phosphate ester | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Polyoxyethylene alkyl (C8) ether phosphate ester monoethanolamine salt | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Polyoxyethylene (C18 unsaturated) ether phosphate ester Na salt | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | CRODAFOS O3A | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | High boiling point solvent (solvent) | α-Terpineol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | 2-Ethyl-1,3-hexanediol | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| | | Dipropylene glycol monomethyl ether | Mass (g) | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 |
| Evaluation results | Dispersibility | | | C | C | C | C | C | C | C |
| | Sinterability | | | - | - | - | - | - | - | - |
| | Light transmittance (cuprous oxide) | | | - | - | - | - | - | - | - |

**(TABLE 44)**

| | Component | Substance name | Unit | Ink | | | | | | Example 1 | Example 2 | Example 3 |
|---|---|---|---|---|---|---|---|---|---|---|---|---|
| | | | | First metal ink A1 | First metal ink A2 | First metal irk A3 | Second metal ink B1 | Second metal ink B2 | Third metal ink | Cleaning liquid (First metal ink A1) | Cleaning liquid (First metal ink A1) | Cleaning liquid (First metal inkA1) |
| Ink component/ composition | Metal particle | Copper | Mass (g) | 9.0 | 9.0 | 9.0 | 9.0 | 9.0 | 9.0 | 4.5 | 2.7 | 0.5 |
| | | | Content ratio (mass%) | 10.0 | 10.0 | 10.0 | 10.0 | 10.0 | 10.0 | 5.0 | 3.0 | 0.5 |
| | Water (solvent) | Water | Mass (g) | 77.4 | 72.8 | 54.8 | 8.2 | 8.1 | 1.6 | 82.8 | 85.1 | 87.7 |
| | | | Content ratio (mass%) | 86.0 | 80.9 | 60.9 | 9.1 | 9.0 | 1.8 | 92.0 | 94.6 | 97.4 |
| | Polyhydric alcohol | 2,5-Dimethyl-2,5-hexanediol | Mass (g) | 1.8 | 0.0 | 0.0 | 0.0 | 0.0 | 0.0 | 0.9 | 0.4 | 0.1 |
| | | | Content ratio (mass%) | 2.0 | 0.0 | 0.0 | 0.0 | 0.0 | 0.0 | 1.0 | 0.4 | 0.1 |
| | | 2,2-Dimethyl-1,3-propanediol | Mass (g) | 0.0 | 1.8 | 1.8 | 0.2 | 0.2 | 0.02 | 0.0 | 0.0 | 0.0 |
| | | | Content ratio (mass%) | 0.0 | 2.0 | 2.0 | 0.2 | 0.2 | 0.02 | 0.0 | 0.0 | 0.0 |
| | Phosphoric acid compound (additive) | Trimethyl phosphate Molecular weight: 140.08 | Mass (g) | 1.8 | 0.0 | 0.0 | 0.2 | 0.2 | 0.02 | 1.8 | 1.8 | 1.8 |
| | | | Content ratio (mass%) | 2.0 | 0.0 | 0.0 | 0.2 | 0.2 | 0.02 | 2.0 | 2.0 | 2.0 |
| | | Triethyl phosphate Molecular weight: 182.15 | Mass (g) | 0.0 | 1.8 | 1.8 | 0.0 | 0.0 | 0.0 | 0.0 | 0.0 | 0.0 |
| | | | Content ratio (mass%) | 0.0 | 2.0 | 2.0 | 0.0 | 0.0 | 0.0 | 0.0 | 0.0 | 0.0 |
| | Organic solvent | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.0 | 4.5 | 4.5 | 0.5 | 0.5 | 0.05 | 0.0 | 0.0 | 0.0 |
| | | | Content ratio (mass%) | 0.0 | 5.0 | 5.0 | 0.5 | 0.5 | 0.05 | 0.0 | 0.0 | 0.0 |
| | Lower alcohol (solvent) | Ethanol | Mass (g) | 0.0 | 0.0 | 18.0 | 72.0 | 72.0 | 7.2 | 0.0 | 0.0 | 0.0 |
| | | | Content ratio (mass%) | 0.0 | 0.0 | 20.0 | 80.0 | 80.0 | 8.0 | 0.0 | 0.0 | 0.0 |
| | Phosphate ester compound (dispersant) | Oleth-4-phosphate HLB value: 8.6 | Mass (g) | 0.0 | 0.0 | 0.0 | 0.0 | 0.1 | 0.1 | 0.0 | 0.0 | 0.0 |
| | | | Content ratio (mass%) | 0.0 | 0.0 | 0.0 | 0.0 | 0.1 | 0.1 | 0.0 | 0.0 | 0.0 |
| | | (C12 to C15) Pareth-6-phosphate HLB value: 10.5 | Mass (g) | 0.0 | 0.0 | 0.1 | 0.0 | 0.0 | 0.0 | 0.0 | 0.0 | 0.0 |
| | | | Content ratio (mass%) | 0.0 | 0.0 | 0.1 | 0.0 | 0.0 | 0.0 | 0.0 | 0.0 | 0.0 |
| | | (C12 to C15) Pareth-10-phosphate HLB value: 13.3 | Mass (g) | 0.0 | 0.1 | 0.0 | 0.0 | 0.0 | 0.0 | 0.0 | 0.0 | 0.0 |
| | | | Content ratio (mass%) | 0.0 | 0.1 | 0.0 | 0.0 | 0.0 | 0.0 | 0.0 | 0.0 | 0.0 |
| | High boiling point solvent (solvent) | α -Terpineol | Mass (g) | 0.0 | 0.0 | 0.0 | 0.0 | 0.0 | 72.0 | 0.0 | 0.0 | 0.0 |
| | | | Content ratio (mass%) | 0.0 | 0.0 | 0.0 | 0.0 | 0.0 | 80.0 | 0.0 | 0.0 | 0.0 |
| Evaluation result | Cleanability | | | | | | | | | B | B | B |

**(TABLE 45)**

| | Component | Substance name | Unit | Example 4 | Example 5 | Example 6 | Example 7 | Example 8 | Example 9 | Example 10 | Example 11 | Example 12 |
|---|---|---|---|---|---|---|---|---|---|---|---|---|
| | | | | Cleaning liquid (First metal ink A2) | Cleaning liquid (First metal ink A2) | Cleaning liquid (First metal ink A2) | Cleaning liquid (First metal ink A3) | Cleaning liquid (First metal inkA3) | Cleaning liquid (First metal ink A3) | Cleaning liqui (Second metal ink B1) | Cleaning liquid (Second metal ink B1) | Cleaning liquid (Second metal ink B1) |
| Ink component/ composition | Metal particle | Copper | Mass (g) | 4.5 | 2.7 | 0.5 | 4.5 | 2.7 | 0.5 | 4.5 | 2.7 | 0.5 |
| | | | Content ratio (mass%) | 5.0 | 3.0 | 0.5 | 5.0 | 3.0 | 0.5 | 5.0 | 3.0 | 0.5 |
| | Water (solvent) | Water | Mass (g) | 78.2 | 80.6 | 83.1 | 56.8 | 55.1 | 56.7 | 7.7 | 5.4 | 6.7 |
| | | | Content ratio (mass%) | 86.9 | 89.5 | 92.3 | 63.1 | 61.2 | 63.0 | 8.5 | 6.0 | 7.5 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 0.9 | 0.4 | 0.1 | 0.9 | 0.4 | 0.1 | 0.2 | 0.2 | 0.2 |
| | | | Content ratio (mass%) | 1.0 | 0.4 | 0.1 | 1.0 | 0.40 | 0.10 | 0.2 | 0.2 | 0.2 |
| | Phosphoric acid compound (additive) | Trimethyl phosphate Molecular weight: 140.08 | Mass (g) | 0.0 | 0.0 | 0.0 | 0.2 | 0.2 | 0.2 | 0.2 | 0.2 | 0.2 |
| | | | Content ratio (mass%) | 0.0 | 0.0 | 0.0 | 0.2 | 0.2 | 0.2 | 0.2 | 0.2 | 0.2 |
| | | Triethyl phosphate Molecular weight: 182.15 | Mass (g) | 1.8 | 1.8 | 1.8 | 0.0 | 0.0 | 0.0 | 0.0 | 0.0 | 0.0 |
| | | | Content ratio (mass%) | 2.0 | 2.0 | 2.0 | 0.0 | 0.0 | 0.0 | 0.0 | 0.0 | 0.0 |
| | Organic solvent | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 4.5 | 4.5 | 4.5 | 4.5 | 4.5 | 4.5 | 0.5 | 0.5 | 0.5 |
| | | | Content ratio (mass%) | 5.0 | 5.0 | 5.0 | 5.0 | 5.0 | 5.0 | 0.5 | 0.5 | 0.5 |
| | Lower alcohol (solvent) | Ethanol | Mass (g) | 0.0 | 0.0 | 0.0 | 23.0 | 27.1 | 28.0 | 77.0 | 81.1 | 82.0 |
| | | | Content ratio (mass%) | 0.0 | 0.0 | 0.0 | 25.6 | 30.1 | 31.1 | 85.6 | 90.1 | 91.1 |
| | Phosphate ester compound (dispersant) | Oleth-4-phosphate HLB value: 8.6 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate HLB value: 10.5 | Mass (g) | 0.0 | 0.0 | 0.0 | 0.1 | 0.1 | 0.1 | 0.0 | 0.0 | 0.0 |
| | | | Content ratio (mass%) | 0.0 | 0.0 | 0.0 | 0.1 | 0.1 | 0.1 | 0.0 | 0.0 | 0.0 |
| | | (C12 to C15) Pareth-10-phosphate HLB value: 13.3 | Mass (g) | 0.1 | 0.1 | 0.1 | 0.0 | 0.0 | 0.0 | 0.0 | 0.0 | 0.0 |
| | | | Content ratio (mass%) | 0.1 | 0.1 | 0.1 | 0.0 | 0.0 | 0.0 | 0.0 | 0.0 | 0.0 |
| | High boiling point solvent (solvent) | α -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation result | Cleanability | | | B | B | B | B | B | B | B | B | B |

**(TABLE 46)**

| | Component | Substance name | Unit | Example 13 | Example 14 | Example 15 | Example 16 | Example 17 | Example 18 | Comparative | Comparative Example 2 | Comparative Example 3 |
|---|---|---|---|---|---|---|---|---|---|---|---|---|
| | | | | Cleaning liquid (Second metal ink B2) | Cleaning liquid (Second metal ink B2) | Cleaning liquid (Second metal ink B2) | Cleaning liquid (Third metal ink) | Cleaning liquid (Third metal ink) | Cleaning liquid (Third metal ink) | Cleaning liquid (First metal ink A1) | Cleaning liquid (First metal ink A1) | Cleaning liquid (First metal inkA2) |
| Ink component/ composition | Metal particle | Copper | Mass (g) | 4.5 | 2.7 | 0.5 | 4.5 | 2.7 | 0.5 | 0.0 | 0.0 | 0.0 |
| | | | Content ratio (mass%) | 5.0 | 3.0 | 0.5 | 5.0 | 3.0 | 0.5 | 0.0 | 0.0 | 0.0 |
| | Water (solvent) | Water | Mass (g) | 7.6 | 5.3 | 6.6 | 4.7 | 3.9 | 6.7 | 88.2 | 86.4 | 83.6 |
| | | | Content ratio (mass%) | 8.4 | 5.9 | 7.4 | 5.3 | 4.3 | 7.4 | 98.0 | 96.0 | 92.9 |
| | Polyhydric alcohol | 2,5-Dimethyl-2,5-hexanediol | Mass (g) | 0.0 | 0.0 | 0.0 | 0.0 | 0.0 | 0.0 | 1.8 | 1.8 | 0.0 |
| | | | Content ratio (mass%) | 0.0 | 0.0 | 0.0 | 0.0 | 0.0 | 0.0 | 2.0 | 2.0 | 0.0 |
| | | 2 2-Dimethyl-1,3-propanediol | Mass (g) | *0.2* | 0.2 | 0.2 | 0.02 | 0.02 | 0.02 | 0.0 | 0.0 | 1.8 |
| | | | Content ratio (mass%) | 0.2 | 0.2 | 0.2 | 0.02 | 0.02 | 0.02 | 0.0 | 0.0 | 2.0 |
| | Phosphoric acid compound (additive) | Trimethyl phosphate Molecular weight: 140.08 | Mass (g) | 0.2 | 0.2 | 0.2 | 0.02 | 0.02 | 0.02 | 0.0 | 1.8 | 0.0 |
| | | | Content ratio (mass%) | 0.2 | 0.2 | 0.2 | 0.02 | 0.02 | 0.02 | 0.0 | 2.0 | 0.0 |
| | | Triethyl phosphate Molecular weight: 182.15 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Organic solvent | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 0.5 | 0.5 | 0.5 | 0.05 | 0.05 | 0.05 | 0.0 | 0.0 | 4.5 |
| | | | Content ratio (mass%) | 0.5 | 0.5 | 0.5 | 0.05 | 0.05 | 0.05 | 0.0 | 0.0 | 5.0 |
| | Lower alcohol (solvent) | Ethanol | Mass (g) | 77.0 | 81.1 | 82.0 | 3.6 | 2.2 | 0.7 | 0.0 | 0.0 | 0.0 |
| | | | Content ratio (mass%) | 85.6 | 90.1 | 91.1 | 4.0 | 2.4 | 0.8 | 0.0 | 0.0 | 0.0 |
| | Phosphate ester compound (dispersant) | Oleth-4-phosphate HLB value: 8.6 | Mass (g) | 0.1 | 0.1 | 0.1 | 0.1 | 0.1 | 0.1 | 0.0 | 0.0 | 0.0 |
| | | | Content ratio (mass%) | 0.1 | 0.1 | 0.1 | 0.1 | 0.1 | 0.1 | 0.0 | 0.0 | 0.0 |
| | | (C12 to C15) Pareth-6-phosphate HLB value: 10.5 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate HLB value: 13.3 | Mass (g) | 0.0 | 0.0 | 0.0 | 0.0 | 0.0 | 0.0 | 0.0 | 0.0 | 0.1 |
| | | | Content ratio (mass%) | 0.0 | 0.0 | 0.0 | 0.0 | 0.0 | 0.0 | 0.0 | 0.0 | 0.1 |
| | High boiling point solvent (solvent) | α -Terpineol | Mass (g) | 0.0 | 0.0 | 0.0 | 77.0 | 81.1 | 82.0 | 0.0 | 0.0 | 0.0 |
| | | | Content ratio (mass%) | 0.0 | 0.0 | 0.0 | 85.6 | 90.1 | 91.1 | 0.0 | 0.0 | 0.0 |
| Evaluation result | Cleanability | | | B | B | B | B | B | B | C | C | C |

**(TABLE 47)**

| | Component | Substance name | Unit | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|
| | | | | Cleaning liquid (First metal ink A2) | Cleaning liquid (First metal ink A3) | Cleaning liquid (First metal ink A3) | Cleaning liquid (Second metal ink B1) | Cleaning liquid (Second metal ink B1) | Cleaning liquid (Second metal ink B1) | Cleaning liquid (Second metal ink B1) | Cleaning liquid (Second metal ink B2) | Cleaning liquid (Second metal ink B2) |
| Ink component/ composition | Metal particle | Copper | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | Water (solvent) | Water | Mass (g) | 81.8 | 65.6 | 63.8 | 7.4 | 7.5 | 7.4 | 7.5 | 7.3 | 7.4 |
| | | | Content ratio (mass%) | 90.9 | 72.9 | 70.9 | 8.2 | 8.3 | 8.3 | 8.3 | 8.1 | 8.2 |
| | Polyhydric alcohol | 2,5-Dimethyl-2,5-hexanediol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | 2,2-Dimethyl-1,3-propanediol | Mass (g) | 1.8 | 1.8 | 1.8 | 0.2 | 0.2 | 0.2 | 0.2 | 0.2 | 0.2 |
| | | | Content ratio (mass%) | 2.0 | 2.0 | 2.0 | 0.2 | 0.2 | 0.2 | 0.2 | 0.2 | 0.2 |
| | Phosphoric acid compound (additive) | Trimethyl phosphate Molecular weight: 140.08 | Mass (g) | 0.0 | 0.0 | 0.0 | 0.0 | 0.0 | 0.2 | 0.2 | 0.0 | 0.0 |
| | | | Content ratio (mass%) | 0.0 | 0.0 | 0.0 | 0.0 | 0.0 | 0.2 | 0.2 | 0.0 | 0.0 |
| | | Triethyl phosphate Molecular weight: 182.15 | Mass (g) | 1.8 | 0.0 | 1.8 | 0.0 | 0.0 | 0.0 | 0.0 | 0.0 | 0.0 |
| | | | Content ratio (mass%) | 2.0 | 0.0 | 2.0 | 0.0 | 0.0 | 0.0 | 0.0 | 0.0 | 0.0 |
| | Organic solvent | Triethylene glycol monomethyl ether | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | Polyethylene glycol monomethyl ether | Mass (g) | 4.5 | 4.5 | 4.5 | 0.0 | 0.5 | 0.0 | 0.5 | 0.0 | 0.5 |
| | | | Content ratio (mass%) | 5.0 | 5.0 | 5.0 | 0.0 | 0.5 | 0.0 | 0.5 | 0.0 | 0.5 |
| | Lower alcohol (solvent) | Ethanol | Mass (g) | 0.0 | 18.0 | 18.0 | 82.4 | 81.9 | 82.2 | 81.7 | 82.4 | 81.9 |
| | | | Content ratio (mass%) | 0.0 | 20.0 | 20.0 | 91.6 | 91.0 | 91.3 | 90.8 | 91.6 | 91.0 |
| | Phosphate ester compound (dispersant) | Oleth-4-phosphate HLB value: 8.6 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-6-phosphate HLB value: 10.5 | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| | | (C12 to C15) Pareth-10-phosphate HLB value: 13.3 | Mass (g) | 0.1 | 0.1 | 0.1 | 0.0 | 0.0 | 0.0 | 0.0 | 0.1 | 0.1 |
| | | | Content ratio (mass%) | 0.1 | 0.1 | 0.1 | 0.0 | 0.0 | 0.0 | 0.0 | 0.1 | 0.1 |
| | High boiling point solvent (solvent) | α -Terpineol | Mass (g) | 0.0 | 0.0 | 0.0 | 0.0 | 0.0 | 0.0 | 0.0 | 0.0 | 0.0 |
| | | | Content ratio (mass%) | 0.0 | 0.0 | 0.0 | 0.0 | 0.0 | 0.0 | 0.0 | 0.0 | 0.0 |
| Evaluation result | Cleanability | | | C | C | C | C | C | C | C | C | C |

**(TABLE 48)**

| | Component | Substance name | Unit | Comparative Example 13 | Comparative Example 14 | Comparative Example 15 | Comparative Example 16 | Comparative Example 17 | Comparative Example 18 |
|---|---|---|---|---|---|---|---|---|---|
| | | | | Cleaning liquid (Second metal ink B2) | Cleaning liquid (Second metal ink B2) | Cleaning liquid (Third metal ink) | Cleaning liquid (Third metal ink) | Cleaning liquid (Third metal ink) | Cleaning liquid (Third metal ink) |
| Ink component/ composition | Metal particle | Copper | Mass (g) | 0.0 | 0.0 | 0.0 | 0.0 | 0.0 | 0.0 |
| | | | Content ratio (mass%) | 0.0 | 0.0 | 0.0 | 0.0 | 0.0 | 0.0 |
| | Water (solvent) | Water | Mass (g) | 7.3 | 7.4 | 0.9 | 0.9 | 0.9 | 0.9 |
| | | | Content ratio (mass%) | 8.2 | 8.2 | 1.0 | 1.0 | 1.0 | 1.0 |
| | Polyhydric alcohol | 2,5-Dimethyl-2,5-hexanediol | Mass (g) | 0.0 | 0.0 | 0.0 | 0.0 | 0.0 | 0.0 |
| | | | Content ratio (mass%) | 0.0 | 0.0 | 0.0 | 0.0 | 0.0 | 0.0 |
| | | 2,2-Dimethyl-1,3-propanediol | Mass (g) | 0.2 | 0.2 | 0.02 | 0.02 | 0.02 | 0.02 |
| | | | Content ratio (mass%) | 0.2 | 0.2 | 0.02 | 0.02 | 0.02 | 0.02 |
| | Phosphoric acid compound (additive) | Trimethyl phosphate Molecular weight: 140.08 | Mass (g) | 0.2 | 0.2 | 0.00 | 0.02 | 0.00 | 0.02 |
| | | | Content ratio (mass%) | 0.2 | 0.2 | 0.00 | 0.02 | 0.00 | 0.02 |
| | | Triethyl phosphate Molecular weight: 182.15 | Mass (g) | 0.0 | 0.0 | 0.0 | 0.0 | 0.0 | 0.0 |
| | | | Content ratio (mass%) | 0.0 | 0.0 | 0.0 | 0.0 | 0.0 | 0.0 |
| | Organic solvent | Triethylene glycol monomethyl ether | Mass (g) | 0.0 | 0.0 | 0.0 | 0.0 | 0.0 | 0.0 |
| | | | Content ratio (mass%) | 0.0 | 0.0 | 0.0 | 0.0 | 0.0 | 0.0 |
| | | Polyethylene glycol monomethyl ether | Mass (g) | 0.0 | 0.5 | 0.00 | 0.00 | 0.05 | 0.05 |
| | | | Content ratio (mass%) | 0.0 | 0.5 | 0.00 | 0.00 | 0.05 | 0.05 |
| | Lower alcohol (solvent) | Ethanol | Mass (g) | 82.2 | 81.7 | 3.6 | 3.6 | 3.6 | 3.6 |
| | | | Content ratio (mass%) | 91.3 | 90.8 | 4.0 | 4.0 | 4.0 | 4.0 |
| | Phosphate ester compound (dispersant) | Oleth-4-phosphate HLB value: 8.6 | Mass (g) | 0.0 | 0.0 | 0.1 | 0.1 | 0.1 | 0.1 |
| | | | Content ratio (mass%) | 0.0 | 0.0 | 0.1 | 0.1 | 0.1 | 0.1 |
| | | (C12 to C15) Pareth-6-phosphate HLB value: 10.5 | Mass (g) | 0.0 | 0.0 | 0.0 | 0.0 | 0.0 | 0.0 |
| | | | Content ratio (mass%) | 0.0 | 0.0 | 0.0 | 0.0 | 0.0 | 0.0 |
| | | (C12 to C15) Pareth-10-phosphate HLB value: 13.3 | Mass (g) | 0.1 | 0.1 | 0.0 | 0.0 | 0.0 | 0.0 |
| | | | Content ratio (mass%) | 0.1 | 0.1 | 0.0 | 0.0 | 0.0 | 0.0 |
| | High boiling point solvent (solvent) | α-Terpineol | Mass (g) | 0.0 | 0.0 | 85.4 | 85.4 | 85.4 | 85.4 |
| | | | Content ratio (mass%) | 0.0 | 0.0 | 94.9 | 94.9 | 94.8 | 94.8 |
| Evaluation result | Cleanability | | | C | C | C | C | C | C |

### (First Experimental Example)

As a first experimental example, metal inks were produced and evaluated.

### (Example 1)

In Example 1, copper phthalate was prepared as copper carboxylate as a starting material. Copper phthalate was pu into ion-exchanged water at room temperature and stirred using a stirring blade to prepare an aqueous dispersion of copper phthalate with a concentration of 30% by mass. Then, an aqueous solution of ammonium phthalate was added as a pH adjuster to this aqueous solution of copper phthalate to adjust the pH of the above aqueous dispersion to 3. Subsequently, the pH-adjusted solution was set to 50°C, and under a nitrogen gas atmosphere, an aqueous solution of hydrazine monohydrate (2-fold dilution) with an oxidation-reduction potential of -0.5 V was added as a reducing agent in an amount 1.2 times the equivalent amount that can reduce copper ions to the pH-adjusted solution at once and mixed homogeneously using a stirring blade. Then, in order to synthesize the target copper particles (metal particles), the mixture of the aqueous dispersion and the reducing agent is heated to a holding temperature of 70°C under a nitrogen gas atmosphere and held at 70°C for 2 hours. Then, a water slurry of copper particles (copper powder concentration: 50% by mass) was obtained by dehydration and desalination using a centrifuge.

18 g of water slurry of the obtained copper particles (metal particles) (copper powder concentration: 50 mass%), 36 g of a 2,5-dimethyl-2,5-hexanediol aqueous solution (concentration: 5 mass%) as a polyhydric alcohol, 1.8 g of trimethyl phosphate (molecular weight: 140.08) as an additive, and 34.2 g of water were mixed to obtain 90 g of a copper ink (metal ink) having water as a solvent. The mass and content ratio of each component of the copper ink of Example 1 were as shown in Table 1. The copper ink in Example 1 is an example of the first metal ink 10A of the present embodiment.

### (Examples 2 to 337, Comparative Examples 1 to 48)

In Examples 2 to 337 and Comparative Examples 1 to 48, copper inks were produced in the same manner as in Example 1, except that the raw materials for metal inks and the added amounts thereof were changed to those shown in Table 1 and subsequent tables. Comparative Examples 1 to 24 do not contain an additive containing a phosphate compound. Also, Comparative Examples 25 to 48 do not contain a polyhydric alcohol (a polyhydric alcohol containing two or more OH groups and being soluble in water and a lower alcohol).

### (Evaluation method: Dispersibility)

The dispersibility of the metal inks obtained in Examples and Comparative Examples was evaluated. The obtained metal ink was sufficiently dispersed in an ultrasonic cleaner or the like. Then, 10 g of the metal ink was collected in a 20 ml glass sample container, and left in a refrigerator overnight. After standing overnight, the interface of sedimentation and separation of the metal particles in the metal ink was evaluated such that, when the height from the bottom of the sample container to the liquid surface of the metal ink was 100, 50 or higher was rated as "B", and less than 50 was rated as "C" in the height from the bottom of the container.

### (Evaluation method: Sinterability)

Further, copper inks (metal inks) having a dispersibility of "B" in Examples was each applied to a central portion on a polyimide film having a thickness of 100 µm and a size of 50 mm × 50 mm in a size of 10 mm × 10 mm by an inkjet device, and dried. Thereafter, the resulting film was heated at 200°C for 30 seconds in a nitrogen atmosphere to obtain a fired film of a metal ink having a thickness of about 1 to 3 µm. Sinterability was evaluated by observing the cross section of the obtained fired film with a SEM (Scanning electron microscope; manufactured by Hitachi High-Tech Co., Ltd., observation magnification 10,000 times). In the cross-sectional SEM image, the case where the ratio of voids in the film was 15% or less was defined as sinterability "A", the case where the ratio was more than 15% and 20% or less was defined as sinterability "B", the case where the ratio was more than 20% and 30% or less was defined as "B-", and the case where the ratio was more than 30% was defined as "C".

### (Evaluation method: Light transmittance)

Furthermore, the copper inks (metal inks) having a dispersibility of "B" in Examples were each applied to a central portion on soda glass having a thickness of 0.7 mm and a size of 50 mm × 50 mm in a size of 20 mm × 20 mm by an inkjet device, and dried. Thereafter, with a high-temperature observation microscope SMT Scope SK-8000 (manufactured by SANYOSEIKO CO., LTD.), the resulting glass was heated at 300°C for 30 seconds (temperature rising rate to the peak temperature: 1°C/sec), using a halogen lamp heater manufactured by Ushio Inc. (mainly radiates light of a spectral distribution having a wavelength in a visible to infrared region as a peak, more specifically, light of a spectral distribution having a wavelength of 1 µm as a peak), which is used in the above device, in the air atmosphere (oxygen concentration: about 20%), thereby obtaining a sintered body having a thickness of about 0.5 to 1 µm in which the copper particles were oxidized and sintered. The degree of transmission of the obtained sintered body to light in the visible to infrared region was evaluated. In the evaluation of the degree of transmission, the transmittance of the sintered body was measured for the sintered body by using an ultraviolet-visible near-infrared spectrophotometer (UH4150) manufactured by Hitachi High-Tech Science Corporation as a visible infrared spectrophotometer, with data mode set to transmittance measurement (%T), the start wavelength set to 1200 nm, the end wavelength set to 300 nm, the scan speed set to 600 nm/min, and the sampling interval set to 1.00 nm. At this time, a sintered body having an average transmittance of 50% or more at a wavelength of 600 nm to 1200 nm was defined as light transmittance "B", and a sample having a transmittance of less than 50% was defined as "C".

### (Evaluation results)

As the evaluation, dispersibility, sinterability, and light transmittance were evaluated. In Examples 1 to 337 containing a polyhydric alcohol and an additive containing a phosphate compound, dispersibility, sinterability and light transmittance were all evaluated as "B" or "A". Therefore, excellent sinterability was secured while suppressing aggregation of metal particles, and light transmittance was obtained in the sintered body obtained by heating in the air atmosphere, so that it can be seen that application to a tandem solar cell in which crystalline Si solar cells are combined as an application of a copper oxide sintered body (film) having excellent light transmittance is possible. On the other hand, in Comparative Examples 1 to 24 containing a polyhydric alcohol but not containing an additive composed of a phosphate compound, dispersibility and sinterability were "B", but light transmittance was "C". Also, in Comparative Examples 25 to 48 containing no polyhydric alcohol, it can be seen that aggregation of metal particles cannot be suppressed, and the metal particles settle. Since the metal particles in the ink aggregated, and settled and separated, the ink could not be applied by the inkjet device, and subsequently, sinterability and light transmittance could not be evaluated. Therefore, sinterability and light transmittance were evaluated as "-

Furthermore, for Examples 52 to 337 containing at least one of a lower alcohol, and an organic solvent or a high boiling point solvent having a boiling point at atmospheric pressure of 150°C or higher and being miscible with water, although not shown in the results in the table, as for the long-term preservability of the metal ink, when the antifungal property evaluation (mold resistance test: a test using a metal ink as a sample instead of a test piece, in which the sample is placed into the center of a culture medium cut out to a diameter of 30 mm) was performed according to the method of "6. Testing of paints" described in Japanese Industrial Standard (JIS Z 2911), growth of mycelia was not observed in the metal ink, and the metal ink exhibited good long-term preservability.

### (Second Experimental Example)

As a second experimental example, metal inks and cleaning liquids corresponding to each of the metal inks were produced and evaluated.

### (Examples 1 to 18, Comparative Examples 1 to 18)

In Examples 1 to 18 and Comparative Examples 1 to 18, the metal inks and the cleaning liquid used for the evaluation were prepared in the same manner as in the first experimental example. The mass and content ratio of each component in Examples 1 to 18 and Comparative Examples 1 to 18 were as shown in Tables 44 to 48.

### (Evaluation method: Cleanability)

The cleanability of a first metal ink A1 was evaluated using the cleaning liquids of Example 1 to 3 and Comparative Examples 1 and 2, the cleanability of a first metal ink A2 was evaluated using the cleaning liquids of Examples 4 to 6 and Comparative Examples 3 and 4, the cleanability of a first metal ink A3 was evaluated using the cleaning liquids of Examples 7 to 9 and Comparative Examples 5 and 6, the cleanability of a second metal ink B1 was evaluated using the cleaning liquids of Examples 10 to 12 and Comparative Examples 7 to 10, the cleanability of a second metal ink B2 was evaluated using the cleaning liquids of Examples 13 to 15 and Comparative Examples 11 to 14, and the cleanability of a third metal ink was evaluated using the cleaning liquids of Examples 16 to 18 and Comparative Examples 15 to 18.

The method for evaluating the cleanability of the cleaning liquids obtained in Examples and Comparative Examples was carried out in the following procedures. A metal ink weighed to 20 µl with a micropipette was added dropwise to a glass bottle (9 ml) containing 1 ml of a cleaning liquid weighed in advance with a micropipette. At that time, the dispersion state of the metal ink and a powder component in the metal ink immediately after the addition was visually confirmed. Immediately after the addition, the metal ink and the powder component in the metal ink in which no precipitation was observed were evaluated as "B: good", and those in which precipitation was observed was evaluated as "C: poor".

### (Evaluation results)

In Examples 1 to 18 containing metal particles, a solvent, a polyhydric alcohol, and a phosphate compound (additive), cleanability was evaluated as "B: good", whereas in Comparative Examples 1 to 18 not containing at least one of metal particles, a solvent, a polyhydric alcohol, and a phosphate compound (additive), cleanability was evaluated as "C: poor", and as a result, they were not suitable as cleaning liquids.

### Reference Signs List

- 10: METAL INK
- 12: METAL PARTICLES
- 14: POLYHYDRIC ALCOHOL
- 16: SOLVENT
- 17: ADDITIVE
- 18: ORGANIC SOLVENT

## Claims

1. A metal ink comprising:
metal particles;
a solvent;
a polyhydric alcohol containing two or more OH groups and being soluble in water and a lower alcohol; and
an additive containing a phosphate compound soluble in water.

2. The metal ink according to claim 1, further comprising an organic solvent having a boiling point at atmospheric pressure of 150°C or higher and being miscible with water.

3. The metal ink according to claim 1 or 2, wherein the additive is contained in a mass ratio of 0.01% or more and 10% or less with respect to a total amount of the metal ink.

4. The metal ink according to claim 1 or 2, wherein a molecular weight of the phosphate compound is 90 or more and 200 or less.

5. The metal ink according to claim 4, wherein the additive includes at least one of phosphoric acid, monosodium phosphate, disodium phosphate, trisodium phosphate, monopotassium phosphate, dipotassium phosphate, trimethyl phosphate, triethyl phosphate, diisopropyl phosphate, monoisopropyl phosphate, 2-aminoethyl dihydrogen phosphate, diisopropyl phosphite, and dimethyl phosphite.

6. The metal ink according to claim 1 or 2, wherein the polyhydric alcohol is contained in a mass ratio of 0.01% or more and 20% or less with respect to a total amount of the metal ink.

7. The metal ink according to claim 1 or 2, wherein the polyhydric alcohol has a melting point of 30°C or higher.

8. The metal ink according to claim 2, wherein the organic solvent is contained in a mass ratio of 0.01% or more and 30% or less with respect to a total amount of the metal ink.

9. The metal ink according to claim 2 or 8, wherein the organic solvent includes at least one of glycol ethers and aprotic polar solvents.

10. The metal ink according to claim 1 or 2, wherein the metal particles are contained in a mass ratio of 1% or more and 50% or less with respect to a total amount of the metal ink.

11. The metal ink according to claim 1 or 2, wherein the metal particles are copper.

12. The metal ink according to claim 1 or 2, wherein the solvent contains water.

13. The metal ink according to claim 12, further comprising, as a dispersant, a phosphate ester compound having a higher molecular weight than the phosphate compound contained in the additive.

14. The metal ink according to claim 12, wherein the solvent contains a lower alcohol.

15. The metal ink according to claim 14, wherein the solvent contains a high boiling point solvent containing one or more OH groups and having a boiling point of 150°C or higher, which is a liquid hardly soluble or insoluble in water.

16. The metal ink according to claim 1 or 2, wherein the metal particles are copper, the solvent contains water, the polyhydric alcohol contains at least one of polyhydric alcohols containing two or more OH groups and being soluble in water and a lower alcohol, and having a melting point of 30°C or higher, and the additive has a phosphate compound having a molecular weight of 90 or more and 200 or less.

17. A method for producing a metal ink comprising:
mixing metal particles, a solvent, a polyhydric alcohol containing two or more OH groups and being soluble in water and a lower alcohol, and an additive containing a phosphate compound soluble in water to produce a metal ink containing the metal particles, the solvent, the polyhydric alcohol, and the additive.

18. The method for producing a metal ink according to claim 17, comprising mixing the metal particles, water as the solvent, the polyhydric alcohol, and the additive to produce a first metal ink that is a metal ink containing the metal particles, water, the polyhydric alcohol, and the additive.

19. The method for producing a metal ink according to claim 18, comprising also mixing an organic solvent having a boiling point at atmospheric pressure of 150°C or higher and being miscible with water to produce the first metal ink also containing the organic solvent.

20. The method for producing a metal ink according to claim 18 or 19, comprising mixing the first metal ink and a lower alcohol as the solvent to produce a second metal ink that is a metal ink containing the metal particles, water, the lower alcohol, the polyhydric alcohol, and the additive.

21. The method for producing a metal ink according to claim 20, comprising mixing the second metal ink with a high boiling point solvent as the solvent, containing one or more OH groups and having a boiling point of 150°C or higher, which is a liquid hardly soluble or insoluble in water, to produce a third metal ink that is a metal ink containing the metal particles, water, the lower alcohol, the high boiling point solvent, the polyhydric alcohol, and the additive.

22. A method for producing a sintered body comprising:
heating the metal ink according to claim 1 or 2 to form a sintered body.

23. A sintered body prepared using the metal ink according to claim 1 or 2.

24. A cleaning liquid comprising:
metal particles;
a solvent;
a polyhydric alcohol containing two or more OH groups and being soluble in water and a lower alcohol; and
an additive containing a phosphate compound soluble in water.
